(19) 

Europäisches Patentamt
European Patent Office
Office européen des brevets

(11) **EP 4 475 248 A1**

(12) **EUROPEAN PATENT APPLICATION**
published in accordance with Art. 153(4) EPC

(43) Date of publication:
**11.12.2024 Bulletin 2024/50**

(21) Application number: **23882644.0**

(22) Date of filing: **24.10.2023**

(51) International Patent Classification (IPC):
*H01M 10/052* (2010.01)    *H01M 4/131* (2010.01)
*H01M 4/136* (2010.01)    *H01M 4/505* (2010.01)
*H01M 4/525* (2010.01)    *H01M 4/58* (2010.01)
*H01M 10/0525* (2010.01)    *H01M 10/0567* (2010.01)
*H01M 10/0568* (2010.01)    *H01M 10/0569* (2010.01)
*H01M 10/058* (2010.01)

(52) Cooperative Patent Classification (CPC):
**H01M 4/131; H01M 4/136; H01M 4/505;**
**H01M 4/525; H01M 4/58; H01M 10/052;**
**H01M 10/0525; H01M 10/0567; H01M 10/0568;**
**H01M 10/0569; H01M 10/058;** Y02E 60/10;
Y02P 70/50

(86) International application number:
**PCT/JP2023/038362**

(87) International publication number:
**WO 2024/090439 (02.05.2024 Gazette 2024/18)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **24.10.2022 JP 2022169942**
          **28.04.2023 JP 2023074613**

(71) Applicant: **Asahi Kasei Kabushiki Kaisha**
**Tokyo 1000006 (JP)**

(72) Inventors:
• **SAITO, Toshiharu**
  **Tokyo 100-0006 (JP)**
• **KAMINE, Hirokazu**
  **Tokyo 100-0006 (JP)**
• **YAMAMOTO, Kidai**
  **Tokyo 100-0006 (JP)**

(74) Representative: **dompatent von Kreisler Selting**
**Werner -**
**Partnerschaft von Patent- und Rechtsanwälten**
**mbB**
**Deichmannhaus am Dom**
**Bahnhofsvorplatz 1**
**50667 Köln (DE)**

(54) **NONAQUEOUS ELECTROLYTE SOLUTION AND NONAQUEOUS SECONDARY BATTERY**

(57) The present invention provides a nonaqueous electrolyte solution for a nonaqueous lithium ion secondary battery that is provided with a negative electrode containing graphite, while comprising a nonaqueous electrolyte solution in an amount of X mass% relative to the mass of the negative electrode excluding the negative electrode collector, wherein X is 50 to 2,000. This nonaqueous electrolyte solution contains a lithium salt and a nonaqueous solvent; acetonitrile is contained as the nonaqueous solvent in an amount of A volume% relative to the volume of the nonaqueous solvent, wherein A is 5 to 70; the nonaqueous electrolyte solution contains vinylene carbonate (VC) as an additive; and the content of VC is $(7 \times A/X)$ mass% to 10 mass% relative to the nonaqueous electrolyte solution.

Fig. 1

**Description**

FIELD

The present invention relates to a non-aqueous electrolyte solution and a non-aqueous secondary battery using the same.

BACKGROUND

The application of non-aqueous secondary batteries, such as lithium-ion batteries, are changing in the midst of a global trend of electrification of automobiles. Non-aqueous secondary batteries are characterized by light weight, high energy, and long service life, are widely used as a power source for various portable electronic devices, and in recent years, have attracted attention in the field of power storage, such as industrial power storage systems represented by power tools such as electric tools; and residential power storage systems. Particularly in on-board batteries, there has been ongoing research on electrolyte solutions using acetonitrile, which has low viscosity, to develop batteries having excellent output performance. To prevent the occurrence of reductive decomposition of easily reduced solvents in negative electrode, studies on additives forming a film on the negative electrode have been progressing.
For example, PTL 1 describes that decomposition of an electrolyte solution solvent in a negative electrode is prevented by adding additives such as vinylene carbonate to the electrolyte solution solvent.
PTL 2 discloses an invention relating to a non-aqueous electrolyte applied to a non-aqueous secondary battery such as a lithium-ion battery. PTL 1 discloses a non-aqueous electrolyte solution which additives having LUMO (lowest unoccupied molecular orbital) and HOMO (highest occupied molecular orbital) in a specific potential band are combined with acetonitrile (AcN).
PTL 3 describes an invention relating to a multistage solution injection step during lithium-ion battery manufacturing. PTL 3 examines the possibility of eliminating cell swelling due to gases during film formation by adding greater than 50% of an entirely of a negative electrode film-forming additive to an initial injection electrolyte solution and reinjecting the electrolyte solution after an initial charge-discharge.
PTL 4 describes an invention relating to a multistage solution injection step during lithium-ion battery manufacturing. PTL 4 examines the possibility of providing a lithium-ion secondary battery having improved cycle characteristics by reinjecting the electrolyte solution after an initial charge-discharge to form a satisfactory film on a new surface accompanying the expansion of a negative electrode active material.

[CITATION LIST]

[PATENT LITERATURE]

[PTL 1] Japanese Unexamined Patent Publication (Kokai) No. 2005-166553
[PTL 2] WO 2012/057311
[PTL 3] Japanese Unexamined Patent Publication (Kokai) No. 2006-294282
[PTL 4] Japanese Unexamined Patent Publication (Kokai) No. 2010-129192

SUMMARY

[TECHNICAL PROBLEM]

In an electrolyte solution mainly composed of a solvent such as acetonitrile that increases the resistance component of a battery by reduction, more detailed studies of additives are necessary to prevent such reductive decomposition.
Vinylene carbonate, a typical additive for forming a negative electrode film, is effective in preventing decomposition of acetonitrile on the negative electrode. However, if a sufficient amount of vinylene carbonate to form a film relative to the amount of negative electrode active material is not added, a high-quality negative electrode film cannot be formed during the initial charge of the battery. Further, the ratio of the amounts of negative electrode active material and electrolyte solution varies depending on the design of battery shape or battery capacity, and designing an electrolyte solution so that appropriate amounts of additives are added accordingly becomes important.
Such a problem is not observed in an electrolyte solution mainly composed of a carbonate, which is relatively less affected by reductive decomposition in the negative electrode, and is considered to occur only when the main component of an electrolyte solution is a solvent that easily undergoes reduction. However, the above PTL does not describe that the amount of an additive is changed according to battery design. Therefore, the first object to be achieved in the present invention is to provide an electrolyte solution that can stably drive a battery, even when a solvent that easily undergoes reductive decomposition, such as acetonitrile, is used as a main component of the electrolyte solution.

When manufacturing a lithium-ion secondary battery, the discharge capacity of the battery is not constant, and there are cases where the initial capacity in particular starts from a capacity smaller than expected in the design and gradually increases. Such a change in capacity is considered a phenomenon clearly different from the decrease in capacity observed during conventional battery deterioration, and is assumed to occur when the electrolyte solution does not easily diffuse within the electrode. When the capacity continues to increase while being unstable, a large number of charges and discharges until stabilization are required, increasing manufacturing time and thus decreasing manufacturing process efficiency.

Therefore, the second object to be achieved in the present invention is to rapidly stabilize battery capacity through promoting diffusion of lithium inside the electrode by using acetonitrile having low viscosity while preventing reduction of acetonitrile by forming a strong negative electrode film during the initial charge.

Acetonitrile-based electrolyte solutions require the formation of a film on the negative electrode surface to suppress reductive electrolysis, and film-forming agents such as vinylene carbonate (VC) and ethylene sulfite (ES) are used. As an effect of ES in an electrolyte solution, although there have been many patents regarding the film-forming ability thereof, there has been no discussion on compounds generated by excessive reduction of ES. Against such a background, the present inventors discovered that when acetonitrile is contained in an electrolyte solution, compounds comprising sulfur atoms having a valence of -2 or higher and 0 or lower are deposited in large amounts on the negative electrode film due to excessive reduction reaction of ES, and since these compounds have no ion-conducting properties, battery performance is decreased thereby.

In battery manufacturing processes in recent years, a method in which the initial charge-discharge is carried out under reduced pressure conditions for the purpose of discharging gas inside a cell and impregnating the cell with an electrolyte solution has been developed. However, when adapting such a method to a high-concentration acetonitrile electrolyte solution, the composition of the electrolyte solution changes significantly due to volatilization of acetonitrile, and the occurrence of poor quality due to insufficient electrolyte solution has been confirmed.

In order to solve such conventional problems, multistage solution injection is considered as a method of increasing concentration of a film-forming agent and, at the same time, decreasing concentration of acetonitrile in the electrolyte solution before the initial charge. However, no examples of adapting such a multistage solution injection step to an acetonitrile-based electrolyte solution have been reported.

Therefore, the third object to be achieved in the present invention is to provide a non-aqueous battery having the desired battery performance by enabling, in the manufacture of a non-aqueous battery comprising an acetonitrile electrolyte solution, an increase in the concentration of the negative electrode film-forming agent and a decrease in the concentration of acetonitrile in the initial electrolyte solution through multistage solution injection, thereby suppressing electrolyte solution volatilization under reduced pressure conditions, and suppressing the excessive reduction reaction of ethylene sulfite during the initial charge.

[SOLUTION TO PROBLEM]

The present inventors have carried out intensive studies in order to achieve the above objects, and have discovered that the objects can be achieved by the following technical means. Specifically, the present invention is as follows.

(1) A non-aqueous electrolyte solution for a non-aqueous lithium-ion secondary battery comprising a negative electrode comprising graphite and containing X% by mass of the non-aqueous electrolyte solution relative to a mass of the negative electrode excluding a negative electrode current collector, wherein

X is 50 or greater and 2000 or less,
the non-aqueous electrolyte solution comprises a lithium salt and a non-aqueous solvent,
the non-aqueous solvent comprises A% by volume of acetonitrile relative to a volume of the nonaqueous solvent, A is 5 or greater and 70 or less, and
the non-aqueous electrolyte solution comprises vinylene carbonate (VC) as an additive and has a VC content of $(7 \times A/X)$% by mass or greater and 10% by mass or less relative to the non-aqueous electrolyte solution.

(2) The non-aqueous electrolyte solution according to Item 1, wherein the X is 200 or less.
(3) The non-aqueous electrolyte solution according to Item 1 or 2, wherein the A is 16 or greater and 35 or less.
(4) The non-aqueous electrolyte solution according to any one of Items 1 to 3, wherein the VC content is $(15 \times A/X)$%

by mass or greater and 9% by mass or less relative to the non-aqueous electrolyte solution.

(5) The non-aqueous electrolyte solution according to any one of Items 1 to 4, wherein the X is 98 or less.

(6) The non-aqueous electrolyte solution according to any one of Items 1 to 5, comprising ethylene sulfite.

(7) The non-aqueous electrolyte solution according to any one of Items 1 to 6, comprising at least one of sulfate ions and sulfite ions.

(8) The non-aqueous electrolyte solution according to any one of Items 1 to 7, wherein the VC content is 7% by mass or less relative to the non-aqueous electrolyte solution.

(9) The non-aqueous electrolyte solution according to any one of Items 1 to 8, wherein the X is 65 is greater.

(10) A non-aqueous lithium-ion secondary battery comprising a positive electrode having a positive electrode active material layer on one side or both sides of a positive electrode current collector, the negative electrode having a negative electrode active material layer containing the graphite on one side or both sides of the negative electrode current collector, a separator, and the non-aqueous electrolyte solution according to any one of Items 1 to 9.

(11) A non-aqueous secondary battery comprising a negative electrode, a positive electrode, a separator, and a non-aqueous electrolyte solution, wherein

the non-aqueous secondary battery has been charged one or more times,

the negative electrode comprises one or more of each of an inorganic lithium compound and an organic lithium compound that are extractable by immersing the negative electrode in an extraction solvent, and

the non-aqueous electrolyte solution comprises a lithium salt, acetonitrile as a non-aqueous solvent, and a cyclic carbonate.

(12) The non-aqueous secondary battery according to Item 11, wherein

the non-aqueous secondary battery comprises a component that is extractable from the negative electrode by using water as the extraction solvent and comprises each of at least the following inorganic lithium compound (a):

(a) LiF;

and at least the following organic lithium compounds (b) to (d):

(b) $LiOCOOCH_2CH_2OCOOLi$;

(c) $CH_3CH_2OCOOLi$; and

(d) $CH_3OCOOLi$;

and

a molar ratio of each of the (a) to (d) relative to a total content of the (a) to (d) is 20 to 70 mol% for the (a), 20 to 70 mol% for the (b), 1 to 20 mol% for the (c), and 1 to 20 mol% for the (d).

(13) The non-aqueous secondary battery according to Item 11 or 12, wherein the cyclic carbonate comprises ethylene carbonate and vinylene carbonate, and a molar ratio of vinylene carbonate relative to ethylene carbonate is 0.01 to 30 mol%.

(14) The non-aqueous lithium-ion secondary battery according to Item 10 or the non-aqueous secondary battery according to any one of Items 11 to 13, comprising lithium iron phosphate in a positive electrode active material of the positive electrode.

(15) The non-aqueous secondary battery according to any one of Items 11 to 13, wherein the non-aqueous electrolyte solution according to any one of Items 1 to 9 is used.

(16) A secondary battery manufacturing process comprising an electrolyte solution injection step of injecting a non-aqueous electrolyte solution into a battery outer packaging at least twice, and comprising at least one charging step after an initial electrolyte solution injection step and before a final electrolyte solution injection step, where, in an electrolyte solution injection step after the initial electrolyte solution injection step, an electrolyte solution having a higher volume ratio of acetonitrile relative to an entirety of the electrolyte solution than an electrolyte solution used in the initial electrolyte solution injection step is injected into the battery outer packaging.

(17) The secondary battery manufacturing process according to Item 16, wherein an electrolyte solution containing 20% by volume or greater and 100% by volume or less of acetonitrile is injected into the battery outer packaging in an electrolyte solution injection step after the initial electrolyte solution injection step.

(18) A non-aqueous secondary battery comprising a non-aqueous electrolyte solution comprising 5% by volume or greater and 60% by volume or less of acetonitrile, and ethylene sulfite; a positive electrode having a positive electrode active material layer on one side or both sides of a positive electrode current collector; a negative electrode having a negative electrode active material layer on one side or both sides of a negative electrode current collector; and a separator,

wherein the non-aqueous secondary battery comprises a compound comprising a sulfur atom having a valence of -2 or higher and 0 or lower in a negative electrode film after an initial charge-discharge, and comprises at least one of sulfur and copper sulfate as the compound, and

wherein the non-aqueous secondary battery is obtainable by a method comprising at least one charging step after an initial electrolyte solution injection step and before a final electrolyte solution injection step, where, in an electrolyte solution injection step after the initial electrolyte solution injection step, an electrolyte solution having a higher volume ratio of acetonitrile relative to an entirety of the electrolyte solution than an electrolyte solution used in the initial electrolyte solution injection step is injected into a battery outer packaging.

(19) The non-aqueous secondary battery according to Item 18, wherein ethylene sulfite concentration in the non-aqueous electrolyte solution is 0.01% by volume or greater and 4% by volume or less.

(20) The non-aqueous secondary battery according to Item 18 or 19, wherein the non-aqueous electrolyte solution further comprises vinylene carbonate.

[ADVANTAGEOUS EFFECTS OF INVENTION]

According to the first embodiment of the present invention, a lithium-ion secondary battery having high charge-discharge efficiency and stable charge-discharge cycle characteristics, even when using an electrolyte solution containing acetonitrile, can be provided.

According to the second embodiment of the present invention, a secondary battery that rapidly stabilizes an initial battery capacity by containing low-viscosity acetonitrile while having a film suitable for preventing acetonitrile from reductive decomposition can be provided, and contributes to the efficiency of the manufacturing process.

According to the third embodiment of the present invention, a two-stage solution injection method is developed as a method for decreasing deposits on the negative electrode, whereby reduction reactions in negative electrode film defects unique to cells using high-concentration acetonitrile electrolyte solution can be suppressed, and a non-aqueous secondary battery having high stability obtained by controlling or decreasing a compound comprising a sulfur atom having a valence of -2 or higher and 0 or lower, which is generated on the negative electrode film by a reduction reaction of ethylene sulfite (ES), can be provided.

BRIEF DESCRIPTION OF DRAWINGS

FIG. 1 is a plan view schematically showing one example of a non-aqueous secondary battery of the present embodiment.

FIG. 2 is a cross-sectional view of FIG. 1 along the A-A line.

DESCRIPTION OF EMBODIMENTS

Hereinafter, aspects for embodying the present invention (hereinafter, simply referred to as "embodiments") will be described in detail. In addition, a numerical range described using "to" in the present specification includes the numerical values described before and after the term.

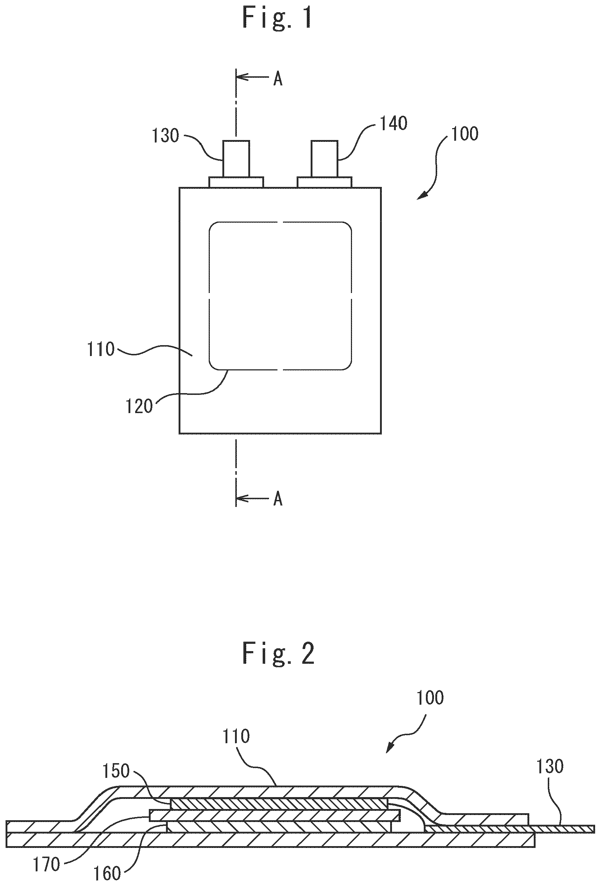

The non-aqueous secondary batteries according to the first, second, and third embodiments of the present invention are secondary batteries comprising a positive electrode, a negative electrode, and a non-aqueous electrolyte solution, for example, may be lithium-ion batteries, and more specifically, may be lithium-ion batteries as shown schematically in the plan view in FIG. 1 and in the cross-sectional view in FIG. 2. The lithium-ion battery 100 shown in FIGS. 1 and 2 comprises a separator 170; a positive electrode 150 and a negative electrode 160 interposing the separator 170 from both sides; further interposing a laminated body thereof (separator 170, positive electrode 150, and negative electrode 160), a positive electrode lead body 130 (connected to positive electrode 150) and a negative electrode lead body 140 (connected to negative electrode 160); and housing these components a battery outer packaging 110. A laminated body in which the positive electrode 150, the separator 170, and the negative electrode 160 are layered is impregnated with the non-aqueous electrolyte solution according to the first, second, and third embodiments.

<I. First embodiment>

The first embodiment of the present invention will be described in detail below. In the first embodiment, a non-aqueous electrolyte solution for a non-aqueous lithium-ion secondary battery and a non-aqueous lithium-ion battery comprising the same are provided. The non-aqueous lithium-ion secondary battery according to the first embodiment may comprise, but is not limited to, the configuration of the lithium-ion battery 100 shown in FIGS. 1 and 2.

<I-1. Non-aqueous electrolyte solution>

The "non-aqueous electrolyte solution" in the first embodiment refers to a non-aqueous electrolyte solution that is 1% by mass or less of water based on the total amount of the non-aqueous electrolyte solution and contains a non-aqueous solvent and a lithium salt. The non-aqueous electrolyte solution according to the first embodiment preferably contains as little water as possible. However, the electrolyte solution may contain a very small amount of water as long as achieving the objects of the present invention is not hindered. Such water content, as an amount per total amount of the non-aqueous electrolyte solution, is 300 mass ppm or less, and preferably 200 mass ppm or less. As long as the non-aqueous electrolyte solution has a configuration to achieve the objects of the present invention, constituent materials of known non-aqueous electrolyte solutions used in lithium-ion batteries can be appropriately selected and applied as additional components.

<I-1-1. Non-aqueous solvent>

The "non-aqueous solvent" in the first embodiment refers to an element except the lithium salt and various additives from the non-aqueous electrolyte solution. When the non-aqueous electrolyte solution in the first embodiment comprises an electrode-protecting additive, the "non-aqueous solvent" refers to an element except the lithium salt and additives other than the electrode-protecting additive from the non-aqueous electrolyte solution. Examples of non-aqueous solvents include alcohols such as methanol and ethanol; and aprotic solvents. Among these, an aprotic solvent is preferable as the non-aqueous solvent. The non-aqueous solvent may contain a solvent other than an aprotic solvent as long as achieving the objects of the present invention is not hindered.

The non-aqueous solvent according to the non-aqueous electrolyte solution of the first embodiment contains acetonitrile as an aprotic solvent. Since the ion-conducting properties of the non-aqueous electrolyte solution is improved by the non-aqueous solvent containing acetonitrile, diffusivity of lithium ions within the battery can be increased. Therefore, when the non-aqueous electrolyte solution contains acetonitrile, particularly even in a positive electrode in which the positive electrode active material layer is thickened to increase the filling amount of positive electrode active material, lithium ions can satisfactory diffuse into regions near the current collector that are difficult for lithium ions to reach during discharge at high load. Sufficient capacity can thereby be drawn out even during high-load discharge, and a non-aqueous secondary battery having excellent load characteristics can be obtained.

When the non-aqueous solvent contains acetonitrile, the rapid charging characteristics of the non-aqueous secondary battery can be enhanced. In constant current (CC)-constant voltage (CV) charging of a non-aqueous secondary battery, the capacity per unit time during CC charging period is larger than the charge capacity per unit time during CV charging period. When acetonitrile is used in the non-aqueous solvent of the non-aqueous electrolyte solution, in addition to increasing the region where CC charging can be carried out (lengthening CC charging time), since charging current can also be increased, the time from the start of charging to a fully charged state of the non-aqueous secondary battery can be significantly shortened.

Acetonitrile easily undergoes electrochemically reductive decomposition. Therefore, when acetonitrile is used, it is preferable that another solvent (for example, aprotic solvent other than acetonitrile) be used in combination with acetonitrile as the non-aqueous solvent and/or an electrode-protecting additive for forming a protective film on the electrode be added.

The content of acetonitrile in the non-aqueous solvent is preferably 5 to 70% by volume relative to the total amount of the non-aqueous solvent. The lower limit of the content of acetonitrile is more preferably 8% by volume or greater, and even more preferably 16% by volume or greater relative to the total amount of the non-aqueous solvent. The upper limit of the content of acetonitrile is more preferably 60% by volume or less, and even more preferably 35% by volume or less relative to the total amount of the non-aqueous solvent. When the content of acetonitrile is 5% by volume or greater relative to the total amount of the non-aqueous solvent, ionic conductivity of the non-aqueous electrolyte solution is increased, high-output characteristics of the non-aqueous secondary battery can likely be exhibited, and dissolution of the lithium salt can be promoted. When the content of acetonitrile in the non-aqueous solvent is within the above range, there is a tendency that high-temperature cycle characteristics and other battery characteristics of the non-aqueous secondary battery can be further improved while maintaining excellent performance of acetonitrile.

Examples of aprotic solvents other than acetonitrile include cyclic carbonates, fluoroethylene carbonates, lactones, organic compounds comprising a sulfur atom, chain fluorinated carbonates, cyclic ethers, mononitriles other than acetonitrile, alkoxy-substituted nitriles, dinitriles, cyclic nitriles, short chain fatty acid esters, chain ethers, fluorinated ethers, ketones, and compounds in which some or all of the H atoms of the aprotic solvent are substituted with halogen atoms.

Since acetonitrile, a component of the non-aqueous solvent, easily undergoes electrochemically reductive decomposition, by adding vinylene carbonate together with acetonitrile in the non-aqueous solvent of the non-aqueous electrolyte solution according to the first embodiment when used in a non-aqueous secondary battery, the charge-discharge amount of the battery is stabilized.

When the non-aqueous solvent according to the first embodiment comprises acetonitrile, vinylene carbonate (VC) as a cyclic carbonate, and ethylene sulfite as an organic compound comprising a sulfur atom, a non-aqueous secondary battery can be operated at high current density when a non-aqueous electrolyte solution is used in the battery.

A negative electrode protective film derived from vinylene carbonate has high resistance, and tends to lead to a decrease in performance during rapid charging and in low-temperature environment and battery swelling due to gas generation during decomposition. Ethylene sulfite has a lower lowest unoccupied molecular orbital (LUMO) level than other oxygen- and sulfur-containing compounds, can be reductively decomposed at a lower potential than vinylene carbonate to form a negative electrode protective film, and can decrease the addition amount of vinylene carbonate to solve the problem from a negative electrode protective film derived from vinylene carbonate. Further, a negative electrode protective film derived from ethylene sulfite has low resistance in a wide temperature range, and promotes the formation of a negative electrode SEI (solid electrolyte interface) that is highly durable against acetonitrile and decomposition products thereof, whereby a non-aqueous electrolyte solution and a non-aqueous secondary battery capable of operating stably at high current density can be provided.

The total content of vinylene carbonate and ethylene sulfite in the non-aqueous electrolyte solution of the first embodiment is preferably 0.1% by volume or greater and less than 15% by volume relative to the total amount of the non-aqueous solvent, from the viewpoint of suppressing an increase in internal resistance. The content of ethylene sulfite is preferably 0.1% by volume or greater and less than 6% by volume, and even more preferably 1% by volume or greater and less than 5% by volume relative to the total amount of the non-aqueous solvent.

Examples of cyclic carbonates can include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate (VC), 4,5-dimethylvinylene carbonate, and vinyl ethylene carbonate.

Examples of fluoroethylene carbonates can include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one.

Examples of lactones can include $\gamma$-butyrolactone, $\alpha$-methyl-$\gamma$-butyrolactone, $\gamma$-valerolactone, $\gamma$-caprolactone, $\delta$-valerolactone, $\delta$-caprolactone, and $\varepsilon$-caprolactone.

Examples of organic compounds comprising a sulfur atom can include ethylene sulfite, propylene sulfite, butylene sulfite, pentene sulfite, sulfolane, 3-sulfolane, 3-methylsulfolane, 1,3-propanesultone, 1,4-butanesultone, 1-propene 1,3-sultone, dimethylsulfoxide, tetramethylene sulfoxide, and ethylene glycol sulfite.

Examples of chain carbonates can include ethylene methyl carbonate, dimethyl carbonate, diethyl carbonate, methyl propyl carbonate, methyl isopropyl carbonate, dipropyl carbonate, methyl butyl carbonate, dibutyl carbonate, ethyl propyl carbonate, and diisobutyl carbonate.

Examples of cyclic ethers can include tetrahydrofuran, 2-methyl tetrahydrofuran, 1,4-dioxane, and 1,3-dioxane.

Examples of mononitriles other than acetonitrile can include propionitrile, butyronitrile, valeronitrile, benzonitrile, and acrylonitrile.

Examples of alkoxy-substituted nitriles can include methoxyacetonitrile and 3-methoxypropionitrile.

Examples of dinitriles include malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile.

Examples of cyclic nitriles can include benzonitrile.

Examples of short chain fatty acid esters can include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl isobutyrate, isopropyl butyrate, isopropyl isovalerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate, and tert-butyl caproate.

Examples of chain ethers can include dimethoxyethane, diethyl ether, 1,3-dioxolane, diglyme, triglyme, and tetraglyme.

Examples of fluorinated ethers can include $Rf^{20}$-$OR^{21}$ (wherein $Rf^{20}$ represents an alkyl group containing a fluorine atom, and $R^7$ represents a monovalent organic group optionally containing a fluorine atom).

Examples of ketones can include acetone, methyl ethyl ketone, and methyl isobutyl ketone.

Examples of compounds in which some or all of the H atoms of the aprotic solvent are substituted with halogen atoms can include compounds in which the halogen atoms are fluorine.

Examples of fluorides of chain carbonates include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate, and methyl 2,2,3,3-tetrafluoropropyl carbonate. The above fluorinated chain carbonate can be represented by the following general formula:

$$R^1\text{-}O\text{-}C(O)O\text{-}R^2$$

wherein $R^1$ and $R^2$ are at least one selected from the group consisting of $CH_3$, $CH_2CH_3$, $CH_2CH_2CH_3$, $CH(CH_3)_2$, and $CH_2Rf^3$; $Rf^3$ is an alkyl group having 1 to 3 carbon atoms in which hydrogen atoms are substituted with at least one fluorine atom; and $R^1$ and/or $R^2$ contains at least one fluorine atom.

Examples of fluorides of short chain fatty acid esters include fluorinated short chain fatty acid esters typified by 2,2-difluoroethyl acetate, 2,2,2-trifluoroethyl acetate, and 2,2,3,3-tetrafluoropropyl acetate. The fluorinated short chain fatty acid ester can be represented by the following general formula:

$$R^{10}\text{-}C(O)O\text{-}R^{11}$$

wherein $R^{10}$ is at least one selected from the group consisting of $CH_3$, $CH_2CH_3$, $CH_2CH_2CH_3$, $CH(CH_3)_2$, $CF_3CF_2H$, $CFH_2$, $CF_2Rf^{12}$, $CFHRf^{12}$, and $CH_2Rf^{13}$; $R^{11}$ is at least one selected from the group consisting of $CH_3$, $CH_2CH_3$, $CH_2CH_2CH_3$, $CH(CH_3)_2$, and $CH_2Rf^{13}$. $Rf^{12}$ is an alkyl group having 1 to 3 carbon atoms in which hydrogen atoms may be substituted with at least one fluorine atom; $Rf^{13}$ is an alkyl group having 1 to 3 carbon atoms in which hydrogen atoms are substituted with at least one fluorine atom; $R^{10}$ and/or $R^{11}$ contains at least one fluorine atom; and $R^{11}$ is not $CH_3$ when $R^{10}$ is $CF_2H$.

The aprotic solvent other than acetonitrile in the first embodiment can be used alone, or may be used in combination of two or more.

For the non-aqueous solvent in the first embodiment, it is preferable that one or more of a cyclic carbonate and a chain carbonate be used in combination with acetonitrile, from the viewpoint of improving stability of the non-aqueous electrolyte solution. From this point of view, for the non-aqueous electrolyte solvent in the first embodiment, it is more preferable that a cyclic carbonate be used in combination with acetonitrile, and it is even more preferable that both of a cyclic carbonate and a chain carbonate be used in combination with acetonitrile.

When a cyclic carbonate other than vinylene carbonate (VC) is used with acetonitrile, it is particularly preferable that the cyclic carbonate comprise ethylene carbonate and/or fluoroethylene carbonate.

<I-1-2. Electrolyte salt>

The non-aqueous electrolyte solution of the first embodiment is for use in lithium-ion secondary batteries, needs only to comprise a lithium salt as an electrolyte salt, and is not particularly limited regarding additional electrolyte salts. For example, in the first embodiment, $LiPF_6$ and a lithium-containing imide salt may be contained as the lithium salt.

The lithium-containing imide salt is a lithium salt represented by $LiN(SO_2CmF_{2m+1})_2$ (wherein m is an integer of 0 to 8), and specifically, at least one of $LiN(SO_2F)_2$ and $LiN(SO_2CF_3)_2$ is preferably included therein. Only one or both of these imide salts may be contained, or an imide salt other than these imide salts may be contained.

When acetonitrile is contained in the non-aqueous solvent, since the saturation concentration of the lithium-containing imide salt relative to acetonitrile is higher than the saturation concentration of $LiPF_6$, it is preferable that a lithium-containing imide salt be contained at a molar concentration where $LiPF_6 \leq$ lithium-containing imide salt, so that association and precipitation of the lithium salt and acetonitrile can be suppressed at low temperature. In addition, it is preferable that the content of the lithium-containing imide salt be 0.5 mol or more and 3 mol or less relative to 1 L of non-aqueous solvent, from the viewpoint of ion supply amount. According to the acetonitrile-containing non-aqueous electrolyte solution comprising at least one of $LiN(SO_2F)_2$ and $LiN(SO_2CF_3)_2$, a decrease in ionic conductivity in a low-temperature region such as -10°C or -30°C can be effectively suppressed, and excellent low-temperature characteristics can be obtained. By limiting the content as such, an increase in resistance during high-temperature heating can also be more effectively suppressed.

As the lithium salt, a fluorine-containing inorganic lithium salt other than $LiPF_6$ may further be contained. For example, a fluorine-containing inorganic lithium salt such as $LiBF_4$, $LiAsF_6$, $Li_2SiF_6$, $LiSbF_6$, $Li_2B_{12}F_bH_{12-b}$ (wherein b is an integer of 0 to 3) may be contained. The "inorganic lithium salt" in the first embodiment refers to a lithium salt comprising no carbon atom in the anion and soluble in acetonitrile. The "fluorine-containing inorganic lithium salt" in the first embodiment refers to a lithium salt comprising no carbon atom in the anion, comprising a fluorine atom in the anion, and soluble in acetonitrile. A fluorine-containing inorganic lithium salt is excellent in that the salt forms a passive film on the surface of the metal foil, which is the positive electrode current collector, and suppresses corrosion of the positive electrode current collector. The fluorine-containing inorganic lithium salt is used alone or in combination of two or more. As the fluorine-containing inorganic lithium salt, compounds that are double salts of LiF and a Lewis acid are desirable, and among these, fluorine-containing inorganic salts comprising a phosphorus atom are more preferably used since the release of free fluorine atoms is facilitated. A typical fluorine-containing inorganic lithium salt is $LiPF_6$, which releases a $PF_6$ anion when dissolved. A fluorine-containing inorganic lithium salt comprising a boron atom, when used as the fluorine-containing inorganic lithium salt, facilitates trapping of excess free acid components that may cause battery deterioration, and is thus preferable. From this viewpoint, $LiBF_4$ is particularly preferable.

The content of the fluorine-containing inorganic lithium salt in the non-aqueous electrolyte solution of the first embodiment is not particularly limited, but is preferably 0.01 mol or more, more preferably 0.02 mol or more, and even more preferably 0.03 mol or more relative to 1 L of non-aqueous solvent. When the content of the fluorine-containing inorganic lithium salt is within the above range of 0.01 mol or more, there is a tendency that ionic conductivity is increased and high-output characteristics can be exhibited. The content of the fluorine-containing inorganic lithium salt is preferably less than 1.5 mol, more preferably less than 0.5 mol, and even more preferably less than 0.1 mol relative to 1 L of non-aqueous solvent. When the content of the fluorine-containing inorganic lithium salt is within the above range of less than 1.5 mol, there is a tendency that ionic conductivity is increased, high-output characteristics can be exhibited, and a decrease in ionic conductivity due to an increase in viscosity at low temperatures can be suppressed, and there is a tendency that high-temperature cycle characteristics and other battery characteristics of the non-aqueous secondary battery can be further improved while maintaining excellent performance of the non-aqueous electrolyte solution.

The non-aqueous electrolyte solution of the first embodiment may further comprise an organic lithium salt. The "organic lithium salt" in the first embodiment refers to a lithium salt comprising a carbon atom in the anion and soluble in acetonitrile.

Examples of organic lithium salts can include organic lithium salts having an oxalate group. Specific examples of organic lithium salts having an oxalate group include organic lithium salts represented by each of $LiB(C_2O_4)_2$, $LiBF_2(C_2O_4)$, $LiPF_4(C_2O_4)$, and $LiPF_2(C_2O_4)_2$. Among these, at least one lithium salt selected from lithium salts represented by $LiB(C_2O_4)_2$ and $LiBF_2(C_2O_4)$ is preferable. It is more preferable that one or more of these lithium salts be used together with a fluorine-containing inorganic lithium salt. The organic lithium salt having an oxalate group may be contained in the negative electrode (negative electrode active material layer), in addition to being added to the non-aqueous electrolyte solution.

The addition amount of the organic lithium salt having an oxalate group to the non-aqueous electrolyte solution, from the viewpoint of ensuring a more favorable effect from the use thereof, as an amount per L of non-aqueous solvent of the non-aqueous electrolyte solution, is preferably 0.005 mol or more, more preferably 0.02 mol or more, and even more preferably 0.05 mol or more. However, there is a risk of precipitation when the amount of the above organic lithium salt having an oxalate group in the non-aqueous electrolyte solution is too large. Therefore, the addition amount of the above organic lithium salt having an oxalate group to the non-aqueous electrolyte solution, in an amount per L of non-aqueous solvent of the non-aqueous electrolyte solution, is preferably less than 1.0 mol, more preferably less than 0.5 mol, and even more preferably less than 0.2 mol.

It is known that organic lithium salts having an oxalate group are poorly soluble in low-polarity organic solvents, particularly chain carbonates. The organic lithium salt having an oxalate group may contain a trace amount of lithium oxalate, and when mixed as a non-aqueous electrolyte solution, may react with a trace amount of water contained in another raw material to newly generate a white precipitate of lithium oxalate. Therefore, the content of lithium oxalate in the non-aqueous electrolyte solution of the first embodiment, although not particularly limited, is preferably 0 to 500 ppm.

A lithium salt generally used for non-aqueous secondary batteries, in addition to those listed above, may be supplementally added as the lithium salt in the first embodiment. Specific examples of additional lithium salts include inorganic lithium salts not containing a fluorine atom in the anion, such as $LiClO_4$, $LiAlO_4$, $LiAlCl_4$, $LiB_{10}Cl_{10}$, and Li chloroborane; organic lithium salts such as $LiCF_3SO_3$, $LiCF_3CO_2$, $Li_2C_2F_4(SO_3)_2$, $LiC(CF_3SO_2)_3$, $LiC_nF_{(2n+1)}SO_3$ (wherein $n \geq 2$), lower aliphatic carboxylic acid Li, Li tetraphenylborate, and $LiB(C_3O_4H_2)_2$; organic lithium salts represented by $LiPF_n(C_pF_{2p+1})_{6-n}$, such as $LiPF_5(CF_3)$ (wherein $n$ is an integer of 1 to 5 and $p$ is an integer of 1 to 8); organic lithium salts represented by $LiBF_q(C_2F_{2s+1})_{4-q}$, such as $LiBF_3(CF_3)$ (wherein $q$ is an integer of 1 to 3 and $s$ is an integer of 1 to 8); lithium salts bonded to a polyvalent anion; and organic lithium salts represented by each of the following formula (sa):

$$LiC(SO_2R^A)(SO_2R^B)(SO_2R^C) \qquad (sa)$$

wherein $R^A$, $R^B$, and $R^C$ may be the same as or different from each other, and represent a perfluoroalkyl group having 1 to 8 carbon atoms, the following formula (sb):

$$LiN(SO_2OR^D)(SO_2OR^E) \qquad (sb)$$

wherein $R^D$ and $R^E$ may be the same as or different from each other, and represent a perfluoroalkyl group having 1 to 8 carbon atoms, and

$$LiN(SO_2R^F)(SO_2OR^G) \qquad \text{(sc)}$$

wherein $R^F$ and $R^G$ may be the same as or different from each other, and represent a perfluoroalkyl group having 1 to 8 carbon atoms. One or more of these lithium salts can be used together with the fluorine-containing inorganic lithium salt.

<I-1-3. Additive>

The non-aqueous electrolyte solution according to the first embodiment can comprise an additive other than the non-aqueous solvent and electrolyte salt described above.

<Vinylene carbonate>

The non-aqueous electrolyte solution of the first embodiment comprises vinylene carbonate (VC). Vinylene carbonate (VC) causes a reduction reaction on the negative electrode active material surface to form a film, and thus requires an addition amount corresponding to the mass of the negative electrode. When a non-aqueous electrolyte solution containing A% by volume of acetonitrile is contained in X% by mass relative to the mass of the negative electrode excluding the negative electrode current collector, the content of vinylene carbonate (VC) in the non-aqueous electrode solution is $7 \times$ A/X% by mass or greater. In this range, there is a tendency that film formation proceeds satisfactorily in the initial charge after inclusion of the non-aqueous electrolyte solution, and capacity efficiency at room temperature is improved. The VC content is preferably $10 \times$ A/X% by mass or greater, and more preferably $15 \times$ A/X% by mass or greater. In this range, capacity efficiency is improved over a long period of time even in high-temperature environment, charge capacity and discharge capacity are stabilized even in a non-aqueous electrolyte solution comprising acetonitrile. However, the addition of an excessive amount of vinylene carbonate (VC) may decrease the viscosity of the non-aqueous electrolyte solution, degrade the low-temperature characteristics thereof, and generate excessive gas. Thus, the addition amount of vinylene carbonate (VC) is preferably 10% by mass or less, more preferably 9% by mass or less, even more preferably 8% by mass or less, and particularly preferably 7% by mass or less relative to the mass of the non-aqueous electrolyte solution. From the viewpoint of reduction reaction on the negative electrode active material surface, formation of negative electrode SEI, suppression of decrease in viscosity and degradation of low-temperature characteristics of the non-aqueous electrolyte solution, and suppression of excessive gas generation, X is preferably 50 or greater and 2000 or less, and/or A is preferably 5 or greater and 70 or less.

By decreasing the content of the non-aqueous electrolyte solution in the non-aqueous lithium-ion secondary battery, the battery capacity per volume and weight of the battery can be optimized. From this viewpoint, X of the non-aqueous lithium-ion secondary battery containing X% by mass of the non-aqueous electrolyte solution of the first embodiment is more preferably 200 or less, and even more preferably 98 or less relative to the mass of the negative electrode excluding the negative electrode current collector. However, when the content of the non-aqueous electrolyte solution relative to the mass of the negative electrode excluding the negative electrode current collector is less than a certain value, impregnation into an electrode or separator may be insufficient. From this viewpoint, X of the non-aqueous lithium-ion secondary battery containing the non-aqueous electrolyte solution of the first embodiment is more preferably 55 or greater, even more preferably 60 or greater, and particularly preferably 65 or greater. Regarding A, when the content of acetonitrile relative to the non-aqueous solvent is expressed as A% by volume, containing acetonitrile in the non-aqueous electrolyte solution is expected to improve the output performance. From this viewpoint, A is more preferably 8 or greater, and even more preferably 16 or greater. When the content of acetonitrile is a certain value or less, there is a tendency that the properties of impregnation into an electrode or separator are further improved and thermal stability is also improved. From this viewpoint, A is more preferably 60 or less, and even more preferably 35 or less.

<Sulfate/Sulfite ion>

The non-aqueous electrolyte solution of the first embodiment preferably comprises one or both of sulfate ions and sulfite ions. It is considered that sulfate ions can prevent metal impurities from depositing on the negative electrode and damaging the SEI by binding to the metal impurities. The lower limit of the addition amount of sulfate ions is not particularly determined, but is preferably at a concentration of the metal impurities of the electrolyte solution material or higher. When metal elution from the electrode is taken into consideration, the lower limit is preferably 1 ppm or more, and more preferably 10 ppm or more relative to the mass of the non-aqueous electrolyte solution. The addition of an excessive amount may lead to a large amount of sulfate and sulfite to precipitate, damaging the SEI. Sulfate ions are reducible, and thus may react with vinylene carbonate (VC) on the negative electrode to become an inhibiting factor to film formation. Therefore, the content of sulfate ions is preferably $7 \times A/X\%$ by mass or less or less than $7 \times A/X\%$ by mass relative to the mass of the non-aqueous electrolyte solution, and is preferably 10% by mass or less, more preferably 8% by mass or less, and particularly preferably 5% by mass or less relative to the mass of vinylene carbonate (VC). Further, the non-aqueous electrolyte solution of the first embodiment may comprise sulfite ions, which are expected to bind with metal elution components and prevent damage to the SEI. The addition amount of sulfite ions is preferably 10% by mass or less, more preferably 8% by mass or less, and particularly preferably 5% by mass or less relative to the mass of vinylene carbonate (VC) in the non-aqueous electrolyte solution.

The total content of sulfate ions and sulfite ions in the non-aqueous electrolyte solution, from the same viewpoint as described above, is 1 ppm or more and $7 \times A/X\%$ by mass or less relative to the mass of the non-aqueous electrolyte solution, and is preferably 10% by mass or less of the content of VC in the non-aqueous electrolyte solution.

The method of adding each ion to the non-aqueous electrolyte solution is not particularly limited, and needs only to be contained in the non-aqueous electrolyte solution by decomposing an organic compound in the non-aqueous electrolyte solution or adding a sulfate or sulfite. When adding an inorganic salt, for example, lithium sulfate or lithium sulfite is preferable since the addition thereof does not add metal impurities to the composition of the lithium-ion secondary battery non-aqueous electrolyte solution.

<Additional electrode-protecting additive>

An additional electrode-protecting additive is not particularly limited as long as achieving the object of the present invention is not hindered, and may substantially overlap with the substances acting as solvents for dissolving lithium salts (i.e., non-aqueous solvents described above) (however, acetonitrile, vinylene carbonate, and ethylene sulfite as an organic compound comprising a sulfur atom described above are excluded). The electrode-protecting additive is preferably a substance that contributes to performance improvement of the non-aqueous electrolyte solution and non-aqueous secondary battery of the first embodiment, but also encompasses substances not directly involved in the electrochemical reaction.

Specific examples of additional electrode-protecting additives include fluoroethylene carbonates typified by 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one; unsaturated bond-containing cyclic carbonates such as 4,5-dimethylvinylene carbonate and vinyl ethylene carbonate; lactones typified by γ-butyrolactone, γ-valerolactone, γ-caprolactone, δ-valerolactone, δ-caprolactone, and ε-caprolactone; cyclic ethers typified by 1,4-dioxane; cyclic sulfur compounds typified by propylene sulfite, butylene sulfite, pentene sulfite, sulfolane, 3-sulfolane, 3-methylsulfolane, 1,3-propanesultone, 1,4-butanesultone, 1-propene 1,3-sultone, and tetramethylene sulfoxide; chain acid anhydrides typified by acetic anhydride, propionic anhydride, and benzoic anhydride; cyclic acid anhydrides such as malonic anhydride, succinic anhydride, glutaric anhydride, maleic anhydride, phthalic anhydride, 1,2-cyclohexanedicarboxylic anhydride, 2,3-naphthalene dicarboxylic anhydride, and naphthalene-1,4,5,8-tetracarboxylic dianhydride; and mixed acid anhydrides having a structure in which two different carboxylic acids or different acids such as a carboxylic acid and a sulfonic acid are condensed by dehydration. These additives are used alone or in combination of two or more.

The content of the electrode-protecting additive in the non-aqueous electrolyte solution of the first embodiment is not particularly limited, but is preferably 0.1 to 30% by volume, more preferably 0.3 to 15% by volume, and even more preferably 0.5 to 4% by volume as the content of the electrolyte-protecting additive relative to the entire amount of the non-aqueous solvent.

In the first embodiment, the larger the content of the electrode-protecting additive, the more the deterioration of the non-aqueous electrolyte solution is suppressed. However, the smaller the content of the electrode-protecting additive, the more the high-output characteristics of the non-aqueous secondary battery in low-temperature environment are improved. Therefore, by adjusting the content of the electrode-protecting additive within the above range, there is a tendency that excellent performance based on high ionic conductivity of the non-aqueous electrolyte solution can be maximized without impairing the basic function of the non-aqueous secondary battery. By preparing the non-aqueous electrolyte solution with such a composition, there is a tendency that the cycle performance, high-output performance in low-temperature environment, and other battery characteristics of the non-aqueous secondary battery can all be further improved.

<Additionally optional additive>

In the first embodiment, for the purpose of improvement of charge-discharge cycle characteristics, high-temperature storage properties, and improvement of safety (for example, overcharge prevention) of the non-aqueous secondary battery, the non-aqueous electrolyte solution, for example, can appropriately contain an optional additive selected from sulfonic acid esters, diphenyl disulfide, cyclohexylbenzene, biphenyl, fluorobenzene, tert-butylbenzene, phosphoric acid esters (such as ethyl diethyl phosphonoacetate (EDPA): $(C_2H_5O)_2(P=O)$-$CH_2(C=O)OC_2H_5$, tris(trifluor-oethyl)phosphate (TFEP): $(CF_3CH_2O)_3P=O$, triphenyl phosphate (TPP): $(C_6H_5O)_3P=O$: $(CH_2=CHCH_2O)_3P=O$, and triallyl phosphate), nitrogen-containing cyclic compounds with no steric hindrance around the lone pair of electrons (such as pyridine, 1-methyl-1H-benzotriazole, and 1-methylpyrazole), and derivatives of these compounds. Particularly, phosphoric acid esters are effective in suppressing side reactions during storage.

The content of the additionally optional additive in the first embodiment is calculated as a mass percentage relative to the total mass of all components constituting the non-aqueous electrolyte solution. The content of the additionally optional additive is not particularly limited, but is preferably in the range of 0.01% by mass or greater and 10% by mass or less, more preferably 0.02% by mass or greater and 5% by mass or less, and even more preferably 0.05% by mass or greater and 3% by mass or less relative to the total amount of the non-aqueous electrolyte solution. By adjusting the content of the additionally optional additive within the above range, there is a tendency that even more favorable battery characteristics can be applied without impairing the basic function as a non-aqueous secondary battery.

<I-2. Positive electrode and positive electrode current collector>

The positive electrode 150 shown in FIGS. 1 and 2 is composed of a positive electrode active material layer, prepared from a positive electrode mixture, and a positive electrode current collector. The positive electrode 150 needs only to act as a positive electrode of a non-aqueous secondary battery and is not particularly limited, and may be any known positive electrode. The positive electrode in the first embodiment preferably contains a lithium-containing compound comprising Fe, and more preferably also contains nickel (Ni) in a relatively high ratio.

It is preferable that the positive electrode active material layer be arranged on one side or both sides of the positive electrode current collector, contain a positive electrode active material, and further contain a conductive aid and a binder as needed.

The positive electrode active material layer preferably contains a material capable of occluding and releasing lithium ions as a positive electrode active material. It is preferable that such a material be used since there is a tendency that high voltage and high energy density can be obtained.

The positive electrode active material contained in the positive electrode active material layer is suitably a metal phosphate compound comprising lithium and a transition metal element represented by the following general formula (1):

$$Li_WMPO_4 \cdots\cdots \qquad (1)$$

wherein M represents one or more transition metal elements; and the value of w is determined by the charge and discharge states of the battery and is a number of 0 to 1.2, preferably a number of 0.05 to 1.10, and/or

at least one lithium (Li)-containing metal oxide selected from Li-containing metal oxides containing at least one transition metal element selected from the group consisting of, for example, Ni, Mn, and Co, represented by the following general formula (2):

$$Li_pNi_qCo_rMn_sM_tO_u \cdots\cdots \qquad (2)$$

wherein M is at least one metal selected from the group consisting of aluminum (Al), tin (Sn), indium (In), iron (Fe), vanadium (V), copper (Cu), magnesium (Mg), titanium (Ti), zinc (Zn), molybdenum (Mo), zirconium (Zr), strontium (Sr), and barium (Ba); $0 < p < 1.3$; $0 < q < 1.2$; $0 < r < 1.2$; $0 \leq s < 0.5$; $0 \leq t < 0.3$; $0.7 \leq q + r + s + t \leq 1.2$; $1.8 < u < 2.2$; and p is a value determined by the charge and discharge states of the battery.

Specific examples of the positive electrode active material include Li compounds such as $Li_WFePO_4$, and lithium cobalt oxides typified by $LiCoO_2$; lithium manganese oxides typified by $LiMnO_2$, $LiMn_2O_4$, and $Li_2Mn_2O_4$; lithium nickel oxides typified by $LiNiO_2$; and lithium-containing composite metal oxides represented by $Li_zMO_2$ (wherein M includes at least one transition metal element selected from the group consisting of Ni, Mn, and Co and represents two or more metal elements selected from the group consisting of Ni, Mn, Co, Al, and Mg, and z represents a number greater than 0.9 and less than 1.2) typified by $LiNi_{1/3}Co_{1/3}Mn_{1/3}O_2$, $LiNi_{0.5}Co_{0.2}Mn_{0.3}O_2$, and $LiNi_{0.8}Co_{0.2}O_2$.

Particularly, it is preferable that the Ni content ratio q of the Li-containing metal oxide represented by the general formula (2) be $0.5 < q < 1.2$, since a decrease in use amount of the rare metal Co and a high energy density are both achieved. Examples of such positive electrode active materials include lithium-containing composite metal oxides typified by $LiNi_{0.6}Co_{0.2}Mn_{0.2}O_2$, $LiNi_{0.75}Co_{0.15}Mn_{0.15}O_2$, $LiNi_{0.8}Co_{0.1}Mn_{0.1}O_2$, $LiNi_{0.85}Co_{0.075}Mn_{0.075}O_2$, $LiNi_{0.8}Co_{0.15}Al_{0.05}O_2$, $LiNi_{0.81}Co_{0.1}Al_{0.09}O_2$, and $LiNi_{0.85}Co_{0.1}Al_{0.05}O_2$.

The higher the Ni content ratio in the positive electrode active material layer, the more the deterioration tends to proceed at low voltage. Active sites that oxidize and deteriorate the non-aqueous electrolyte solution are intrinsic in the positive electrode active material of the Li-containing metal oxide represented by the general formula (2), and these active sites may unintentionally consume the compounds added to protect the negative electrode on the positive electrode side. Among such compounds, acid anhydrides tend to be easily affected. Particularly, the effect of adding an acid anhydride is enormous when acetonitrile is contained as the non-aqueous solvent, and thus the consumption of the acid anhydride on the positive electrode side is a fatal problem.

The decomposition products of these additives that are incorporated and deposited on the positive electrode side not only increase the internal resistance of the non-aqueous secondary battery, but also accelerate the deterioration of the lithium salt. The protection of the negative electrode surface, which was the original purpose, is also insufficient. In order to deactivate the active sites that inherently cause the non-aqueous electrolyte solution to oxidize and deteriorate, controlling the Jahn-teller distortions or coexisting with a component acting as a neutralizer is important. Therefore, it is preferable that the positive electrode active material contain at least one metal selected from the group consisting of Al, Sn, In, Fe, V, Cu, Mg, Ti, Zn, Mo, Zr, Sr, and Ba.

For the same reason, the surface of the positive electrode active material is preferably coated with a compound containing at least one metal element selected from the group consisting of Zr, Ti, Al, and Nb. Further, the surface of the positive electrode active material is more preferably coated with an oxide containing at least one metal element selected from the group consisting of Zr, Ti, Al, and Nb. Furthermore, the surface of the positive electrode active material is particularly preferably coated with at least one oxide selected from the group consisting of $ZrO_2$, $TiO_2$, $Al_2O_3$, $NbO_3$, and $LiNbO_2$, since the permeation of lithium ions is not inhibited.

The positive electrode active material may be a lithium-containing compound other than the Li-containing metal oxide represented by the formula (1) or (2), and is not particularly limited as long as lithium is contained. Examples of such lithium-containing compounds include composite oxides comprising lithium and a transition metal element, metal chalcogenides comprising lithium, and metal silicate compounds comprising lithium and a transition metal element. From the viewpoint of obtaining a higher voltage, the lithium-containing compound is preferably a metal phosphate compound comprising, in particular, lithium and at least one transition metal element selected from the group consisting of Co, Ni, Mn, Fe, Cu, Zn, Cr, V, and Ti.

More specific examples of lithium-containing compounds include compounds represented by each the following formula (Xa):

$$Li_v M^I D_2 \cdots \quad (Xa)$$

wherein D represents a chalcogen element; $M^I$ represents one or more transition metal elements; and the value of v is determined by the charge and discharge states of the battery and is a number of 0.05 to 1.10, and the following formula (Xb):

$$Li_t M^{II}_u SiO_4 \cdots \quad (Xb)$$

wherein $M^{II}$ represents one or more transition metal elements; the value of t is determined by the charge and discharge states of the battery and is a number of 0.05 to 1.10; and u represents a number of 0 to 2.

The lithium-containing compounds represented by the above formula (Xa) have a layered structure, and the compounds represented by the formula (1) and the above formula (Xb) have an olivine structure. These lithium-containing compounds may be compounds in which a portion of the transition metal element is substituted with Al, Mg, or another transition metal element, compounds in which such a metal element is contained in the crystal grain boundaries, compounds in which a portion of oxygen atoms is substituted with fluorine atoms, or compounds in which at least a portion of the positive electrode active material surface is coated with another positive electrode active material, for the purpose of stabilizing the structure.

As the positive electrode active material in the first embodiment, a lithium-containing compound as described above only may be used, or the lithium-containing compound may be used in combination with an additional positive electrode active material.

Examples of such additional positive electrode active materials include metal oxides and metal chalcogenides having a tunnel structure and a layered structure; sulfur; and conductive polymers. Examples of metal oxides and metal chalcogenides having a tunnel structure and a layered structure include oxides, sulfides, and selenides of metals other than lithium, such as $MnO_2$, $FeO_2$, $FeS_2$, $V_2O_5$, $V_6O_{13}$, $TiO_2$, $TiS_2$, $MoS_2$, and $NbSe_2$. Examples of conductive polymers include conductive polymers typified by polyaniline, polythiophene, polyacetylene, and polypyrrole.

The additional positive electrode active material described above is used alone or in combination of two or more, and is not particularly limited. However, it is preferable that the positive electrode active material layer contain at least one transition metal element selected from Ni, Mn, and Co, since lithium ions can be reversibly and stably occluded and released and high energy density can be achieved.

When the lithium-containing compound and the additional positive electrode active material are used in combination as the positive electrode active material, the use ratio of the two components, as a use ratio of the lithium-containing compound relative to the entirety of the positive electrode active material, is preferably 80% by mass or greater, and more preferably 85% by mass or greater.

Examples of conductive aid include graphite; carbon black typified by acetylene black and Ketjen black; and carbon fiber. The content ratio of the conductive aid is preferably 10 parts by mass or less, and more preferably 1 to 5 parts by mass relative to 100 parts by mass of the positive electrode active material.

Examples of binders include polyvinylidene fluoride (PVDF), polytetrafluoroethylene (PTFE), polyacrylic acid, styrene-butadiene rubber, and fluororubber. The content ratio of the binder is preferably 10 parts by mass or less, and more preferably 0.5 to 8 parts by mass relative to 100 parts by mass of the positive electrode active material.

The positive electrode active material layer is formed by applying a positive electrode mixture-containing slurry in which a positive electrode mixture comprising a positive electrode active material, mixed with a conductive aid and a binder as needed, is dispersed in a solvent to a positive electrode current collector and drying (removing solvent), and pressing as needed. Such a solvent is not particularly limited, and any conventionally known solvent can be used. Examples include N-methyl-2-pyrrolidone, dimethylformamide, dimethylacetoamide, and water.

The positive electrode current collector, for example, is composed of a metal foil such as an aluminum foil, a nickel foil, or a stainless-steel foil. The positive electrode current collector may be subjected to carbon coating on the surface, or may be processed into a mesh form. The thickness of the positive electrode current collector is preferably 5 to 40 $\mu$m, more preferably 7 to 35 $\mu$m, and even more preferably 9 to 30 $\mu$m.

<I-3. Negative electrode and negative electrode current collector>

The negative electrode 160 shown in FIGS. 1 and 2 is composed of a negative electrode active material, a conductive aid and a binder, as needed, and a negative electrode current collector. The negative electrode 160 can act as a negative electrode of a non-aqueous secondary battery.

The negative electrode active material layer is arranged on one side or both sides of the negative electrode current collector, contains a negative electrode active material, and preferably contains a conductive aid and a binder, as needed. The non-aqueous lithium-ion secondary battery according to the first embodiment, as described above, preferably has a structure capable of containing X% by mass of the non-aqueous electrolyte solution relative to the mass of the negative electrode excluding the negative electrode current collector.

Examples of negative electrode active materials include, in addition to carbon materials typified by amorphous carbon (hard carbon), graphite (for example, artificial graphite and natural graphite), pyrolytic carbon, coke, glassy carbon, baked bodies of organic polymer compounds, mesocarbon microbeads, carbon fiber, activated carbon, carbon colloids, and carbon black, metallic lithium, metal oxides, metal nitrides, lithium alloys, tin alloys, silicon alloys, intermetallic compounds, organic compounds, inorganic compounds, metal complexes, and organic polymer compounds. The negative electrode active material is used alone or in combination of two or more. The negative electrode active material, from the viewpoint of application of the non-aqueous electrolyte solution according to the first embodiment, is preferably graphite.

From the viewpoint of increasing battery voltage, the negative electrode active material layer preferably contains a material, as the negative electrode active material, capable of absorbing lithium ions at a potential lower than 0.4 V vs. Li/Li$^+$.

Examples of conductive aids include graphite; carbon black typified by acetylene black and Ketjen black; and carbon fiber. The content ratio of the conductive aid is preferably 20 parts by mass or less, and more preferably 0.1 to 10 parts by mass relative to 100 parts by mass of the negative electrode active material.

Examples of binders include carboxymethyl cellulose, PVDF, PTFE, polyacrylic acid, and fluororubber, and also include diene-based rubbers such as styrene-butadiene rubber. The content ratio of the binder is preferably 10 parts by mass or less, and more preferably 0.5 to 8 parts by mass relative to 100 parts by mass of the negative electrode active material.

The negative electrode active material layer is formed by applying a negative electrode mixture-containing slurry in which a negative electrode mixture comprising a negative electrode active material, mixed with a conductive aid and a binder as needed, is dispersed in a solvent to a negative electrode current collector and drying (removing solvent), and pressing as needed. Such a solvent is not particularly limited, and any conventionally known solvent can be used. Examples include N-methyl-2-pyrrolidone, dimethylformamide, dimethylacetoamide, and water.

The negative electrode current collector, for example, is composed of a metal foil such as a copper foil, a nickel foil, or a stainless-steel foil. The negative electrode current collector may be subjected to carbon coating on the surface, or may be processed into a mesh form. The thickness of the negative electrode current collector is preferably 5 to 40 $\mu$m, more preferably 6 to 35 $\mu$m, and even more preferably 7 to 30 $\mu$m.

<I-4. Separator>

As shown in FIG. 2, the non-aqueous secondary battery 100 of the first embodiment, from the viewpoint of imparting safety such as short-circuit prevention between the positive electrode 150 and the negative electrode 160 and shutdown, preferably comprises a separator 170 between the positive electrode 150 and the negative electrode 160. The separator 170 may be, but is not limited to, the same ones that known non-aqueous secondary batteries comprise, has a large ion permeability, and is preferably a thin film having insulating properties and excellent mechanical strength. Examples of the separator 170 include woven fabrics, nonwoven fabrics, and synthetic resin microporous films. Among these, synthetic resin microporous films are preferable.

As synthetic resin microporous films, for example, polyolefin-based microporous films such as microporous films containing polyethylene or polypropylene as the main component or microporous films containing both of these polyolefins are suitably used. Examples of nonwoven fabrics include porous films made of heat-resistant resins such as glass, ceramic, polyolefin, polyester, polyamide, liquid crystal polyester, and aramid.

The separator 170 may be in a configuration having one type of microporous film in a single layer or laminated in a plurality of layers, or may be in a configuration having two or more types of microporous films laminated. The separator 170 may be configured to have a single layer or a plurality of layers laminated using a mixed resin material obtained by melting and kneading two or more resin materials.

For the purpose of imparting functionality, inorganic particles may be present on the surface of or inside the separator, and an additional organic layer may be further applied or layered thereon. In addition, a crosslinked structure may be included. In order to enhance safety performance of the non-aqueous secondary battery, these methods may be combined as needed.

By using such a separator 170, particularly, satisfactory input-output characteristics and low self-discharge characteristics required of lithium-ion batteries for the above high-output applications can be realized.

The thickness of a microporous film that can be used as a separator is not particularly limited, and is preferably 1 $\mu$m or more from the viewpoint of film strength, and is preferably 500 $\mu$m or less from the viewpoint of permeability. The thickness of the microporous film, from the viewpoint of being used in high-output applications such as safety tests, where the calorific value is relatively high and self-discharge characteristics better than those in the prior art are required, and from the viewpoint of windability with a large battery winding machine, is preferably 5 $\mu$m or more and 30 $\mu$m or less, and more preferably 10 $\mu$m or more and 25 $\mu$m or less. The thickness of the microporous film, when short-circuit resistance performance and output performance are both emphasized, is even more preferably 15 $\mu$m or more and 25 $\mu$m or less, but when high energy density and output performance are both emphasized, is even more preferably 10 $\mu$m or more and less than 15 $\mu$m.

The porosity of a microporous film that can be used as a separator, from the viewpoint of following the rapid movement of lithium ions at high output, is preferably 30% or greater and 90% or less, more preferably 35% or greater and 80% or less, and even more preferably 40% or greater and 70% or less. The porosity of the microporous film, when the improvement of output performance is considered a priority while ensuring safety, is particularly preferably 50% or greater and 70% or less, and when short-circuit resistance performance and output performance are both emphasized, is particularly preferably 40% or greater and less than 50%.

The air permeability of a microporous film that can be used as a separator, from the viewpoint of a balance between film thickness and porosity, is preferably 1 s/100 cm$^3$ or more and 400 s/100 cm$^3$ or less, and is more preferably 100 s/100 cm$^3$ or more and 350 s/100 cm$^3$ or less. The air permeability of the microporous film, when short-circuit resistance performance and output performance are both emphasized, is particularly preferably 150 s/100 cm$^3$ or more and 350 s/100 cm$^3$ or less, and when the improvement of output performance is considered a priority while ensuring safety, is particularly preferably 100 s/100 cm$^3$ or more and less than 150 s/100 cm$^3$. However, when a non-aqueous electrolyte solution having low ionic conductivity is combined with a separator within the above ranges, there is a tendency that the movement speed of lithium ions is limited not by the structure of the separator but by the level of ionic conductivity of the non-aqueous electrolyte solution, and the expected input-output characteristics are not obtained. Therefore, the ionic conductivity of the non-aqueous electrolyte solution is preferably 10 mS/cm or more, more preferably 15 mS/cm or more, and even more preferably 20 mS/cm or more. However, the film thickness, air permeability and porosity of the separator and the ionic conductivity of the non-aqueous electrolyte solution are not limited to the above examples.

<I-5. Battery outer packaging>

As shown in FIGS. 1 and 2, the configuration of the battery outer packaging 110 of the non-aqueous secondary battery 100 is not particularly limited. For example, either a battery can or a laminate film outer packaging can be used. As the battery can, for example, a metal can, such as square-type, prism-type, cylinder-type, oval-type, flat-type, coin-type, or button-type, composed of steel, stainless steel, aluminum, or clad material can be used. As the laminate film outer packaging, for example, a laminate film composed of a three-layer configuration of hot melt resin/metal film/resin can be used.

The laminate film outer packaging can be used as an outer packaging by stacking two sheets with the hot melt resin side facing inward or by folding one so that the hot melt resin side faces inward and then sealing the edge portions with heat sealing. When a laminate film outer packaging is used, a positive electrode lead body 130 (or a positive electrode terminal and a lead tab connected to the positive electrode terminal) may be connected to the positive electrode current collector, and a negative electrode lead body 140 (or a negative electrode terminal and a lead tab connected to the negative electrode terminal) may be connected to the negative electrode current collector. In this case, the laminate film outer packaging may be sealed with the edge portions of the positive electrode lead body 130 and the negative electrode lead body 140 (or lead tabs connected to the positive electrode terminal and the negative electrode terminal, respectively) pulled to the outside of the outer packaging.

<I-6. Manufacturing method of battery>

The non-aqueous secondary battery 100 of the first embodiment may be produced by a known method, using the above non-aqueous electrolyte solution, and for example, a positive electrode 150 having a positive electrode active material layer on one side or both sides of a current collector, a negative electrode 160 having a negative electrode active material layer on one side or both sides of a current collector, a battery outer packaging 110, and if necessary, a separator 170.

A laminated body consisting of a positive electrode 150, a negative electrode 160, and if necessary, a separator 170 is first formed. The laminated body can be, for example:

an aspect in which a long positive electrode 150 and a long negative electrode 160 are wound in a layered state with a corresponding long separator interposed between the positive electrode 150 and the negative electrode 160 to form a laminated body having a wound structure;

an aspect in which a laminated body having a layered structure in which positive electrode sheets and negative electrode sheets, obtained by cutting the positive electrode 150 and the negative electrode 160 into a plurality of sheets having a certain area and shape, are alternately layered with separator sheets interposed therebetween is formed; and

an aspect in which a laminated body having a layered structure in which a long separator is folded in a zigzag manner, and positive electrode sheets and negative electrode sheets are alternately inserted between the zigzag-folded separator is formed,

but is not limited thereto.

The above laminated body is then housed within a battery outer packaging 110 (battery case), and the non-aqueous electrolyte solution according to the first embodiment is sealed inside the battery case, whereby a non-aqueous secondary battery of the first embodiment may be produced.

Alternatively, an electrolyte film in gel form can be produced in advance by impregnating a substrate consisting of a polymer material with the non-aqueous electrolyte solution, and a laminated body having a layered structure is formed using a positive electrode 150, a negative electrode 160, the electrolyte film, each in sheet form, and if necessary, a separator 170 and then housed within a battery outer packaging 110 to produce a non-aqueous secondary battery 100.

When the arrangement of the electrodes is designed so that there is a portion where an outer peripheral edge of the negative electrode active material layer overlaps with an outer peripheral edge of the positive electrode active material layer or so that there is a location where the width in non-opposing portions of the negative electrode active material layer is too small, there is a risk that the charge-discharge cycle characteristics of the non-aqueous secondary battery deteriorate due to misalignment of the electrodes during battery assembly. Thus, it is preferable that the positions of the electrodes be fixed in advance with tape such as polyimide tape, polyphenylene sulfide tape, or polypropylene (PP) tape or adhesive when using the electrode structures in the non-aqueous secondary battery.

In the first embodiment, when the non-aqueous electrolyte solution using acetonitrile is used, due to the high ion-conducting properties thereof, there is a possibility that lithium ions released from the positive electrode during the initial charge of the non-aqueous secondary battery disperse to the entire negative electrode. In non-aqueous secondary batteries, the negative electrode active material layer generally has a larger area than the positive electrode active material layer. However, when lithium ions are diffused and occluded to a location of the negative electrode active material layer not facing the positive electrode active material layer, the lithium ions remain in the negative electrode without being released during the initial discharge. Therefore, the contributing portion of unreleased lithium ions becomes irreversible capacity. For this reason, a non-aqueous secondary battery using a non-aqueous electrolyte solution containing acetonitrile may have low initial charge-discharge efficiency.

When the area of the positive electrode active material layer is larger than that of the negative electrode active material layer, or when both are the same, the concentration of current in the edge portions of the negative electrode active material layer during charging easily occurs, and lithium dendrites are easily generated.

For the above reason, the ratio of the area of the entire negative electrode active material layer to the area of the portion where the positive electrode active material layer and the negative electrode active material layer face each other is not particularly limited, but is preferably greater than 1.0 and less than 1.1, more preferably greater than 1.002 and less than 1.09, even more preferably greater than 1.005 and less than 1.08, and particularly preferably greater than 1.01 and less than 1.08. In a non-aqueous secondary battery using a non-aqueous electrolyte solution comprising acetonitrile, by decreasing the ratio of the area of the entire negative electrode active material layer to the area of the portion where the positive electrode active material layer and the negative electrode active material layer face each other, the initial charge-discharge efficiency can be improved.

Decreasing the ratio of the area of the entire negative electrode active material layer to the area of the portion where the positive electrode active material layer and the negative electrode active material layer face each other means limiting the ratio of the area of the negative electrode active material layer not facing the positive electrode active material layer. Consequently, of the lithium ions released from the positive electrode during the initial charge, the amount of lithium ions occluded in the portion of the negative electrode active material layer not facing the positive electrode active material layer (i.e., amount of lithium ions that are not released from the negative electrode during the initial discharge and become irreversible capacity) can be decreased as much as possible. Thus, by designing the ratio of the area of the entire negative electrode active material layer to the area of the portion where the positive electrode active material layer and the negative electrode active material layer face each other within the above range, initial charge-discharge efficiency of the battery can be enhanced and generation of lithium dendrites can be further suppressed, while aiming to improve load characteristics of the battery by using acetonitrile.

The non-aqueous secondary battery 100 of the first embodiment can function as a battery upon the initial charge, and is stabilized by partially decomposing the non-aqueous electrolyte solution during the initial charge. The method of the initial charge is not particularly limited. However, the initial charge is preferably carried out at 0.001 to 0.3 C, more preferably 0.002 to 0.25 C, and even more preferably 0.003 to 0.2 C. The initial charge is also preferably carried out via constant voltage partway along charging. By setting a long voltage range in which the lithium salt is involved in the electrochemical reaction, a stable and strong SEI is formed on the surface of the electrode (negative electrode 160), which has an effect of suppressing an increase in internal resistance, and reaction products are not firmly fixed solely to the negative electrode 160, imparting in some way a favorable effect on members other than the negative electrode 160, such as the positive electrode 150 and separator 170. Therefore, carrying out the initial charge in consideration of the electrochemical reaction of the lithium salt dissolved in the non-aqueous electrolyte solution is very effective. Further, the capacity that can be stored by the negative electrode is preferably larger than the charge capacity that can be drawn from the positive electrode during charging, and lithium can be prevented from being deposited on the negative electrode. The charge capacity at an environmental temperature in the range of 23 of 30°C is preferably 70% or greater and 99% or less relative to the capacity of the negative electrode active material. When the above capacity relationship is satisfied, there is no risk of electrodeposition of lithium on the negative electrode. Further, no unnecessary negative electrode capacity remains, thereby improving the energy density per weight and the energy density per volume.

The non-aqueous secondary battery 100 of the first embodiment can also be used as a battery pack in which a plurality of non-aqueous secondary batteries 100 are connected in series or in parallel. From the viewpoint of managing the charge and discharge states of the battery pack, the operating voltage range per battery is preferably 2 to 5 V.

The first embodiment of the present invention has been described above. However, the present invention is not limited to the above embodiment. The present invention can be modified in various ways without departing from the spirit thereof.

<II. Second embodiment>

Hereinafter, the second embodiment of the present invention will be described in detail. In the second embodiment, a non-aqueous secondary battery is provided. The non-aqueous secondary battery according to the second embodiment may comprise, but is not limited to, the configuration of the lithium-ion battery 100 shown in FIGS. 1 and 2.

<II-1. Non-aqueous secondary battery>

The non-aqueous secondary battery according to the second embodiment comprises a negative electrode, a positive electrode, a separator, and a non-aqueous electrolyte solution. The non-aqueous secondary battery has been charged one or more times. The negative electrode comprises one or more of each of an inorganic lithium compound and an organic lithium compound that are extractable by immersing in an extraction solvent. The positive electrode preferably contains one or more positive electrode active materials capable of occluding and releasing lithium ions, and the negative electrode preferably contains a negative electrode active material comprising graphite. The non-aqueous electrolyte

EP 4 475 248 A1

solution comprises acetonitrile as a non-aqueous solvent and a cyclic carbonate.

The negative electrode preferably comprises a component that is extractable from the negative electrode by using water as the extraction solvent, and more preferably comprises at least one of the following (a) to (d):

(a) LiF
(b) LiOCOOCH$_2$CH$_2$OCOOLi
(c) CH$_3$CH$_2$OCOOLi
(d) CH$_3$OCOOLi

as a component of a negative electrode film. The negative electrode film herein comprises a product composed of a decomposition product of a non-aqueous solvent and an additive resulting from a reduction reaction that proceeds in the negative electrode when the non-aqueous secondary battery is charged one or more times. A component of the negative electrode film in the second embodiment can be extracted by an extraction solvent, for example, can be extracted by immersion in heavy water for 72 h or more, but the extraction method is not limited thereto. The quantification of the extracted component, for example, is preferably carried out by ion chromatography for the component (a) and by NMR for the components (b) to (d) from the viewpoint of detection sensitivity, but is not particularly limited thereto.

In the second embodiment, the component (a) can be classified as an inorganic lithium compound, and the components (b) and (d) can be classified as organic lithium compounds. The negative electrode according to the second embodiment, from the viewpoint of prevention of reductive decomposition of acetonitrile, rapid stabilization of initial battery capacity, and efficiency of manufacturing process, preferably comprises the component (a) and at least one or all of the components (b) to (d).

The above components are mainly generated on the negative electrode active material surface by reduction reaction of a cyclic carbonate, forming an SEI (solid electrolyte interface). The SEI forms a film that does not conduct electrons while conducting Li ions, and prevents other solvents from further reducing. The non-aqueous secondary battery of the second embodiment comprises acetonitrile as a non-aqueous solvent of the non-aqueous electrolyte solution. Since acetonitrile has low viscosity and high dielectric constant, and is easily coordinated to Li ions and moved to the vicinity of an electrode active material during charging and discharging, it is considered that due to these characteristics, the input-output characteristics are easily improved and stabilization of electrode capacity is quickly completed. However, acetonitrile may be decomposed by reduction on the negative electrode active material surface. The negative electrode film component in the second embodiment comprising acetonitrile preferably comprises the components (a) to (d), wherein the molar ratio of each of the components relative to the total amount of (a) to (d) (i.e., total content) is preferably 20 to 70 mol% for (a), 20 to 70 mol% for (b), 1 to 20 mol% for (c), and 1 to 20 mol% for (d), and more preferably 20 to 65 mol% for (a), 25 to 65 mol% for (b), 5 to 20 mol% for (c), and 5 to 20 mol% for (d). In a battery in which the components (a) to (d) form a film as described above, at a compositional ratio of relatively large amounts of (a) and (b) and relatively small amounts of (c) and (d), stabilization of discharge capacity tends to proceed quickly.

At this time, the negative electrode may contain PF$_6$ anions, and may also contain N(SO$_2$F)$_2$ anions and/or N(SO$_2$CF$_3$)$_2$ anions. Specifically, the electrolyte solution may contain at least one anion selected from the group consisting of PF$_6$ anion, N(SO$_2$CF$_3$)$_2$ anion, and N(SO$_2$F)$_2$ anion. The above anion is preferable, from the viewpoint of promoting the effect of protective film formation and forming a non-conducting film on the surface of the surface foil acting as the positive electrode current collector, thereby suppressing an increase in internal resistance.

Specifically, the non-aqueous secondary battery of the second embodiment may be the non-aqueous secondary battery illustrated in FIGS. 1 and 2. FIG. 1 is a plan view schematically showing a non-aqueous secondary battery. FIG. 2 is a cross-sectional view along the A-A line.

The non-aqueous secondary battery 100 shown in FIGS. 1 and 2 is configured as a pouch-type cell. For the non-aqueous secondary battery 100, a layered electrode structure formed by layering a positive electrode 150 and a negative electrode 160 via a separator 170 and a non-aqueous electrolyte solution (not illustrated) are housed within a space 120 of a battery outer packaging 110 composed of two aluminum laminate films. The battery outer packaging 110 is sealed at the outer periphery thereof by heat-fusing the upper and lower aluminum laminate films. A laminated body in which the positive electrode 150, the separator 170, and the negative electrode 160 are layered in order is impregnated with the non-aqueous electrolyte solution.

The aluminum laminate film constituting the battery outer packaging 110 is preferably an aluminum foil coated on both sides with a polyolefin-based resin.

The positive electrode 150 is connected to a positive electrode lead body 130 within the non-aqueous secondary battery 100. Although not illustrated, the negative electrode 160 is also connected to a negative electrode lead body 140 within the non-aqueous secondary battery 100. Each of the positive electrode lead body 130 and the negative electrode lead body 140 has one end pulled to the outside of the battery outer packaging 110 so as to be connectable to an external device. These ionomer portions are heat-fused with one side of the battery outer packaging 110.

The non-aqueous secondary battery 100 illustrated in FIGS. 1 and 2 comprises a layered electrode structure having one positive electrode 150 and one negative electrode 160. However, the number of positive electrodes 150 and negative electrodes 160 layered can be appropriately increased according to capacity design. In the case of a layered electrode structure having a plurality of positive electrodes 150 and a plurality of negative electrodes 160, tabs of the same electrode may be joined by welding, and then joined to one lead body by welding, allowing the lead body to be extracted outside the battery. The above tabs of the same electrode can be formed from exposed portions of the current collector, or formed by welding metal pieces to the exposed portions of the current collector.

The positive electrode 150 is composed of a positive electrode active material layer, prepared from a positive electrode mixture, and a positive electrode current collector. The negative electrode 160 is composed of a negative electrode active material layer, prepared from a negative electrode mixture, and a negative electrode current collector. The positive electrode 150 and negative electrode 160 are arranged so that the positive electrode active material layer and the negative electrode active material layer face each other via a separator 170.

These members are not particularly limited, and materials used in conventional lithium-ion batteries can be used. Hereinafter, each member of the non-aqueous secondary battery will be further described in detail.

<II-2. Non-aqueous electrolyte solution>

The non-aqueous electrolyte solution according to the second embodiment can have the configuration of the non-aqueous electrolyte solution according to the first embodiment indicated above. In addition, materials used for non-aqueous electrolyte solutions of conventional lithium-ion batteries can be applied to the non-aqueous electrolyte solution as long as the effect of the present invention is not impaired.

The "non-aqueous electrolyte solution" of the second embodiment refers to an electrolyte solution containing a non-aqueous solvent and a lithium salt, wherein water is 1% by mass or less relative to the entire amount of the non-aqueous electrolyte solution. Preferably, the ratio of water is 300 ppm or less, and more preferably, 200 ppm or less. The non-aqueous electrolyte solution may contain an additive.

(Non-aqueous solvent)

The non-aqueous solvent will be described. The "non-aqueous solvent" in the second embodiment refers to an element except the lithium salt from the electrolyte solution. In the second embodiment, when the non-aqueous electrolyte solution comprises an additive, the "non-aqueous solvent" refers to an element except the lithium salt and the additive from the electrolyte solution.

The non-aqueous solvent in the second embodiment comprises acetonitrile as an indispensable component. The content of acetonitrile is preferably 1% by mass or greater and 60% by mass or less, more preferably 3% by mass or greater and 50% by mass or less, and even more preferably 5% by mass or greater and 40% by mass or less relative to the entire amount of the non-aqueous electrolyte solution. By containing a certain amount of acetonitrile, the non-aqueous secondary battery in the second embodiment tends to have excellent input-output performance. However, the non-aqueous solvent may comprise another non-aqueous solvent in addition to acetonitrile. Examples of non-aqueous solvents other than acetonitrile include alcohols such as methanol and ethanol; and aprotic solvents. Among these, aprotic polar solvents are preferable.

Among the above non-aqueous solvent, specific examples of aprotic solvents include cyclic carbonates typified by ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate, and vinyl ethylene carbonate; fluoroethylene carbonates typified by 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one; lactones typified by $\gamma$-butyrolactone, $\gamma$-valerolactone, $\gamma$-caprolactone, $\delta$-valerolactone, $\delta$-caprolactone, and $\epsilon$-caprolactone; sulfur compounds typified by ethylene sulfite, propylene sulfite, butylene sulfite, pentene sulfite sulfolane, 3-sulfolane, 3-methylsulfolane, 1,3-propanesultone, 1,4-butanesultone, 1-propene 1,3-sultone, dimethylsulfoxide, tetramethylene sulfoxide, and ethylene glycol sulfite; cyclic ethers typified by tetrahydrofuran, 2-methyl tetrahydrofuran, 1,4-dioxane, and 1,3-dioxane; chain carbonates typified by ethyl methyl carbonate, dimethyl carbonate, diethyl carbonate, methyl propyl carbonate, methyl isopropyl carbonate, dipropyl carbonate, methyl butyl carbonate, dibutyl carbonate, ethyl propyl carbonate, and methyl trifluoroethyl carbonate; chain fluorinated carbonates typified by trifluoro dimethyl carbonate, trifluoro diethyl carbonate, and trifluoro ethyl methyl carbonate; mononitriles typified by propionitrile, butyronitrile, valeronitrile, benzonitrile, and acrylonitrile; alkoxy-substituted nitriles typified by methoxyacetonitrile and 3-methoxypropionitrile; dinitriles typified by malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile; cyclic nitriles typified by benzonitrile; chain esters typified by methyl propionate; chain ethers typified by dimethoxyethane, diethyl ether, 1,3-dioxolane, diglyme, triglyme, and tetraglyme; fluorinated ethers typified by Rf⁴-OR⁵ (wherein Rf⁴ is an alkyl group containing a fluorine atom; and $R^5$ is an organic group that may contain a fluorine atom); ketones typified by acetone, methyl ethyl ketone, and methyl isobutyl ketone; and halides typified by fluorides of these aprotic solvents. The aprotic solvents are used alone or in combination of two or more.

Among these additional non-aqueous solvents, one or more of cyclic and chain carbonates are preferably used. The non-aqueous secondary battery of the second embodiment preferably comprises a cyclic carbonate in the non-aqueous electrolyte solution, and particularly preferably comprises ethylene carbonate and vinylene carbonate as the cyclic carbonate. Only one of the other cyclic and chain carbonates exemplified above may be selected and used, or two or more (for example, two or more of the cyclic carbonates exemplified above, two or more of the chain carbonates exemplified above, or two or more consisting of one or more of the cyclic carbonates exemplified above and one or more of the chain carbonates exemplified above) may be used. Among these, propylene carbonate or fluoroethylene carbonate is more preferable as the cyclic carbonate, and ethyl methyl carbonate, dimethyl carbonate, or diethyl carbonate is more preferable as the chain carbonate.

Vinylene carbonate is highly reactive and is consumed according to the amount of negative electrode during the initial charge, promoting SEI formation. In order to form a satisfactory SEI in the second embodiment, it is considered that the SEI formation proceeds faster than acetonitrile undergoing reduction reaction on the negative electrode active material surface by sufficiently adding ethylene carbonate and vinylene carbonate before the initial charge of the battery so that a certain amount of ethylene carbonate and vinylene carbonate remains after SEI formation. Such rapid SEI formation reaction is considered to be achieved by competing reactions between ethylene carbonate and vinylene carbonate, and it is preferable that the two be contained in a predetermined ratio. The molar ratio of the remaining vinylene carbonate relative to ethylene carbonate contained in the non-aqueous electrolyte solution of the second embodiment after SEI formation reaction has progressed with the initial charge is preferably 0.01 to 30 mol%, more preferably 0.1 to 30 mol%, even more preferably 0.3 to 25 mol%, and particularly preferably 1 to 20 mol%.

As described above, in order for a certain amount of vinylene carbonate relative to ethylene carbonate to remain, the non-aqueous secondary battery of the second embodiment comprises a suitable non-aqueous electrolyte solution before the initial charge. The content of vinylene carbonate is preferably 0.1% by mass or greater and 10% by mass or less relative to the entire amount of the non-aqueous electrolyte solution to maintain satisfactory reactivity. However, when the remaining vinylene carbonate is expended after the initial charge, it is necessary to adjust the addition amount as needed so that the initial charge and discharge are stable according to the content of the non-aqueous electrolyte solution in the battery, the content of acetonitrile, and the amount of negative electrode in the battery. From this viewpoint, in order to manufacture the non-aqueous secondary battery of the second embodiment, the non-aqueous electrolyte solution sealed in the battery may have the configuration in the first embodiment. Since ethylene carbonate not only contributes to the formation of the SEI reaction but also acts as a suitable solvent for dissolving lithium salts, the content of ethylene carbonate is preferably 5% by mass or greater and 35% by mass or less, and more preferably 10% by mass or greater and 30% by mass or less relative to the total amount of the non-aqueous electrolyte solution.

(Lithium salt)

The lithium salt is not particularly limited as long as the effect of the present invention is not impaired. For example, in the second embodiment, the lithium salt can include a fluorine-containing inorganic lithium salt and/or an imide salt.

The imide salt is a lithium salt represented by $LiN(SO_2C_mF_{2m+1})_2$ (wherein m is an integer of 0 to 8), and specifically, at least one of $LiN(SO_2F)_2$ and $LiN(SO_2CF_3)_2$ is preferably included therein. Since an imide salt itself has a high decomposition temperature, an increase in resistance during high-temperature storage is suppressed. In addition, since the viscosity of the non-aqueous electrolyte solution can be kept low, excellent output performance, particularly in low-temperature region, can be exhibited. The content of the imide salt is preferably in the range of 0.1 to 40% by mass, more preferably in the range of 0.2 to 30% by mass, and even more preferably in the range of 0.5 to 20% by mass relative to the entire amount of the non-aqueous electrolyte solution of the second embodiment. By having the content in this range, performance at low temperature can be improved without decreasing ionic conductivity of the non-aqueous electrolyte solution.

A typical fluorine-containing inorganic lithium salt is $LiPF_6$, which releases $PF_6$ anions when dissolved. However, the non-aqueous electrolyte solution may comprise a fluorine-containing inorganic lithium salt other than $LiPF_6$. Examples of such a fluorine-containing inorganic lithium salt include $LiBF_4$, $LiAsF_6$, $Li_2SiF_6$, $LiSbF_6$, and $Li_2B_{12}F_bH_{12-b}$ (wherein b is an integer of 0 to 3). The "fluorine-containing inorganic lithium salt" in the second embodiment refers to a lithium salt comprising no carbon atom in the anion and comprising a fluorine atom in the anion. A fluorine-containing inorganic lithium salt is excellent in that the salt forms a passive film on the surface of the metal foil, which is the positive electrode current collector, and suppresses corrosion of the positive electrode current collector. The fluorine-containing inorganic lithium salt is used alone or in combination of two or more.

The content of the fluorine-containing inorganic lithium salt in the non-aqueous electrolyte solution of the second embodiment is not particularly limited, but is preferably 0.1 mol or more, more preferably 0.2 mol or more, even more preferably 0.25 mol or more relative to 1 L of non-aqueous solvent. When the content of the fluorine-containing organic lithium salt is within the above range, there is a tendency that ionic conductivity is increased and high-output characteristics can be exhibited.

The non-aqueous electrolyte solution of the second embodiment may further comprise an organic lithium salt. The "organic lithium salt" in the second embodiment refers to a lithium salt comprising a carbon atom in the anion.

Examples of organic lithium salts can include organic lithium salts having an oxalate group. Specific examples of organic lithium salts having an oxalate group include organic lithium salts represented by each of $LiB(C_2O_4)_2$, $LiBF_2(C_2O_4)$, $LiPF_4(C_2O_4)$, and $LiPF_2(C_2O_4)_2$. Among these, at least one lithium salt selected from lithium salts represented by $LiB(C_2O_4)_2$ and $LiBF_2(C_2O_4)$ is preferable. It is more preferable that one or more of these lithium salts be used together with a fluorine-containing inorganic lithium salt.

The addition amount of the organic lithium salt having an oxalate group to the non-aqueous electrolyte solution, from the viewpoint of ensuring a more favorable effect from the use thereof, as an amount per L of non-aqueous solvent of the non-aqueous electrolyte solution, is preferably 0.005 mol or more, more preferably 0.02 mol or more, and even more preferably 0.05 mol or more. However, there is a risk of precipitation when the amount of an organic lithium salt having an oxalate group in the non-aqueous electrolyte solution is too large. Therefore, the addition amount of an organic lithium salt having an oxalate group to the non-aqueous electrolyte solution, in an amount per L of non-aqueous solvent of the non-aqueous electrolyte solution, is preferably less than 1.0 mol, more preferably less than 0.5 mol, and even more preferably less than 0.2 mol.

It is known that organic lithium salts having an oxalate group are poorly soluble in low-polarity organic solvents, particularly chain carbonates. The organic lithium salt having an oxalate group may contain a trace amount of lithium oxalate, and when mixed as a non-aqueous electrolyte solution, may react with a trace amount of water contained in another raw material to newly generate a white precipitate of lithium oxalate. Therefore, the content of lithium oxalate in the non-aqueous electrolyte solution of the second embodiment, although not particularly limited, is preferably 0 to 500 ppm.

A lithium salt generally used for non-aqueous secondary batteries, in addition to those listed above, may be supplementally added as the lithium salt in the second embodiment. Specific examples of additional lithium salts include inorganic lithium salts comprising no fluorine atom in the anion, such as $LiClO_4$, $LiAlO_4$, $LiAlCl_4$, $LiB_{10}Cl_{10}$, and Li chloroborane; organic lithium salts such as $LiCF_3SO_3$, $LiCF_3CO_2$, $Li_2C_2F_4(SO_3)_2$, $LiC(CF_3SO_2)_3$, $LiC_nF_{(2n+1)}SO_3$ (wherein $n \geq 2$), lower aliphatic carboxylic acid Li, and Li tetraphenylborate; organic lithium salts represented by $LiPF_n(CpF_{2p+1})_{6-n}$, such as $LiPF_5(CF_3)$ (wherein n is an integer of 1 to 5 and p is an integer of 1 to 8); organic lithium salts represented by $LiBF_q(C_2F_{2s+1})_{4-q}$, such as $LiBF_3(CF_3)$ (wherein q is an integer of 1 to 3 and s is an integer of 1 to 8); lithium salts bonded to a polyvalent anion; and organic lithium salts represented by each of the following formulas (7a), (7b), and (7c):

$$LiC(SO_2R^6)(SO_2R^7)(SO_2R^8) \qquad (7a)$$

$$LiN(SO_2OR^9)(SO_2OR^{10}) \qquad (7b)$$

$$LiN(SO_2R^{11})(SO_2OR^{12}) \qquad (7c)$$

wherein $R^6$, $R^7$, $R^8$, $R^9$, $R^{10}$, $R^{11}$, and $R^{12}$ may be the same as or different from each other, and represent a perfluoroalkyl group having 1 to 8 carbon atoms. One or more of these lithium salts can be used together with at least one selected from the group consisting of fluorine-containing inorganic lithium salts, imide salts, and organic lithium salts.

(Additive)

In the second embodiment, the non-aqueous electrolyte solution, for example, can appropriately contain an optional additive selected from acid anhydrides, sulfonic acid esters, diphenyl disulfide, cyclohexylbenzene, biphenyl, fluorobenzene, tert-butylbenzene, phosphoric acid esters (such as ethyl diethyl phosphonoacetate (EDPA): $(C_2H_5O)_2(P=O)-CH_2(C=O)OC_2H_5$, tris(trifluoroethyl)phosphate (TFEP): $(CF_3CH_2O)_3P=O$, triphenyl phosphate (TPP): $(C_6H_5O)_3P=O$: $(CH_2=CHCH_2O)_3P=O$, and triallyl phosphate), and derivatives of these compounds. Particularly, the phosphoric acid esters are effective in suppressing side reactions during storage.

(Additionally optional additive)

In the second embodiment, for the purpose of high-temperature storage properties and safety improvement of the non-aqueous secondary battery, the non-aqueous electrolyte solution, for example, can appropriately contain an optional additive selected from sulfonic acid esters, diphenyl disulfide, cyclohexylbenzene, biphenyl, fluorobenzene, tert-butylbenzene, phosphoric acid esters (such as ethyl diethyl phosphonoacetate (EDPA): $(C_2H_5O)_2(P=O)$-$CH_2(C=O)$ $OC_2H_5$, tris(trifluoroethyl)phosphate (TFEP): $(CF_3CH_2O)_3P=O$, triphenyl phosphate (TPP): $(C_6H_5O)_3P=O$: $(CH_2=CHCH_2O)_3P=O$, and triallyl phosphate), nitrogen-containing cyclic compounds with no steric hindrance around the lone pair of electrons (such as pyridine, 1-methyl-1H-benzotriazole, and 1-methylpyrazole), and derivatives of these compounds. Particularly, the phosphoric acid esters are effective in suppressing side reactions during high-temperature storage.

The content of the additionally optional additive is calculated as a mass percentage relative to the total mass of all components constituting the non-aqueous electrolyte solution. The content of the additionally optional additive is not particularly limited, but is preferably in the range of 0.01% by mass or greater and 10% by mass or less, more preferably 0.02% by mass or greater and 5% by mass or less, and even more preferably 0.05% by mass to 3% by mass relative to the total amount of the non-aqueous electrolyte solution. By adjusting the content of the additionally optional additive within the above range, there is a tendency that even more favorable battery characteristics can be applied without impairing the basic function as a non-aqueous secondary battery.

<II-3. Positive electrode>

The positive electrode 150 is composed of a positive electrode active material layer, prepared from a positive electrode mixture, and a positive electrode current collector. The positive electrode 150 needs only to act as a positive electrode of a non-aqueous secondary battery within the scope of the present invention, and is not particularly limited.

The positive electrode active material layer contains a positive electrode active material, and may further optionally contain a conductive aid and a binder.

The positive electrode active material layer preferably contains a material capable of occluding and releasing lithium ions as a positive electrode active material. The positive electrode active material layer preferably contains a positive electrode active material and, if necessary, a conductive aid and a binder. It is preferable that such a material be used since there is a tendency that high voltage and high energy density can be obtained.

Examples of positive electrode active materials include lithium-containing compounds represented by each of the following formulas (8a) and (8b):

$$Li_xMO_2 \qquad (8a)$$

$$Li_yM_2O_4 \qquad (8b)$$

wherein M represents one or more metal elements comprising at least one transition metal element; x represents a number of 0 to 1.1; and y represents a number of 0 to 2, and other lithium-containing compounds.

Examples of lithium-containing compounds represented by each of the formulas (8a) and (8b) include lithium cobalt oxides typified by $LiCoO_2$; lithium manganese oxides typified by $LiMnO_2$, $LiMn_2O_4$, and $Li_2Mn_2O_4$; lithium nickel oxides typified by $LiNiO_2$; and lithium-containing composite metal oxides represented by $Li_zMO_2$ (wherein M includes at least one transition metal element selected from the group consisting of Ni, Mn, and Co and represents two or more metal elements selected from the group consisting of Ni, Mn, Co, Al, and Mg; and z represents a number greater than 0.9 and less than 1.2).

The lithium-containing compound other than the lithium-containing compounds represented by each of the formulas (8a) and (8b) is not particularly limited as long as lithium is contained. Examples of such a lithium-containing compound include composite oxides comprising lithium and a transition metal element, metal chalcogenides comprising lithium, metal phosphate compounds comprising lithium and a transition metal element, and metal silicate compounds comprising lithium and a transition metal element (for example, $Li_tM_uSiO_4$, M has the same definition as in the formula (8a); t represents a number of 0 to 1; and u represents a number of 0 to 2). From the viewpoint of obtaining higher voltage, the lithium-containing compound is a composite oxide, preferably a metal phosphate compound, comprising, in particular, lithium and at least one transition metal element selected from the group consisting of cobalt (Co), nickel (Ni), manganese (Mn), iron (Fe), copper (Cu), zinc (Zn), chromium (Cr), vanadium (V), and titanium (Ti).

More specific examples of lithium-containing compounds are more preferably composite oxides comprising lithium, a transition metal and metal chalcogenides comprising lithium and a transition metal, and metal phosphate compounds comprising lithium, and include compounds represented by each of the following formulas (9a) and (9b):

$$Li_vM^ID_2 \qquad (9a)$$

$$Li_wM^{II}PO_4 \qquad (9b)$$

wherein D represents oxygen or a chalcogen element; $M^I$ and $M^{II}$ each represent one or more transition metal elements;

the values of v and w are determined by the charge and discharge states of the battery; v represents a number of 0.05 to 1.10, and w represents a number of 0.05 to 1.10.

The lithium-containing compounds represented by the above formula (9a) have a layered structure, and the compounds represented by the above formula (9b) have an olivine structure. These lithium-containing compounds may be compounds in which a portion of the transition metal element is substituted with Al, Mg, or another transition metal element, compounds in which such a metal element is contained in the crystal grain boundaries, compounds in which a portion of oxygen atoms is substituted with fluorine atoms, or compounds in which at least a portion of the positive electrode active material surface is coated with another positive electrode active material, for the purpose of stabilizing the structure.

As the positive electrode active material in the second embodiment, a lithium-containing compound as described above only may be used, or the lithium-containing compound may be used in combination with another positive electrode active material.

Examples of such additional positive electrode active materials include metal oxides and metal chalcogenides having a tunnel structure and a layered structure; sulfur; and conductive polymers. Examples of metal oxides and metal chalcogenides having a tunnel structure and a layered structure include oxides, sulfides, and selenides of metals other than lithium, such as $MnO_2$, $FeO_2$, $FeS_2$, $V_2O_5$, $V_6O_{13}$, $TiO_2$, $TiS_2$, $MoS_2$, and $NbSe_2$. Examples of conductive polymers include conductive polymers typified by polyaniline, polythiophene, polyacetylene, and polypyrrole.

The additional positive electrode active material described above is used alone or in combination of two or more, and is not particularly limited. However, it is preferable that the positive electrode active material layer contain at least one transition metal element selected from Ni, Mn, and Co, since lithium ions can be reversibly and stably occluded and released and high energy density can be achieved.

When the lithium-containing compound and the additional positive electrode active material are used in combination as the positive electrode active material, the use ratio of the two components, as a use ratio of the lithium-containing compound relative to the entirety of the positive electrode active material, is preferably 80% by mass or greater, and more preferably 85% by mass or greater.

Examples of conductive aid include graphite; carbon black typified by acetylene black and Ketjen black; and carbon fiber. The content ratio of the conductive aid is preferably 10 parts by mass or less, and more preferably 1 to 5 parts by mass relative to 100 parts by mass of the positive electrode active material.

Examples of binders include polyvinylidene fluoride (PVDF), polytetrafluoroethylene (PTFE), polyacrylic acid, styrene-butadiene rubber, and fluororubber. The content ratio of the binder is preferably 6 parts by mass or less, and more preferably 0.5 to 4 parts by mass relative to 100 parts by mass of the positive electrode active material.

The positive electrode active material layer is formed by applying a positive electrode mixture-containing slurry in which a positive electrode mixture comprising a positive electrode active material, mixed with a conductive aid and a binder as needed, is dispersed in a solvent to a positive electrode current collector and drying (removing solvent), and pressing as needed. Such a solvent is not particularly limited, and any known solvent can be used. Examples include N-methyl-2-pyrrolidone, dimethylformamide, dimethylacetoamide, and water.

The positive electrode current collector, for example, is composed of a metal foil such as an aluminum foil, a nickel foil, or a stainless-steel foil. The positive electrode current collector may be subjected to carbon coating on the surface, or may be processed into a mesh form. The thickness of the positive electrode current collector is preferably 5 to 40 $\mu$m, more preferably 7 to 35 $\mu$m, and even more preferably 9 to 30 $\mu$m.

<II-4. Negative electrode>

The negative electrode 160 is composed of a negative electrode active material layer prepared from a negative electrode mixture and a negative electrode current collector. The negative electrode 160 needs only to act as a negative electrode of a non-aqueous secondary battery within the scope of the present invention, and is not particularly limited.

From the viewpoint of increasing battery voltage, the negative electrode active material layer preferably contains a material, as the negative electrode active material, capable of absorbing lithium ions at a potential lower than 0.4 V vs. Li/Li$^+$. It is preferable that the negative electrode active material layer contain, in addition to the negative electrode active material, a conductive aid and a binder, as needed. The negative electrode active material layer contains decomposition products of cyclic carbonates such as inorganic lithium compounds and organic lithium compounds, as described above.

Examples of negative electrode active materials include, in addition to carbon materials typified by amorphous carbon (hard carbon), artificial graphite, natural graphite, graphite, pyrolytic carbon, coke, glassy carbon, baked bodies of organic polymer compounds, mesocarbon microbeads, carbon fiber, activated carbon, carbon colloids, and carbon black, metallic lithium, metal oxides, metal nitrides, lithium alloys, tin alloys, silicon alloys, intermetallic compounds, organic compounds, inorganic compounds, metal complexes, and organic polymer compounds.

In the second embodiment, the negative electrode active material may comprise $SiO_x$ ($0.5 \leq x \leq 1.5$) or an element capable of forming an alloy with lithium. Examples of such an element include silicon. Silicon may be in any form of a crystalline structure, a low-crystalline structure, or an amorphous structure. It is preferable that conductivity between particles be improved by coating the active material surface with a conductive material. Particularly, since silicon has an operating potential of about 0.5 V (vs Li/Li+), which is slightly higher than the operating potential of graphite of about 0.05 V (vs Li/Li+), the risk of lithium electrodeposition is decreased. Since acetonitrile used in the non-aqueous solvent according to the second embodiment undergoes a reduction reaction with lithium metal and generates gas, a negative electrode active material that is difficult for lithium electrodeposition is preferable in combination with a nitrile electrolyte solution. However, since the energy density as a battery is deteriorated in a negative electrode active material having an excessively high operating potential, from the viewpoint of energy density improvement, it is preferable that the negative electrode active material operate at a potential lower than 0.4 V vs. Li/Li$^+$.

The content of silicon is preferably in the range of 0.1 to 100% by mass, more preferably 1 to 80% by mass, and even more preferably 3 to 60% by mass relative to the entire amount of the negative electrode mixture in the second embodiment. By adjusting the content of silicon within the above range, a balance of high capacity and charge-discharge cycle performance of the non-aqueous secondary battery can be ensured.

The negative electrode active material is used alone or in combination of two or more.

Examples of conductive aids include graphite; carbon black typified by acetylene black and Ketjen black; and carbon fiber. The content ratio of the conductive aid is preferably 20 parts by mass or less, and more preferably 0.1 to 10 parts by mass relative to 100 parts by mass of the negative electrode active material.

Examples of binders include carboxymethyl cellulose, PVDF, PTFE, polyacrylic acid, styrene-butadiene rubber, polyimide, polyamideimide, and fluororubber. The content ratio of the binder is preferably 10 parts by mass or less, and more preferably by 0.5 to 6 parts by mass relative to 100 parts by mass of the negative electrode active material.

The negative electrode active material layer is formed by applying a negative electrode mixture-containing slurry in which a negative electrode mixture comprising a negative electrode active material, mixed with a conductive aid and a binder as needed, is dispersed in a solvent to a negative electrode current collector and drying (removing solvent), and pressing as needed. Such a solvent is not particularly limited, and any known solvent can be used. Examples include N-methyl-2-pyrrolidone, dimethylformamide, dimethylacetoamide, and water.

The negative electrode current collector, for example, is composed of a metal foil such as a copper foil, a nickel foil, or a stainless-steel foil. The negative electrode current collector may be subjected to carbon coating on the surface, or may be processed into a mesh form. The thickness of the negative electrode current collector is preferably 5 to 40 $\mu$m, more preferably 6 to 35 $\mu$m, and even more preferably 7 to 30 $\mu$m.

<II-5. Separator>

The non-aqueous secondary battery 100 of the second embodiment, from the viewpoint of imparting safety such as short-circuit prevention between the positive electrode 150 and the negative electrode 160 and shutdown, preferably comprises a separator 170 between the positive electrode 150 and the negative electrode 160. The separator 170 may be, but is not limited to, the same ones that known non-aqueous secondary batteries comprise, has a large ion permeability, and is preferably a thin film having insulating properties and excellent mechanical strength. Examples of the separator 170 include woven fabrics, nonwoven fabrics, and synthetic resin microporous films. Among these, synthetic resin microporous films are preferable.

As synthetic resin microporous films, for example, polyolefin-based microporous films such as microporous films containing polyethylene or polypropylene as the main component or microporous films containing both of these polyolefins are suitably used. Examples of nonwoven fabrics include porous films made of heat-resistant resins such as glass, ceramic, polyolefin, polyester, polyamide, liquid crystal polyester, and aramid.

The separator 170 may be in a configuration having one type of microporous film in a single layer or laminated in a plurality of layers, or may be in a configuration having two or more types of microporous films laminated. The separator 170 may be configured to have a single layer or a plurality of layers laminated using a mixed resin material obtained by melting and kneading two or more resin materials.

By using such a separator 170, particularly, satisfactory input-output characteristics and low self-discharge characteristics required of lithium-ion secondary batteries for the above high-output applications can be realized. The thickness of the microporous film is not particularly limited, and is preferably 1 $\mu$m or more from the viewpoint of film strength, and is preferably 500 $\mu$m or less from the viewpoint of permeability. From the viewpoint of being used in high-output applications such as safety tests, where the calorific value is relatively high and self-discharge characteristics better than those in the prior art are required, and from the viewpoint of windability with a large battery winding machine, the thickness is preferably 5 $\mu$m or more and 30 $\mu$m or less, and more preferably 10 $\mu$m or more and 25 $\mu$m or less. The thickness, when short-circuit resistance performance and output performance are both emphasized, is even more preferably 15 $\mu$m or more and 25 $\mu$m or less, but when high energy density and output performance are both emphasized, is even more preferably 10 $\mu$m or more and less than 15 $\mu$m. The porosity of the film, from the viewpoint of following the rapid movement of lithium ions at high output, is preferably 30% or greater and 90% or less, more preferably 35% or greater and 80% or less, and even more preferably 40% or greater and 70% or less. The porosity of the film, when the improvement of output performance is considered a priority while ensuring safety, is particularly preferably 50% or greater and 70% or less, and when short-circuit resistance performance and output performance are both emphasized, is particularly preferably 40% or greater and less than 50%. The air permeability of the film, from the viewpoint of a balance between film thickness and porosity, is preferably 1 s/100 cm$^3$ or more and 400 s/100 cm$^3$ or less, and is more preferably 100 s/100 cm$^3$ or more and 350 s/100 cm$^3$ or less. The air permeability of the film, when short-circuit resistance performance and output performance are both emphasized, is particularly preferably 150 s/100 cm$^3$ or more and 350 s/100 cm$^3$ or less, and when the improvement of output performance is considered a priority while ensuring safety, is particularly preferably 100 s/100 cm$^3$ or more and less than 150 s/100 cm$^3$.

<II-6. Battery outer packaging>

The configuration of the battery outer packaging 110 of the non-aqueous secondary battery 100 of the second embodiment is not particularly limited. For example, either a battery can or a laminate film outer packaging can be used. As the battery can, for example, a metal can composed of steel or aluminum can be used. As the laminate film outer packaging, for example, a laminate film composed of a three-layer configuration of hot melt resin/metal film/resin can be used.

The laminate film outer packaging can be used as an outer packaging by stacking two sheets with the hot melt resin side facing inward or by folding one so that the hot melt resin side faces inward and then sealing the edge portions with heat sealing. When a laminate film outer packaging is used, a positive electrode lead body 130 (or a positive electrode terminal and a lead tab connected to the positive electrode terminal) may be connected to the positive electrode current collector, and a negative electrode lead body 140 (or a negative electrode terminal and a lead tab connected to the negative electrode terminal) may be connected to the negative electrode current collector. In this case, the laminate film outer packaging may be sealed with the edge portions of the positive electrode lead body 130 and the negative electrode lead body 140 (or lead tabs connected to the positive electrode terminal and the negative electrode terminal, respectively) pulled to the outside of the outer packaging.

<II-7. Manufacturing method of non-aqueous electrolyte solution>

The non-aqueous electrolyte solution of the second embodiment can be manufactured by mixing a lithium salt with a non-aqueous solvent comprising acetonitrile and a cyclic carbonate by any means. The non-aqueous electrolyte solution may be manufactured by further mixing, in addition to vinylene carbonate, additional additives by any means.

<II-8. Manufacturing method of battery>

The non-aqueous secondary battery 100 of the second embodiment may be produced by a known method, using the above non-aqueous electrolyte solution, a positive electrode 150 having a positive electrode active material layer on one side or both sides of a current collector, a negative electrode 160 having a negative electrode active material layer on one side or both sides of a current collector, a battery outer packaging 110, and if necessary, a separator 170.

A laminated body consisting of a positive electrode 150, a negative electrode 160, and if necessary, a separator 170 is first formed. The laminated body can be, for example, an aspect in which a long positive electrode 150 and a long negative electrode 160 are wound in a layered state with a corresponding long separator interposed between the positive electrode 150 and the negative electrode 160 to form a laminated body having a wound structure; an aspect in which a laminated body having a layered structure in which positive electrode sheets and negative electrode sheets, obtained by cutting the positive electrode 150 and the negative electrode 160 into a plurality of sheets having a certain area and shape, are alternately layered with separator sheets interposed therebetween is formed; and an aspect in which a laminated body having a layered structure in which a long separator is folded in a zigzag manner, and positive electrode sheets and negative electrode sheets are alternately inserted between the zigzag-folded separator is formed.

The above laminated body is then housed within a battery outer packaging 110 (battery case), and the non-aqueous electrolyte solution according to the second embodiment is sealed inside the battery case, whereby a non-aqueous secondary battery of the second embodiment can be produced. The non-aqueous electrolyte solution may have the configuration in the first embodiment.

An electrolyte film in gel form can be produced in advance by impregnating a substrate consisting of a polymer material with the electrolyte solution, and a laminated body having a layered structure is formed using a positive electrode 150, a negative electrode 160, the electrolyte film, each in sheet form, and if necessary, a separator 170 and then housed within a battery outer packaging 110 to produce a non-aqueous secondary battery 100.

The shape of the non-aqueous secondary battery 100 of the second embodiment is not particularly limited. For example, a cylindrical shape, an elliptical shape, a prismatic shape, a button shape, a coin shape, a flat shape, or a laminate form can be applied. In the second embodiment, particularly the laminate type can be preferably applied.

When the arrangement of the electrodes is designed so that there is a portion where an outer peripheral edge of the negative electrode active material layer overlaps with an outer peripheral edge of the positive electrode active material layer or so that there is a location where the width in non-opposing portions of the negative electrode active material layer is too small, there is a risk that the charge-discharge cycle characteristics of the non-aqueous secondary battery deteriorate due to misalignment of the electrodes during battery assembly. Thus, it is preferable that the positions of the electrodes be fixed in advance with tape such as polyimide tape, polyphenylene sulfide tape, or PP tape or adhesive when using the electrode structures in the non-aqueous secondary battery.

The non-aqueous secondary battery 100 of the second embodiment can function as a battery upon the initial charge, and is stabilized by partially decomposing the electrolyte solution during the initial charge. The method of the initial charge is not particularly limited. However, the initial charge is preferably carried out at 0.001 to 0.3 C, more preferably 0.002 to 0.25 C, and even more preferably 0.003 to 0.2 C. An initial charge carried out via constant voltage partway along charging also contributes to preferable results. By setting a long voltage range in which the lithium salt is involved in the electrochemical reaction, an SEI is formed on the surface of the electrode, which has an effect of suppressing an increase in internal resistance including the positive electrode 150, and reaction products are not firmly fixed solely to the negative electrode 160, imparting in some way a favorable effect on members other than the negative electrode 160, such as the positive electrode 150 and separator 170. Therefore, carrying out the initial charge in consideration of the electrochemical reaction of the lithium salt dissolved in the non-aqueous electrolyte solution is very effective.

The non-aqueous secondary battery 100 of the second embodiment can be used as a cell pack in which a plurality of non-aqueous secondary batteries 100 are connected in series or in parallel. From the viewpoint of managing the charge and discharge states of the cell pack, the operating voltage range per non-aqueous secondary battery is preferably 2 to 5 V, more preferably 2 to 4.5 V, and particularly preferably 2 V to 4 V.

The second embodiment of the present invention has been described above. However, the present invention is not limited to the above embodiment. The present invention can be modified in various ways without departing from the spirit thereof.

<III. Third embodiment>

Hereinafter, the third embodiment of the present invention will be described in detail. In the third embodiment, a non-aqueous secondary battery or the manufacturing method thereof and a secondary battery manufacturing process are provided. The non-aqueous secondary battery according to the third embodiment may comprise, but is not limited to, the configuration of the lithium-ion battery 100 shown in FIGS. 1 and 2.

<I-1. Non-aqueous electrolyte solution>

The "non-aqueous electrolyte solution" in the third embodiment refers to a non-aqueous electrolyte solution that is 1% by mass or less of water based on the total amount of the non-aqueous electrolyte solution and contains a non-aqueous solvent and $LiPF_6$. The non-aqueous electrolyte solution according to the third embodiment preferably contains as little water as possible. However, the electrolyte solution may contain a very small amount of water as long as achieving the objects of the present invention is not hindered. Such water content, as an amount per total amount of the non-aqueous electrolyte solution, is 300 mass ppm or less, and preferably 200 mass ppm or less. As long as the non-aqueous electrolyte solution has a configuration to achieve the objects of the present invention, constituent materials of known non-aqueous electrolyte solutions used in lithium-ion batteries can be appropriately selected and applied as additional components.

<III-1-1. Non-aqueous solvent>

The "non-aqueous solvent" in the third embodiment refers to an element except the lithium salt and various additives from the non-aqueous electrolyte solution. When the non-aqueous electrolyte solution in the third embodiment comprises an electrode-protecting additive, the "non-aqueous solvent" refers to an element except the lithium salt and additives other than the electrode-protecting additive from the non-aqueous electrolyte solution. Examples of non-aqueous solvents include alcohols such as methanol and ethanol; and aprotic solvents. Among these, an aprotic solvent is preferable as the non-aqueous solvent. The non-aqueous solvent may contain a solvent other than an aprotic solvent as long as achieving the objects of the present invention is not hindered.

The non-aqueous solvent according to the non-aqueous electrolyte solution of the third embodiment contains acetonitrile as an aprotic solvent. Since the ion-conducting properties of the non-aqueous electrolyte solution is improved by the non-aqueous solvent containing acetonitrile, diffusivity of lithium ions within the battery can be increased. Therefore, when the non-aqueous electrolyte solution contains acetonitrile, particularly even in a positive electrode in which the positive electrode active material layer is thickened to increase the filling amount of positive electrode active material, lithium ions can satisfactorily diffuse into regions near the current collector that are difficult for lithium ions to reach during discharge at high load. Sufficient capacity can thereby be drawn out even during high-load discharge, and a non-aqueous secondary battery having excellent load characteristics can be obtained.

By containing acetonitrile in the non-aqueous solvent, the rapid charging characteristics of the non-aqueous secondary battery can be enhanced. In constant current (CC)-constant voltage (CV) charging of a non-aqueous secondary battery, the capacity per unit time during CC charging period is larger than the charging capacity per unit time during CV charging period. When acetonitrile is used in the non-aqueous solvent of the non-aqueous electrolyte solution, in addition to increasing the region where CC charging can be carried out (lengthening CC charging time), since charging current can also be increased, the time from the start of charging to a fully charged state of the non-aqueous secondary battery can be significantly shortened.

Acetonitrile easily undergoes electrochemically reductive decomposition. Therefore, when acetonitrile is used, it is preferable that another solvent (for example, aprotic solvent other than acetonitrile) be used in combination with acetonitrile as the non-aqueous solvent and/or an electrode-protecting additive for forming a protective film on the electrode be added.

The content of acetonitrile in the non-aqueous solvent is preferably 5 to 60% by volume relative to the total amount of the non-aqueous solvent. The lower limit of the content of acetonitrile is preferably 5% by volume or greater, and even more preferably 10% by volume or greater relative to the total amount of the non-aqueous solvent. The upper limit of the content of acetonitrile is more preferably 60% by volume or less, and even more preferably 50% by volume or less relative to the total amount of the non-aqueous solvent. When the content of acetonitrile in the non-aqueous solvent is within the above range, there is a tendency that high-temperature cycle characteristics and other battery characteristics of the non-aqueous secondary battery can be further improved while maintaining excellent performance of acetonitrile.

Examples of aprotic solvents other than acetonitrile include cyclic carbonates, fluoroethylene carbonates, lactones, organic compounds comprising a sulfur atom, chain fluorinated carbonates, cyclic ethers, mononitriles other than acetonitrile, alkoxy-substituted nitriles, dinitriles, cyclic nitriles, short chain fatty acid esters, chain ethers, fluorinated ethers, ketones, and compounds in which some or all of the H atoms of the aprotic solvent are substituted with halogen atoms.

Since acetonitrile, a component of the non-aqueous solvent, easily undergoes electrochemically reductive decomposition, by adding vinylene carbonate to the non-aqueous electrolyte solution according to the third embodiment when used in a non-aqueous secondary battery, the charge-discharge amount of the battery is stabilized.

When the non-aqueous electrolyte solution according to the third embodiment in which the non-aqueous solvent comprises acetonitrile, vinylene carbonate as a cyclic carbonate, and ethylene sulfite as an organic compound comprising a sulfur atom is used in a non-aqueous secondary battery, the battery can operate at high current density.

A negative electrode protective film derived from vinylene carbonate has high resistance, and tends to lead to a decrease in performance during rapid charging and in low-temperature environment and battery swelling due to gas generation during decomposition. Ethylene sulfite has a lower lowest unoccupied molecular orbital (LUMO) level than other oxygen- and sulfur-containing compounds, can be reductively decomposed at a higher potential than vinylene carbonate to form a negative electrode protective film, and can decrease the addition amount of vinylene carbonate to solve the problem from a negative electrode protective film derived from vinylene carbonate. Further, a negative electrode protective film derived from ethylene sulfite has low resistance in a wide temperature range, and promotes the formation of a negative electrode SEI (solid electrolyte interface) that is highly durable against acetonitrile and decomposition products thereof, whereby a non-aqueous electrolyte solution and a non-aqueous secondary battery capable of operating stably at high current density can be provided.

It is preferable that the total content of vinylene carbonate and ethylene sulfite in the non-aqueous electrolyte solution of the third embodiment be 0.1% by volume or greater and less than 15% by volume relative to the total amount of the non-aqueous solvent, from the viewpoint of suppressing an increase in internal resistance.

Examples of cyclic carbonates can include ethylene carbonate, propylene carbonate, 1,2-butylene carbonate, trans-2,3-butylene carbonate, cis-2,3-butylene carbonate, 1,2-pentylene carbonate, trans-2,3-pentylene carbonate, cis-2,3-pentylene carbonate, vinylene carbonate, 4,5-dimethylvinylene carbonate, and vinyl ethylene carbonate.

Examples of fluoroethylene carbonates can include 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one.

Examples of lactones can include γ-butyrolactone, α-methyl-γ-butyrolactone, γ-valerolactone, γ-caprolactone, δ-valerolactone, δ-caprolactone, and ε-caprolactone.

Examples of organic compounds having a sulfur atom can include ethylene sulfite, propylene sulfite, butylene sulfite, pentene sulfite, sulfolane, 3-sulfolane, 3-methylsulfolane, 1,3-propanesultone, 1,4-butanesultone, 1-propane 1,3-sultone, dimethylsulfoxide, tetraethylene sulfoxide, and ethylene glycol sulfite.

Examples of chain carbonates can include ethyl methyl carbonate, dimethyl carbonate, diethyl carbonate, methyl propyl carbonate, methyl isopropyl carbonate, dipropyl carbonate, methyl butyl carbonate, dibutyl carbonate, ethyl propyl carbonate, and diisobutyl carbonate.

Examples of cyclic ethers can include tetrahydrofuran, 2-methyl tetrahydrofuran, 1,4-dioxane, and 1,3-dioxane.

Examples of mononitriles other than acetonitrile can include propionitrile, butyronitrile, valeronitrile, benzonitrile, and acrylonitrile.

Examples of alkoxy-substituted nitriles can include methoxyacetonitrile and 3-methoxypropionitrile.

Examples of dinitriles can include malononitrile, succinonitrile, glutaronitrile, adiponitrile, 1,4-dicyanoheptane, 1,5-dicyanopentane, 1,6-dicyanohexane, 1,7-dicyanoheptane, 2,6-dicyanoheptane, 1,8-dicyanooctane, 2,7-dicyanooctane, 1,9-dicyanononane, 2,8-dicyanononane, 1,10-dicyanodecane, 1,6-dicyanodecane, and 2,4-dimethylglutaronitrile.

Examples of cyclic nitriles can include benzonitrile.

Examples of short chain fatty acid esters can include methyl acetate, methyl propionate, methyl isobutyrate, methyl butyrate, methyl isovalerate, methyl valerate, methyl pivalate, methyl hydroangelate, methyl caproate, ethyl acetate, ethyl propionate, ethyl isobutyrate, ethyl butyrate, ethyl isovalerate, ethyl valerate, ethyl pivalate, ethyl hydroangelate, ethyl caproate, propyl acetate, propyl propionate, propyl isobutyrate, propyl butyrate, propyl isovalerate, propyl valerate, propyl pivalate, propyl hydroangelate, propyl caproate, isopropyl acetate, isopropyl propionate, isopropyl isobutyrate, isopropyl butyrate, isopropyl isovalerate, isopropyl valerate, isopropyl pivalate, isopropyl hydroangelate, isopropyl caproate, butyl acetate, butyl propionate, butyl isobutyrate, butyl butyrate, butyl isovalerate, butyl valerate, butyl pivalate, butyl hydroangelate, butyl caproate, isobutyl acetate, isobutyl propionate, isobutyl isobutyrate, isobutyl butyrate, isobutyl isovalerate, isobutyl valerate, isobutyl pivalate, isobutyl hydroangelate, isobutyl caproate, tert-butyl acetate, tert-butyl propionate, tert-butyl isobutyrate, tert-butyl butyrate, tert-butyl isovalerate, tert-butyl valerate, tert-butyl pivalate, tert-butyl hydroangelate, and tert-butyl caproate.

Examples of chain ethers can include dimethoxyethane, diethyl ether, 1,3-dioxolane, diglyme, triglyme, and tetraglyme.

Examples of fluorinated ethers can include $Rf^{20}$-$OR^{21}$ (wherein $Rf^{20}$ represents an alkyl group containing a fluorine atom, and $R^7$ represents a monovalent organic group optionally containing a fluorine atom).

Examples of ketones can include acetone, methyl ethyl ketone, and methyl isobutyl ketone.

Examples of compounds in which some or all of the H atoms of the aprotic solvent are substituted with halogen atoms can include compounds in which the halogen atoms are fluorine.

Examples of fluorides of chain carbonates include methyl trifluoroethyl carbonate, trifluorodimethyl carbonate, trifluorodiethyl carbonate, trifluoroethyl methyl carbonate, methyl 2,2-difluoroethyl carbonate, methyl 2,2,2-trifluoroethyl carbonate, and methyl 2,2,3,3-tetrafluoropropyl carbonate. The above fluorinated chain carbonate can be represented by the following general formula:

$$R^1\text{-O-C(O)O-}R^2$$

wherein $R^1$ and $R^2$ are at least one selected from the group consisting of $CH_3$, $CH_2CH_3$, $CH_2CH_2CH_3$, $CH(CH_3)_2$, and $CH_2Rf^3$; $Rf^3$ is an alkyl group having 1 to 3 carbon atoms in which hydrogen atoms are substituted with at least one fluorine atom; and $R^1$ and/or $R^2$ contains at least one fluorine atom.

Examples of fluorides of short chain fatty acid esters include fluorinated short chain fatty acid esters typified by 2,2-difluoroethyl acetate, 2,2,2-trifluoroethyl acetate, and 2,2,3,3-tetrafluoropropyl acetate. The fluorinated short chain fatty acid ester can be represented by the following general formula:

$$R^{10}\text{-C(O)O-}R^{11}$$

wherein $R^{10}$ is at least one selected from the group consisting of $CH_3$, $CH_2CH_3$, $CH_2CH_2CH_3$, $CH(CH_3)_2$, $CF_3CF_2H$, $CFH_2$, $CF_2Rf^{12}$, $CFHRf^{12}$, and $CH_2Rf^{13}$; $R^{11}$ is at least one selected from the group consisting of $CH_3$, $CH_2CH_3$, $CH_2CH_2CH_3$, $CH(CH_3)_2$, and $CH_2Rf^{13}$; $Rf^{12}$ is an alkyl group having 1 to 3 carbon atoms in which hydrogen atoms may be substituted with at least one fluorine atom; $Rf^{13}$ is an alkyl group having 1 to 3 carbon atoms in which hydrogen atoms are substituted with at least one fluorine atom; $R^{10}$ and/or $R^{11}$ contains at least one fluorine atom; and $R^{11}$ is not $CH_3$ when $R^{10}$ is $CF_2H$.

The aprotic solvent other than acetonitrile in the third embodiment can be used alone, or may be used in combination of two or more.

For the non-aqueous solvent in the third embodiment, it is preferable that one or more of a cyclic carbonate and a chain carbonate be used in combination with acetonitrile, from the viewpoint of improving stability of the non-aqueous electrolyte solution. From this point of view, for the non-aqueous electrolyte solvent in the third embodiment, it is more preferable that a cyclic carbonate be used in combination with acetonitrile, and it is even more preferable that both of a cyclic carbonate and a chain carbonate be used in combination with acetonitrile.

When a cyclic carbonate other than vinylene carbonate is used with acetonitrile, it is particularly preferable that the cyclic carbonate comprise ethylene carbonate and/or fluoroethylene carbonate.

<III-1-2. Electrolyte salt>

The non-aqueous electrolyte solution of the third embodiment needs only to comprise $LiPF_6$, and is not particularly limited regarding additional electrolyte salts. For example, in the third embodiment, $LiPF_6$ and a lithium-containing imide salt are contained as the lithium salt.

The lithium-containing imide salt is a lithium salt represented by $LiN(SO_2C_mF_{2m+1})_2$ (wherein m is an integer of 0 to 8), and specifically, at least one of $LiN(SO_2F)_2$ and $LiN(SO_2CF_3)_2$ is preferably included therein. Only one or both of these imide salts may be contained, or an imide salt other than these imide salts may be contained.

When acetonitrile is contained in the non-aqueous solvent, since the saturation concentration of the lithium-containing imide salt relative to acetonitrile is higher than the saturation concentration of $LiPF_6$, it is preferable that a lithium-containing imide salt be contained at a molar concentration where $LiPF_6 \leq$ lithium-containing imide salt, so that association and precipitation of the lithium salt and acetonitrile can be suppressed. In addition, it is preferable that the content of the lithium-containing imide salt be 0.5 mol or more and 3 mol or less relative to 1 L of non-aqueous solvent, from the viewpoint of ion supply amount. According to the acetonitrile-containing non-aqueous electrolyte solution comprising at least one of $LiN(SO_2F)_2$ and $LiN(SO_2CF_3)_2$, a decrease in ionic conductivity in a low-temperature region such as -10°C or -30°C can be effectively suppressed, and excellent low-temperature characteristics can be obtained. By limiting the content as such, an increase in resistance during high-temperature heating can also be more effectively suppressed.

As the lithium salt, a fluorine-containing inorganic lithium salt other than $LiPF_6$ may further be contained. For example, a fluorine-containing inorganic lithium salt such as $LiBF_4$, $LiAsF_6$, $Li_2SiF_6$, $LiSbF_6$, $Li_2B_{12}F_bH_{12-b}$ (wherein b is an integer of 0 to 3) may be contained. The "inorganic lithium salt" in the third embodiment refers to a lithium salt comprising no carbon atom in the anion and soluble in acetonitrile. The "fluorine-containing inorganic lithium salt" in the third embodiment refers to a lithium salt comprising no carbon atom in the anion, comprising a fluorine atom in the anion, and soluble in acetonitrile. A fluorine-containing inorganic lithium salt is excellent in that the salt forms a passive film on the surface of the metal foil, which is the positive electrode current collector, and suppresses corrosion of the positive electrode current collector. The fluorine-containing inorganic lithium salt is used alone or in combination of two or more. As the fluorine-containing inorganic lithium salt, compounds that are double salts of LiF and a Lewis acid are desirable, and among these, fluorine-containing inorganic salts comprising a phosphorus atom are more preferably used since the release of free fluorine atoms is facilitated. A typical fluorine-containing inorganic lithium salt is $LiPF_6$, which releases a $PF_6$ anion when dissolved. A fluorine-containing inorganic lithium salt comprising a boron atom, when used as the fluorine-containing inorganic lithium salt, facilitates trapping of excess free acid components that may cause battery deterioration, and is thus preferable. From this viewpoint, $LiBF_4$ is particularly preferable.

The content of the fluorine-containing inorganic lithium salt in the non-aqueous electrolyte solution of the third embodiment is not particularly limited, but is preferably 0.01 mol or more, more preferably 0.02 mol or more, and even more preferably 0.03 mol or more relative to 1 L of non-aqueous solvent. When the content of the fluorine-containing inorganic lithium salt is within the above range of 0.01 mol or more, there is a tendency that ionic conductivity is increased and high-output characteristics can be exhibited. The content of the fluorine-containing inorganic lithium salt is preferably less than 1.5 mol, more preferably less than 0.5 mol, and even more preferably less than 0.1 mol relative to 1 L of non-aqueous solvent. When the content of the fluorine-containing inorganic lithium salt is within the above range of less than 1.5 mol, there is a tendency that ionic conductivity is increased, high-output characteristics can be exhibited, and a decrease in ionic conductivity due to an increase in viscosity at low temperatures can be suppressed, and there is a tendency that high-temperature cycle characteristics and other battery characteristics of the non-aqueous secondary battery can be further improved while maintaining excellent performance of the non-aqueous electrolyte solution.

The non-aqueous electrolyte solution of the third embodiment may further comprise an organic lithium salt. The "organic lithium salt" in the third embodiment refers to a lithium salt comprising a carbon atom as an anion and soluble in acetonitrile.

Examples of organic lithium salts can include organic lithium salts having an oxalate group. Specific examples of organic lithium salts having an oxalate group include organic lithium salts represented by each of $LiB(C_2O_4)_2$, $LiBF_2(C_2O_4)$, $LiPF_4(C_2O_4)$, and $LiPF_2(C_2O_4)_2$. Among these, at least one lithium salt selected from lithium salts represented by $LiB(C_2O_4)_2$ and $LiBF_2(C_2O_4)$ is preferable. It is more preferable that one or more of these lithium salts be used together with a fluorine-containing inorganic lithium salt. The organic lithium salt having an oxalate group may be contained in the negative electrode (negative electrode active material layer), in addition to being added to the non-aqueous electrolyte solution.

The addition amount of the organic lithium salt having an oxalate group to the non-aqueous electrolyte solution, from the viewpoint of ensuring a more favorable effect from the use thereof, as an amount per L of non-aqueous electrolyte solution, is preferably 0.005 mol or more, more preferably 0.02 mol or more, and even more preferably 0.05 mol or more. However, there is a risk of precipitation when the amount of the above organic lithium salt having an oxalate group in the non-aqueous electrolyte solution is too large. Therefore, the addition amount of the above organic lithium salt having an oxalate group to the non-aqueous electrolyte solution, in an amount per L of non-aqueous solvent of the non-aqueous electrolyte solution, is preferably less than 1.0 mol, more preferably less than 0.5 mol, and even more preferably less than 0.2 mol.

It is known that organic lithium salts having an oxalate group are poorly soluble in low-polarity organic solvents, particularly chain carbonates. The organic lithium salt having an oxalate group may contain a trace amount of lithium oxalate, and when mixed as a non-aqueous electrolyte solution, may react with a trace amount of water contained in another raw material to newly generate a white precipitate of lithium oxalate. Therefore, the content of lithium oxalate in the non-aqueous electrolyte solution of the third embodiment, although not particularly limited, is preferably 0 to 500 ppm.

A lithium salt generally used for non-aqueous secondary batteries, in addition to those listed above, may be supplementally added as the lithium salt in the third embodiment. Specific examples of additional lithium salts include inorganic lithium salts not containing a fluorine atom in the anion, such as $LiClO_4$, $LiAlO_4$, $LiAlCl_4$, $LiB_{10}Cl_{10}$, and Li chloroborane; organic lithium salts such as $LiCF_3SO_3$, $LiCF_3CO_2$, $Li_2C_2F_4(SO_3)_2$, $LiC(CF_3SO_2)_3$, $LiC_nF_{(2n+1)}SO_3$ (wherein $n \geq 2$), lower aliphatic carboxylic acid Li, Li tetraphenylborate, and $LiB(C_3O_4H_2)_2$; organic lithium salts represented by $LiPF_n(C_pF_{2p+1})_{6-n}$, such as $LiPF_5(CF_3)$ (wherein n is an integer of 1 to 5 and p is an integer of 1 to 8); organic lithium salts represented by $LiBF_q(C_2F_{2s+1})_{4-q}$, such as $LiBF_3(CF_3)$ (wherein q is an integer of 1 to 3 and s is an integer of 1 to 8); lithium salts bonded to a polyvalent anion; and organic lithium salts represented by each of

the following formula (sa):

$$LiC(SO_2R^A)(SO_2R^B)(SO_2R^C) \qquad (sa)$$

wherein $R^A$, $R^B$, and $R^C$ may be the same as or different from each other, and represent a perfluoroalkyl group having 1 to 8 carbon atoms,
the following formula (sb):

$$LiN(SO_2OR^D)(SO_2OR^E) \qquad (sb)$$

wherein $R^D$ and $R^E$ may be the same as or different from each other, and represent a perfluoroalkyl group having 1 to 8 carbon atoms, and

$$LiN(SO_2R^F)(SO_2OR^G) \qquad (sc)$$

wherein $R^F$ and $R^G$ may be the same as or different from each other, and represent a perfluoroalkyl group having 1 to 8 carbon atoms. One or more of these lithium salts can be used together with the fluorine-containing inorganic lithium salt.

<III-1-3. Additive>

The non-aqueous electrolyte solution according to the third embodiment can comprise an additive other than the non-aqueous solvent and electrolyte salt described above.

<Vinylene carbonate>

The non-aqueous electrolyte solution of the third embodiment preferably comprises vinylene carbonate (VC). Vinylene carbonate causes a reduction reaction on the negative electrode active material surface to form a film, and thus requires an addition amount in proportion to the mass of the negative electrode active material. From the viewpoint of film formation, the vinylene carbonate concentration in the non-aqueous electrolyte solution is preferably 0.1% by volume or greater relative to the entire amount of the non-aqueous solvent. The addition of an excessive amount of vinylene carbonate may decrease the viscosity of the electrolyte solution, degrade the low-temperature characteristics, and generate excessive gas. Thus, the addition amount of vinylene carbonate is preferably 10% by volume or less, preferably 8% by volume or less, and more preferably 6% by volume or less relative to the entire amount of the non-aqueous solvent. When carrying out a multistage solution injection in the manufacturing process of the non-aqueous secondary battery, it is preferable that the VC concentration in the final composition of the non-aqueous electrolyte solution contained in the battery fall within the above range.

<Ethylene sulfite>

The non-aqueous electrolyte solution of the third embodiment comprises ethylene sulfite (ES). Ethylene sulfite decomposes at a higher potential than vinylene carbonate, and undergoes a reduction reaction on the negative electrode active material surface to form a film, and thus an addition amount corresponding to the mass of the negative electrode active material is required. From the viewpoint of film formation, the ES concentration in the non-aqueous electrolyte solution is preferably 0.01% by volume or greater relative to the entire amount of the non-aqueous solvent. Since the addition of an excessive amount of ethylene sulfite may cause excessive gas generation and impurity by-products associated with an excessive reduction reaction, the ES concentration in the non-aqueous electrolyte solution is preferably 4% by volume or less relative to the entire amount of the non-aqueous solvent. When a multistage electrolyte solution injection is carried out in the manufacturing process of the non-aqueous secondary battery, the ES concentration in the final composition of the non-aqueous electrolyte solution containing in the battery preferably falls within the above range.

<Inorganic sulfur compound>

The non-aqueous secondary battery of the third embodiment is obtained by a method comprising an electrolyte solution injection step of injecting a non-aqueous electrolyte solution at least twice into a battery outer packaging, and comprising at least one charging step after the initial electrolyte solution injection step and before the final electrolyte solution injection step, where in an electrolyte solution injection step after the initial injection step, an electrolyte solution having a higher volume ratio of acetonitrile to the entirety of the electrolyte solution than the electrolyte solution used in the initial electrolyte solution injection step is injected into the battery outer packaging, and comprises an inorganic sulfur compound comprising a sulfur atom having a valence of -2 or higher and 0 or lower, such as sulfur and copper sulfide. The sulfur referred herein, for example, may be a solid, a crystal, a semisolid, a gel, a liquid, a vapor, or a combination thereof, substantially consisting of sulfur (S) atoms, excluding unavoidable impurities. The inorganic sulfur compound is a compound having a binding energy observed in the 160 to 165 eV region in X-ray photoelectron spectroscopy (XPS) measurement. A non-aqueous secondary battery using the non-aqueous electrolyte solution can function as a battery upon the initial charge. However, if the acetonitrile concentration is high during the initial charge, defects are generated in the negative electrode film. These defects are assumed to cause excessive reductive decomposition reactions of ES to occur and the formation of the above compounds by reacting with copper ions eluted from the current collector after the reduction reactions.

These compounds have low ion-conducting properties and, when deposited in large amounts on the negative electrode, cause a decrease in output performance and a decrease in cycle life performance. Therefore, the amount of substance of the compound comprising sulfur atoms having a valence of -2 or higher and 0 or lower in the negative electrode film is preferably 3.80% or less, and more preferably 3.00% or less compared to the amount of substance of the compound comprising lithium (Li) atoms. From the viewpoint of battery stability and reduction reaction control at the negative electrode, the amount of substance of the compound comprising sulfur atoms having a valence of -2 or higher and 0 or lower in the negative electrode film is preferably 0.1% or greater compared to the amount of substance of the compound comprising Li atoms. The amount of substance referred herein, for example, may be a value based on molecular weight.

<Additional electrode-protecting additive>

An additional electrode-protecting additive is not particularly limited as long as achieving the object of the present invention is not hindered, and may substantially overlap with the substances acting as solvents for dissolving lithium salts (i.e., non-aqueous solvents described above) (however, acetonitrile and vinylene carbonate are excluded). The electrode-protecting additive is preferably a substance that contributes to performance improvement of the non-aqueous electrolyte solution and non-aqueous secondary battery of the third embodiment, but also encompasses substances not directly involved in the electrochemical reaction.

Specific examples of additional electrode-protecting additives include fluoroethylene carbonates typified by 4-fluoro-1,3-dioxolan-2-one, 4,4-difluoro-1,3-dioxolan-2-one, cis-4,5-difluoro-1,3-dioxolan-2-one, trans-4,5-difluoro-1,3-dioxolan-2-one, 4,4,5-trifluoro-1,3-dioxolan-2-one, 4,4,5,5-tetrafluoro-1,3-dioxolan-2-one, and 4,4,5-trifluoro-5-methyl-1,3-dioxolan-2-one; unsaturated bond-containing cyclic carbonates such as 4,5-dimethylvinylene carbonate and vinyl ethylene carbonate; lactones typified by $\gamma$-butyrolactone, $\gamma$-valerolactone, $\gamma$-caprolactone, $\delta$-valerolactone, $\delta$-caprolactone, and $\varepsilon$-caprolactone; cyclic ethers typified by 1,4-dioxane; cyclic sulfur compounds typified by propylene sulfite, butylene sulfite, pentene sulfite, sulfolane, 3-sulfolane, 3-methylsulfolane, 1,3-propanesultone, 1,4-butanesultone, 1-propene 1,3-sultone, and tetramethylene sulfoxide; chain acid anhydrides typified by acetic anhydride, propionic anhydride, and benzoic anhydride; cyclic acid anhydrides such as malonic anhydride, succinic anhydride, glutaric anhydride, maleic anhydride, phthalic anhydride, 1,2-cyclohexanedicarboxylic anhydride, 2,3-naphthalene dicarboxylic anhydride, and naphthalene-1,4,5,8-tetracarboxylic dianhydride; and mixed acid anhydrides having a structure in which two different carboxylic acids or different acids such as a carboxylic acid and a sulfonic acid are condensed by dehydration. These additives are used alone or in combination of two or more.

The content of the electrode-protecting additive in the non-aqueous electrolyte solution of the third embodiment is not particularly limited, but is preferably 0.1 to 30% by volume, more preferably 0.3 to 15% by volume, and even more preferably 0.5 to 4% by volume as the content of the electrolyte-protecting additive relative to the entire amount of the non-aqueous solvent.

In the third embodiment, the larger the content of the electrode-protecting additive, the more the deterioration of the non-aqueous electrolyte solution is suppressed. However, the smaller the content of the electrode-protecting additive, the more the high-output characteristics of the non-aqueous secondary battery in low-temperature environment are improved. Therefore, by adjusting the content of the electrode-protecting additive within the above range, there is a tendency that excellent performance based on high ionic conductivity of the non-aqueous electrolyte solution can be maximized without impairing the basic function of the non-aqueous secondary battery. By preparing the non-aqueous electrolyte solution with such a composition, there is a tendency that the cycle performance, high-output performance in low-temperature environment, and other battery characteristics of the non-aqueous secondary battery can all be further improved.

<Additionally optional additive>

In the third embodiment, for the purpose of improvement of charge-discharge cycle characteristics, high-temperature storage properties, and improvement of safety (for example, overcharge prevention) of the non-aqueous secondary battery, the non-aqueous electrolyte solution, for example, can appropriately contain an optional additive selected from sulfonic acid esters, diphenyl disulfide, cyclohexylbenzene, biphenyl, fluorobenzene, tert-butylbenzene, phosphoric acid esters (such as ethyl diethyl phosphonoacetate (EDPA): $(C_2H_5O)_2(P=O)\text{-}CH_2(C=O)OC_2H_5$, tris(trifluoroethyl)phosphate (TFEP): $(CF_3CH_2O)_3P=O$, triphenyl phosphate (TPP): $(C_6H_5O)_3P=O$: $(CH_2=CHCH_2O)_3P=O$, and triallyl phosphate), nitrogen-containing cyclic compounds with no steric hindrance around the long pair of electrons (such as pyridine, 1-methyl-1H-benzotriazole, and 1-methylpyrazole), and derivatives of these compounds. Particularly, phosphoric acid esters are effective in suppressing side reactions during storage.

The content of the additionally optional additive in the third embodiment is calculated as a mass percentage relative to the total mass of all components constituting the non-aqueous electrolyte solution. The content of the additionally optional additive is not particularly limited, but is preferably in the range of 0.01% by mass to 10% by mass, more preferably 0.02% by mass to 5% by mass, and even more preferably 0.05% by mass to 3% by mass relative to the total amount of the non-aqueous electrolyte solution. By adjusting the content of the additionally optional additive within the above range, there is a tendency that even more favorable battery characteristics can be applied without impairing the basic function as a non-aqueous secondary battery.

<III-2. Positive electrode and positive electrode current collector>

The positive electrode 150 shown in FIGS. 1 and 2 is composed of a positive electrode active material layer, prepared from a positive electrode mixture, and a positive electrode current collector. The positive electrode 150 needs only to act as a positive electrode of a non-aqueous secondary battery and is not particularly limited, and may be any known positive electrode. The positive electrode in the third embodiment preferably contains a lithium-containing compound comprising Fe, and more preferably also contains nickel (Ni) in a relatively high ratio.

It is preferable that the positive electrode active material layer contain a positive electrode active material and further contain a conductive aid and a binder, as needed.

The positive electrode active material layer preferably contains a material capable of occluding and releasing lithium ions as a positive electrode active material. It is preferable that such a material be used since there is a tendency that high voltage and high energy density can be obtained.

The positive electrode active material is suitably at least one lithium-containing compound having an olivine structure, represented by the following general formula (1):

$$Li_wMPO_4 \cdots \quad (1)$$

wherein M represents at least one transition metal element; and the value of w is determined by the charge and discharge states of the battery and is a number of 0 to 1.2, or

at least one lithium (Li)-containing metal oxide selected from Li-containing metal oxides containing at least one transition metal element selected from the group consisting of, for example, Ni, Mn, and Co, represented by the following general formula (2):

$$Li_pNi_qCo_rMn_sM_tO_u \cdots \quad (2)$$

wherein M is at least one metal selected from the group consisting of aluminum (Al), tin (Sn), indium (In), iron (Fe), vanadium (V), copper (Cu), magnesium (Mg), titanium (Ti), zinc (Zn), molybdenum (Mo), zirconium (Zr), strontium (Sr), and barium (Ba); $0 < p < 1.3$; $0 < q < 1.2$; $0 < r < 1.2$; $0 \leq s < 0.5$; $0 \leq t < 0.3$; $0.7 \leq q + r + s + t \leq 1.2$; $1.8 < u < 2.2$; and p is a value determined by the charge and discharge states of the battery. The lithium-containing compound represented by the general formula (1) is preferably a metal phosphate compound comprising lithium and a transition metal element. The value of w in the formula (1) is determined by the charge and discharge states of the battery, and is preferably a number of 0.05 to 1.10.

Specific examples of the positive electrode active material include Li compounds such as $Li_wFePO_4$, and lithium cobalt oxides typified by $LiCoO_2$; lithium manganese oxides typified by $LiMnO_2$, $LiMn_2O_4$, and $Li_2Mn_2O_4$; lithium nickel oxides typified by $LiNiO_2$; and lithium-containing composite metal oxides represented by $Li_zMO_2$ (wherein M includes at least one transition metal element selected from the group consisting of Ni, Mn, and Co and represents two or more metal elements selected from the group consisting of Ni, Mn, Co, Al, and Mg, and z represents a number greater than 0.9 and less than 1.2) typified by $LiNi_{1/3}Co_{1/3}Mn_{1/3}O_2$, $LiNi_{0.5}Co_{0.2}Mn_{0.3}O_2$, and $LiNi_{0.8}Co_{0.2}O_2$.

Particularly, it is preferable that the Ni content ratio q of the Li-containing metal oxide represented by the general formula (2) be $0.5 < q < 1.2$, since a decrease in use amount of the rare metal Co and a high energy density are both achieved. Examples of such positive electrode active materials include lithium-containing composite metal oxides typified by $LiNi_{0.6}Co_{0.2}Mn_{0.2}O_2$, $LiNi_{0.75}Co_{0.15}Mn_{0.15}O_2$, $LiNi_{0.8}Co_{0.1}Mn_{0.1}O_2$, $LiNi_{0.85}Co_{0.075}Mn_{0.075}O_2$, $LiNi_{0.8}Co_{0.15}Al_{0.05}O_2$, $LiNi_{0.81}Co_{0.1}Al_{0.09}O_2$, and $LiNi_{0.85}Co_{0.1}Al_{0.05}O_2$.

The higher the Ni content ratio in the positive electrode active material layer, the more the deterioration tends to proceed at low voltage. Active sites that oxidize and deteriorate the non-aqueous electrolyte solution are intrinsic in the positive electrode active material of the Li-containing metal oxide represented by the general formula (2), and these active sites may unintentionally consume the compounds added to protect the negative electrode on the positive electrode side. Among such compounds, acid anhydrides tend to be easily affected. Particularly, the effect of adding an acid anhydride is enormous when acetonitrile is contained as the non-aqueous solvent, and thus the consumption of the acid anhydride on the positive electrode side is a fatal problem.

The decomposition products of these additives that are incorporated and deposited on the positive electrode side not only increase the internal resistance of the non-aqueous secondary battery, but also accelerate the deterioration of the lithium salt. The protection of the negative electrode surface, which was the original purpose, is also insufficient. In order to deactivate the active sites that inherently cause the non-aqueous electrolyte solution to oxidize and deteriorate, controlling the Jahn-teller distortions or coexisting with a component acting as a neutralizer is important. Therefore, the positive electrode active material preferably contains at least one metal selected from the group consisting of Al, Sn, In, Fe, V, Cu, Mg, Ti, Zn, Mo, Zr, Sr, and Ba.

For the same reason, the surface of the positive electrode active material is preferably coated with a compound containing at least one metal element selected from the group consisting of Zr, Ti, Al, and Nb. Further, the surface of the positive electrode active material is more preferably coated with an oxide containing at least one metal element selected from the group consisting of Zr, Ti, Al, and Nb. Furthermore, the surface of the positive electrode active material is particularly preferably coated with at least one oxide selected from the group consisting of $ZrO_2$, $TiO_2$, $Al_2O_3$, $NbO_3$, and $LiNbO_2$, since the permeation of lithium ions is not inhibited.

The positive electrode active material may be a lithium-containing compound other than the Li-containing metal oxides represented by the general formulas (1) and (2), and is not particularly limited as long as lithium is contained. Examples of such lithium-containing compounds include composite oxides comprising lithium and a transition metal element, metal chalcogenides comprising lithium, and metal silicate compounds comprising lithium and a transition metal element. From the viewpoint of obtaining a higher voltage, the lithium-containing compound is preferably a metal phosphate compound comprising, in particular, lithium and at least one transition metal element selected from the group consisting of Co, Ni, Mn, Fe, Cu, Zn, Cr, V, and Ti.

More specific examples of lithium-containing compounds include compounds represented by each of the following formula (Xa):

$$Li_v M^I D_2 \cdots \qquad (Xa)$$

wherein D represents a chalcogen element; $M^I$ represents at least one transition metal element; and
the value of v is determined by the charge and discharge states of the battery and is a number of 0.05 to 1.10, and the following formula (Xb):

$$Li_t M^{II}_u SiO_4 \cdots \qquad (Xb)$$

wherein $M^{II}$ represents at least one transition metal element; the value of t is determined by the charge and discharge states of the battery and is a number of 0.05 to 1.10; and u represents a number of 0 to 2.

The lithium-containing compounds represented by the above formula (Xa) have a layered structure, and the compounds represented by the formula (1) and the above formula (Xb) have an olivine structure. These lithium-containing compounds may be compounds in which a portion of the transition metal element is substituted with Al, Mg, or another transition metal element, compounds in which such a metal element is contained in the crystal grain boundaries, compounds in which a portion of oxygen atoms is substituted with fluorine atoms, or compounds in which at least a portion of the positive electrode active material surface is coated with another positive electrode active material, for the purpose of stabilizing the structure.

As the positive electrode active material in the third embodiment, a lithium-containing compound as described above only may be used, or the lithium-containing compound may be used in combination with another positive electrode active material.

Examples of such additional positive electrode active materials include metal oxides and metal chalcogenides having a tunnel structure and a layered structure; sulfur; and conductive polymers. Examples of metal oxides and metal chalcogenides having a tunnel structure and a layered structure include oxides, sulfides, and selenides of metals other than lithium, such as $MnO_2$, $FeO_2$, $FeS_2$, $V_2O_5$, $V_6O_{13}$, $TiO_2$, $TiS_2$, $MoS_2$, and $NbSe_2$. Examples of conductive polymers include conductive polymers typified by polyaniline, polythiophene, polyacetylene, and polypyrrole.

The additional positive electrode active material described above is used alone or in combination of two or more, and is not particularly limited. However, it is preferable that the positive electrode active material layer contain at least one transition metal element selected from Ni, Mn, and Co, since lithium ions can be reversibly and stably occluded and released and high energy density can be achieved.

When the lithium-containing compound and the additional positive electrode active material are used in combination as the positive electrode active material, the use ratio of the two components, as a use ratio of the lithium-containing compound relative to the entirety of the positive electrode active material, is preferably 80% by mass or greater, and more preferably 85% by mass or greater.

Examples of conductive aids include graphite; carbon black typified by acetylene black and Ketjen black; and carbon fiber. The content ratio of the conductive aid is preferably 10 parts by mass or less, and more preferably 1 to 5 parts by mass relative to 100 parts by mass of the negative electrode active material.

Examples of binders include polyvinylidene fluoride (PVDF), polytetrafluoroethylene (PTFE), polyacrylic acid, styrene-butadiene rubber, and fluororubber. The content ratio of the binder is preferably 10 parts by mass or less, and more preferably 0.5 to 8 parts by mass relative to 100 parts by mass of the positive electrode active material.

The positive electrode active material layer is formed by applying a positive electrode mixture-containing slurry in which a positive electrode mixture comprising a positive electrode active material, mixed with a conductive aid and a binder as needed, is dispersed in a solvent to a positive electrode current collector and drying (removing solvent), and pressing as needed. Such a solvent is not particularly limited, and any conventionally known solvent can be used. Examples include N-methyl-2-pyrrolidone, dimethylformamide, dimethylacetoamide, and water.

The positive electrode current collector, for example, is composed of a metal foil such as an aluminum foil, a nickel foil, or a stainless-steel foil. The positive electrode current collector may be subjected to carbon coating on the surface, or may be processed into a mesh form. The thickness of the positive electrode current collector is preferably 5 to 40 $\mu$m, more preferably 7 to 35 $\mu$m, and even more preferably 9 to 30 $\mu$m.

<III-3. Negative electrode and negative electrode current collector>

The negative electrode 160 shown in FIGS. 1 and 2 is composed of a negative electrode active material layer, prepared from a negative electrode mixture, and a negative electrode current collector. The negative electrode 160 can act as a negative electrode of a non-aqueous secondary battery.

It is preferable that the negative electrode active material layer contain a negative electrode active material and further contain a conductive aid and a binder, as needed.

Examples of negative electrode active materials include, in addition to carbon materials typified by amorphous carbon (hard carbon), graphite (for example, artificial graphite and natural graphite), pyrolytic carbon, coke, glassy carbon, baked bodies of organic polymer compounds, mesocarbon microbeads, carbon fiber, activated carbon, carbon colloids, and carbon black, metallic lithium, metal oxides, metal nitrides, lithium alloys, tin alloys, silicon alloys, intermetallic compounds, organic compounds, inorganic compounds, metal complexes, and organic polymer compounds. The negative electrode active material is used alone or in combination of two or more.

From the viewpoint of increasing battery voltage, the negative electrode active material layer preferably contains a material, as the negative electrode active material, capable of absorbing lithium ions at a potential lower than 0.4 V vs. $Li/Li^+$.

Examples of conductive aids include graphite; carbon black typified by acetylene black and Ketjen black; and carbon fiber. The content ratio of the conductive aid is preferably 20 parts by mass or less, and more preferably 0.1 to 10 parts by mass relative to 100 parts by mass of the negative electrode active material.

Examples of binders include carboxymethyl cellulose, PVDF, PTFE, polyacrylic acid, and fluororubber, and also include diene-based rubbers, for example, styrene-butadiene rubber. The content ratio of the binder is preferably 10 parts by mass or more, and more preferably 0.5 to 8 parts by mass relative to 100 parts by mass of the negative electrode active material.

The negative electrode active material layer is formed by applying a negative electrode mixture-containing slurry in which a negative electrode mixture comprising a negative electrode active material, mixed with a conductive aid and a binder as needed, is dispersed in a solvent to a negative electrode current collector and drying (removing solvent), and pressing as needed. Such a solvent is not particularly limited, and any conventionally known solvent can be used. Examples include N-methyl-2-pyrrolidone, dimethylformamide, dimethylacetoamide, and water.

The negative electrode current collector, for example, is composed of a metal foil such as a copper foil, a nickel foil, or a stainless-steel foil. The negative electrode current collector may be subjected to carbon coating on the surface, or may be processed into a mesh form. The thickness of the negative electrode current collector is preferably 5 to 40 $\mu$m, more preferably 6 to 35 $\mu$m, and even more preferably 7 to 30 $\mu$m.

<III-4. Separator>

As shown in FIG. 2, the non-aqueous secondary battery 100 of the third embodiment, from the viewpoint of imparting safety such as short-circuit prevention between the positive electrode 150 and the negative electrode 160 and shutdown, preferably comprises a separator 170 between the positive electrode 150 and the negative electrode 160. The separator 170 may be, but is not limited to, the same ones that known non-aqueous secondary batteries comprise, has a large ion permeability, and is preferably a thin film having insulating properties and excellent mechanical strength. Examples of the separator 170 include woven fabrics, nonwoven fabrics, and synthetic resin microporous films. Among these, synthetic resin microporous films are preferable.

As synthetic resin microporous films, for example, polyolefin-based microporous films such as microporous films containing polyethylene or polypropylene as the main component or microporous films containing both of these polyolefins are suitably used. Examples of nonwoven fabrics include porous films made of heat-resistant resins such as glass, ceramic, polyolefin, polyester, polyamide, liquid crystal polyester, and aramid.

The separator 170 may be in a configuration having one type of microporous film in a single layer or laminated in a plurality of layers, or may be in a configuration having two or more types of microporous films laminated. The separator 170 may be configured to have a single layer or a plurality of layers laminated using a mixed resin material obtained by melting and kneading two or more resin materials.

For the purpose of imparting functionality, inorganic particles may be present on the surface of or inside the separator, and an additional organic layer may be further applied or layered thereon. In addition, a crosslinked structure may be included. In order to enhance safety performance of the non-aqueous secondary battery, these methods may be combined as needed.

By using such a separator 170, particularly, satisfactory input-output characteristics and low self-discharge characteristics required of lithium-ion batteries for the above high-output applications can be realized.

The thickness of a microporous film that can be used as a separator is not particularly limited, and is preferably 1 $\mu$m or more from the viewpoint of film strength, and is preferably 500 $\mu$m or less from the viewpoint of permeability. The thickness of the microporous film, from the viewpoint of being used in high-output applications such as safety tests, where the calorific value is relatively high and self-discharge characteristics better than those in the prior art are required, and from the viewpoint of windability with a large battery winding machine, is preferably 5 $\mu$m or more and 30 $\mu$m or less, and more preferably 10 $\mu$m or more and 25 $\mu$m or less. The thickness of the microporous film, when short-circuit resistance performance and output performance are both emphasized, is even more preferably 15 $\mu$m or more and 25 $\mu$m or less, and when high energy density and output performance are both emphasized, is even more preferably 10 $\mu$m or more and less than 15 $\mu$m.

The porosity of a microporous film that can be used as a separator, from the viewpoint of following the rapid movement of lithium ions at high output, is preferably 30% or greater and 90% or less, more preferably 35% or greater and 80% or less, and even more preferably 40% or greater and 70% or less. The porosity of the microporous film, when the improvement of output performance is considered a priority while ensuring safety, is particularly preferably 50% or greater and 70% or less, and when short-circuit resistance performance and output performance are both emphasized, is particularly preferably 40% or greater and less than 50%.

The air permeability of a microporous film that can be used as a separator, from the viewpoint of a balance between film thickness and porosity, is preferably 1 s/100 cm$^3$ or more and 400 s/100 cm$^3$ or less, and is more preferably 100 s/100 cm$^3$ or more and 350 s/100 cm$^3$ or less. The air permeability of the microporous film, when short-circuit resistance performance and output performance are both emphasized, is particularly preferably 150 s/100 cm$^3$ or more

and 350 s/100 cm$^3$ or less, and when the improvement of output performance is considered a priority while ensuring safety, is particularly preferably 100 s/100 cm$^3$ or more and less than 150 s/100 cm$^3$. However, when a non-aqueous electrolyte solution having low ionic conductivity is combined with a separator having the air permeability and porosity within the above ranges, there is a tendency that the movement speed of lithium ions is limited not by the structure of the separator but by the level of ionic conductivity of the non-aqueous electrolyte solution, and the expected input-output characteristics are not obtained. Therefore, the ionic conductivity of the non-aqueous electrolyte solution is preferably 10 mS/cm or more, more preferably 15 mS/cm or more, and even more preferably 20 mS/cm or more. However, the film thickness, air permeability and porosity of the separator and the ionic conductivity of the non-aqueous electrolyte solution are not limited to the above examples.

<III-5. Battery outer packaging>

As shown in FIGS. 1 and 2, the configuration of the battery outer packaging 110 of the non-aqueous secondary battery 100 is not particularly limited. For example, either a battery can or a laminate film outer packaging can be used. As the battery can, for example, a metal can, such as square-type, prism-type, cylinder-type, oval-type, flat-type, coin-type, or button-type, composed of steel, stainless steel, aluminum, or clad material can be used. As the laminate film outer packaging, for example, a laminate film composed of a three-layer configuration of hot melt resin/metal film/resin can be used.

The laminate film outer packaging can be used as an outer packaging by stacking two sheets with the hot melt resin side facing inward or by folding one so that the hot melt resin side faces inward and then sealing the edge portions with heat sealing. When a laminate film outer packaging is used, a positive electrode lead body 130 (or a positive electrode terminal and a lead tab connected to the positive electrode terminal) may be connected to the positive electrode current collector, and a negative electrode lead body 140 (or a negative electrode terminal and a lead tab connected to the negative electrode terminal) may be connected to the negative electrode current collector. In this case, the laminate film outer packaging may be sealed with the edge portions of the positive electrode lead body 130 and the negative electrode lead body 140 (or lead tabs connected to the positive electrode terminal and the negative electrode terminal, respectively) pulled to the outside of the outer packaging.

<III-6. Manufacturing method of battery>

The non-aqueous secondary battery 100 of the third embodiment may be manufactured using the above non-aqueous electrolyte solution, a positive electrode 150 having a positive electrode active material layer on one side or both sides of a current collector, a negative electrode 160 having a negative electrode active material layer on one side or both sides of a current collector, a battery outer packaging 110, and if necessary, a separator 170. The manufacturing method of the non-aqueous secondary battery according to the third embodiment comprises an electrolyte solution injection step of injecting a non-aqueous electrolyte solution into a battery outer packaging at least twice (hereinafter, sometimes referred to as "two-stage solution injection"), and comprises at least one charging step after an initial electrolyte solution injection step and before a final electrolyte solution injection step, where in an electrolyte solution injection step after the initial electrolyte solution injection step, an electrolyte solution having a higher volume ratio of acetonitrile relative to an entirety of the electrolyte solution than an electrolyte solution used in the initial electrolyte solution injection step can be injected.

A laminated body consisting of a positive electrode 150, a negative electrode 160, and if necessary, a separator 170 is first formed. The laminated body can be, for example:

an aspect in which a long positive electrode 150 and a long negative electrode 160 are wound in a layered state with a corresponding long separator interposed between the positive electrode 150 and the negative electrode 160 to form a laminated body having a wound structure;
an aspect in which a laminated body having a layered structure in which positive electrode sheets and negative electrode sheets, obtained by cutting the positive electrode 150 and the negative electrode 160 into a plurality of sheets having a certain area and shape, are alternately layered with separator sheets interposed therebetween is formed; and
an aspect in which a laminated body having a layered structure in which a long separator is folded in a zigzag manner, and positive electrode sheets and negative electrode sheets are alternately inserted between the zigzag-folded separator is formed.

The above laminated body is then housed within a battery outer packaging 110 (battery case), the non-aqueous electrolyte solution according to the third embodiment is injected into the inside of the battery case, and the laminated body is immersed in the non-aqueous electrolyte solution and sealed, whereby a non-aqueous secondary battery of the third embodiment may be produced.

Alternatively, an electrolyte film in gel form can be produced in advance by impregnating a substrate consisting of a polymer material with the electrolyte solution, and a laminated body having a layered structure is formed using a positive electrode 150, a negative electrode 160, the electrolyte film, each in sheet form, and if necessary, a separator 170 and then housed within a battery outer packaging 110 to manufacture a non-aqueous secondary battery 100.

When the arrangement of the electrodes is designed so that there is a portion where an outer peripheral edge of the negative electrode active material layer overlaps with an outer peripheral edge of the positive electrode active material layer or so that there is a location where the width in non-opposing portions of the negative electrode active material layer is too small, there is a risk that the charge-discharge cycle characteristics of the non-aqueous secondary battery deteriorate due to misalignment of the electrodes during battery assembly. Thus, it is preferable that the positions of the electrodes be fixed in advance with tape such as polyimide tape, polyphenylene sulfide tape, or polypropylene (PP) tape or adhesive when using the electrode structures in the non-aqueous secondary battery.

In the third embodiment, when the non-aqueous electrolyte solution using acetonitrile is used, due to the high ion-conducting properties thereof, there is a possibility that lithium ions released from the positive electrode during the initial charge of the non-aqueous secondary battery disperse to the entire negative electrode. In non-aqueous secondary batteries, the negative electrode active material layer generally has a larger area than the positive electrode active material layer. However, when lithium ions are diffused and occluded to a location of the negative electrode active material layer not facing the positive electrode active material layer, the lithium ions remain in the negative electrode without being released during the initial discharge. Therefore, the contributing portion of unreleased lithium ions becomes irreversible capacity. For this reason, a non-aqueous secondary battery using a non-aqueous electrolyte solution containing acetonitrile may have low initial charge-discharge efficiency.

When the area of the positive electrode active material layer is larger than that of the negative electrode active material layer, or when both are the same, the concentration of current in the edge portions of the negative electrode active material layer during charging easily occurs, and lithium dendrites are easily generated.

For the above reason, the ratio of the area of the entire negative electrode active material layer to the area of the portion where the positive electrode active material layer and the negative electrode active material layer face each other is not particularly limited, but is preferably greater than 1.0 and less than 1.1, more preferably greater than 1.002 and less than 1.09, even more preferably greater than 1.005 and less than 1.08, and particularly preferably greater than 1.01 and less than 1.08. In a non-aqueous secondary battery using a non-aqueous electrolyte solution comprising acetonitrile, by decreasing the ratio of the area of the entire negative electrode active material layer to the area of the portion where the positive electrode active material layer and the negative electrode active material layer face each other, the initial charge-discharge efficiency can be improved.

Decreasing the ratio of the area of the entire negative electrode active material layer to the area of the portion where the positive electrode active material layer and the negative electrode active material layer face each other means limiting the ratio of the area of the negative electrode active material layer not facing the positive electrode active material layer. Consequently, of the lithium ions released from the positive electrode during the initial charge, the amount of lithium ions occluded in the portion of the negative electrode active material layer not facing the positive electrode active material layer (i.e., amount of lithium ions that are not released from the negative electrode during the initial discharge and become irreversible capacity) can be decreased as much as possible. Thus, by designing the ratio of the area of the entire negative electrode active material layer to the area of the portion where the positive electrode active material layer and the negative electrode active material layer face each other within the above range, initial charge-discharge efficiency of the battery can be enhanced and generation of lithium dendrites can be further suppressed, while aiming to improve load characteristics of the battery by using acetonitrile.

The non-aqueous secondary battery 100 of the third embodiment can function as a battery upon the initial charge, and is stabilized by partially decomposing the non-aqueous electrolyte solution during the initial charge. The method of the initial charge is not particularly limited. However, the initial charge is preferably carried out at 0.001 to 0.3 C, more preferably 0.002 to 0.25 C, and even more preferably 0.003 to 0.2 C. An initial charge carried out via constant voltage partway along charging is preferable. By setting a long voltage range in which the lithium salt is involved in the electrochemical reaction, a stable and strong SEI is formed on the surface of the electrode (negative electrode 160), which has an effect of suppressing an increase in internal resistance, and reaction products are not firmly fixed solely to the negative electrode 160, imparting in some way a favorable effect on members other than the negative electrode 160, such as the positive electrode 150 and separator 170. Therefore, carrying out the initial charge in consideration of the electrochemical reaction of the lithium salt dissolved in the non-aqueous electrolyte solution is very effective. It should be noted that the initial discharge is not particularly limited, but is preferably carried out at 0.002 C to 1.0 C.

The non-aqueous secondary battery 100 of the third embodiment may be subjected to initial charge and aging treatment under reduced pressure for the purpose of impregnating the separator and electrodes with the electrolyte solution and removing gas present within the cell. The temperature under reduced pressure, from the viewpoint of electrolyte solution impregnation, is preferably 15°C or higher, more preferably 20°C or higher, and even more preferably 25°C or higher. For the reduced pressure level, from the viewpoint of electrolyte solution impregnation and gas removal, the reduced pressure level is preferably 900 hPa or less, and more preferably 800 hPa or less. When manufacturing under such reduced pressure conditions, volatilization of electrolyte solution can generally be a problem. However, by applying the two-stage solution injection in the third embodiment of the present invention, the volatilization amount of the electrolyte solution can be decreased, and therefore the manufacturing problem can be solved.

The non-aqueous secondary battery 100 of the third embodiment can be used as a battery pack in which a plurality of the non-aqueous secondary batteries 100 are connected in series or in parallel. From the viewpoint of managing the charge and discharge states of the battery pack, it is preferable that the operating voltage range per battery be 2 to 5 V.

The manufacturing process of the non-aqueous secondary battery 100 of the third embodiment may comprise an electrolyte solution injection step of injecting a non-aqueous electrolyte solution two or more times into a battery outer packaging. When the process comprises a plurality of electrolyte solution injection steps, there is at least one charging step after the initial electrolyte solution injection step and before the final electrolyte solution injection step, and the composition of the electrolyte solution injected in each of the electrolyte solution injection steps may vary.

From the viewpoint of negative electrode film formation, the electrolyte solution used in the initial electrolyte solution injection step (hereinafter, sometimes referred to as "initial injection electrolyte solution") preferably contains a higher concentration of VC and ES than the electrolyte solution used in an electrolyte solution injection step after the initial injection step. From the same viewpoint, the initial injection electrolyte solution preferably contains 0.1% by volume or greater of VC, more preferably contains 2% by volume or greater, and even more preferably contains 4% by volume or greater. The initial injection electrode solution preferably contains 0.1% by volume or greater of ES, and more preferably contains 2% by volume or greater.

From the viewpoint of decreasing volatilization of the electrolyte solution, the electrolyte solution used in an electrolyte solution injection step after the initial injection step preferably contains a higher concentration of acetonitrile (AcN) than the initial injection electrolyte solution, and more preferably has a higher volume ratio of AcN relative to the entirety of the electrolyte solution than the initial injection electrolyte solution. From the same viewpoint, the initial injection electrolyte solution preferably contains 50% by volume or less of AcN, more preferably 35% by volume or less, and even more preferably 20% by volume or less. From the viewpoint of improving ionic conductivity of the electrolyte solution, the electrolyte solution used in an electrolyte solution injection step after the initial injection step preferably contains 20% by volume or greater of AcN, more preferably contains 35% by volume or greater, and even more preferably contains 50% by volume or greater. The electrolyte solution used in an electrolyte solution injection step after the initial injection step, for example, may contain 100% by volume or less of AcN.

The third embodiment of the present invention has been described above. However, the present invention is not limited to the above embodiment. The present invention can be modified in various ways without departing from the spirit thereof.

EXAMPLES

Hereinafter, the present invention will be further described in detail by the Examples. The present invention is not limited to these Examples.

<Examples according to first embodiment, Comparative Examples, and Reference Example>

(1) Preparation of non-aqueous electrolyte solution

Non-aqueous electrolyte solutions (1-S1) to (1-S20) were prepared by mixing various non-aqueous solvents and various additives in an inert atmosphere so that each thereof had a predetermined concentration and further adding various lithium salts so that each had a predetermined molar concentration (M). The abbreviations for the non-aqueous solvents, lithium salts, and additives in Table 1-1 have the following meanings.

(Lithium salt)

LiFSI: lithium bis(fluorosulfonyl)imide
$LiPF_6$: lithium hexafluorophosphate

(Non-aqueous solvent)

AcN: acetonitrile
EMC: ethyl methyl carbonate
EC: ethylene carbonate
ES: ethylene sulfite

[Table 1-1]

| Electrolyte solution number | Li salt | Electrolyte solution composition (volume ratio) |
|---|---|---|
| 1-S1 | LiFSI 1M + LiPF$_6$ 0.3M | 35AcN/41EMC/20EC/4ES |
| 1-S2 | LiFSI 1M + LiPF$_6$ 0.3M | 20AcN/56EMC/20EC/4ES |
| 1-S3 | LiFSI 1M + LiPF$_6$ 0.3M | 5 AcN/71EMC/20EC/4ES |
| 1-S4 | LiFSI 1M + LiPF$_6$ 0.3M | 47AcN/29.2EMC/20EC/3.8ES |
| 1-S5 | LiFSI 1M + LiPF$_6$ 0.3M | 60AcN/16.2EMC/20EC/3.8ES |
| 1-S6 | LiFSI 1M + LiPF$_6$ 0.3M | 10AcN/66EMC/20EC/4ES |
| 1-S7 | LiFSI 1M + LiPF$_6$ 0.3M | 8AcN/68.2EMC/20EC/3.8ES |
| 1-S8 | LiFSI 1M + LiPF$_6$ 0.3M | 16AcN/64EMC/20EC |
| 1-S9 | LiFSI 1M + LiPF$_6$ 0.3M | 16AcN/61.9EMC/19.4EC/2.7ES |
| 1-S10 | LiFSI 0.6M + LiPF$_6$ 0.7M | 17AcN/59EMC/20EC/4ES |
| 1-S11 | LiFSI 1M + LiPF$_6$ 0.3M | 20AcN/57EMC/20EC/3ES |
| 1-S12 | LiFSI 1M + LiPF$_6$ 0.3M | 20AcN/56.2EMC/20EC/3.8ES |
| 1-S13 | LiFSI 0.6M + LiPF$_6$ 0.7M | 25AcN/51EMC/20EC/4ES |
| 1-S14 | LiFSI 1M + LiPF$_6$ 0.3M | 29AcN/47EMC/20EC/4ES |
| 1-S15 | LiFSI 1M + LiPF$_6$ 0.3M | 30AcN/50EMC/20EC |
| 1-S16 | LiFSI 1M + LiPF$_6$ 0.3M | 30AcN/48.1EMC/19.2EC/2.7ES |
| 1-S17 | LiFSI 1M + LiPF$_6$ 0.3M | 35AcN/41.2EMC/20EC/3.8ES |
| 1-S18 | LiFSI 1M + LiPF$_6$ 0.3M | 42AcN/34.2EMC/20EC/3.8ES |
| 1-S19 | LiFSI 1M + LiPF$_6$ 0.3M | 45AcN/35EMC/20EC |
| 1-S20 | LiPF$_6$ 1.1M | 80EMC/20EC |

(2) Production of non-aqueous secondary battery

(2-1) Production of positive electrode

LiFePO$_4$ as (A) a positive electrode active material, acetylene black powder as (B) a conductive aid, and polyvinylidene fluoride (PVDF) and/or carbon nanotubes (CNT) as (C) a binder were mixed in the specific mass ratio shown in Table 1-2 to obtain a positive electrode mixture.

N-methyl-2-pyrrolidone was added as a solvent to the obtained positive electrode mixture and further mixed to prepare a positive electrode mixture-containing slurry. The positive electrode mixture-containing slurry, while adjusting the basis weight thereof, was applied to one side or both sides of an aluminum foil having a thickness of 15 μm acting as a positive electrode current collector, and the solvent was removed by drying in a hot-air drying furnace, followed by rolling with a roll press so that the density of the positive electrode active material layer was 1.9 g/cm$^3$, to obtain a positive electrode (1-C1 to C3) consisting of a positive electrode active material layer and a positive electrode current collector corresponding to each of the positive electrode mixture compositions of 1-C1 to C3 in Table 1-2. In addition, the positive electrode mixture-containing slurry, while adjusting the basis weight thereof, was applied to one side or both sides of an aluminum foil acting as a positive electrode current collector, and the solvent was removed by drying in a hot-air drying furnace, followed by rolling with a roll press so that the density of the positive electrode active material layer was 2.2 g/cm$^3$, to obtain a positive electrode (1-C4, 1-C5) consisting of a positive electrode active material layer and a positive electrode current collector corresponding to each of the positive electrode mixture compositions of 1-C4 and 1-C5 in Table 1-2. Leads were welded to the positive electrodes 1-C3 to -C5. Vacuum drying was then carried out at 120°C for 12 h or more to obtain a positive electrode. The basis weight of each positive electrode excluding the positive electrode current collector is shown in Table 1-2.

(2-2) Production of negative electrode

Graphite as (a) a negative electrode active material, (b) a conductive aid, and (c) a binder were mixed in the mass ratio shown in Table 1-2 to obtain a negative electrode mixture.

Water was added as a solvent to the obtained negative electrode mixture and further mixed to prepare a negative electrode mixture-containing slurry. The slurry was applied to one side or both sides of a copper foil having a thickness of 10 $\mu$m acting as a negative electrode current collector, and the solvent was removed by drying in a hot-air drying furnace, followed by rolling with a roll press so that the density of the negative electrode active material layer was 1.4 g/cm$^3$, to obtain a negative electrode (1-A1 to A3) consisting of a negative electrode active material layer and a negative electrode current collector. In addition, the negative electrode mixture-containing slurry was applied to one side or both sides of a copper foil having a thickness of 10 $\mu$m acting as a negative electrode current collector, and the solvent was removed by drying in a hot-air drying furnace, followed by rolling with a roll press so that the density of the negative electrode active material layer was 1.6 g/cm$^3$, to obtain a negative electrode (1-A4, 1-A5) consisting of a negative electrode active material layer and a negative electrode current collector corresponding to each of the negative electrode mixtures of 1-A4 and 1-A5 in Table 1-2. Leads were welded to the negative electrodes 1-A3 to -A5. Vacuum drying was then carried out at 80°C for 12 h or more to obtain a negative electrode. The basis weights of the negative electrode active material layers are shown in Table 1-2.

Of the binder types in Table 1-2 below, PVDF is polyvinyl vinylidene fluoride, CMC is carboxymethyl cellulose, and SBR is styrene butadiene rubber.

[Table 1-2]

| Electrode | Active material (% by mass) | Acetylene black (% by mass) | Binder type | Binder (% by mass) | Basis weight (mg/cm$^2$) |
|---|---|---|---|---|---|
| 1-C1 | 89 | 3 | PVDF | 8 | 11.0 |
| 1-C2 | 89 | 3 | PVDF | 8 | 22.7 |
| 1-C3 | 87 | 8 | PVDF | 5 | 20.7 |
| 1-C4 | 94 | 2 | CNT + PVDF | 1 + 3 | 9.88 |
| 1-C5 | 94 | 2 | CNT + PVDF | 1 + 3 | 19.86 |
| 1-A1 | 90 | 3 | PVDF | 7 | 5.4 |
| 1-A2 | 91 | 1 | PVDF | 8 | 11.4 |
| 1-A3 | 97.4 | 0 | CMC + SBR | 1.1 + 1.5 | 8.8 |
| 1-A4 | 97 | 0 | CMC + SBR | 1 + 2 | 5.1 |
| 1-A5 | 97 | 0 | CMC + SBR | 1 + 2 | 10.3 |

(2-3) Assembly of non-aqueous secondary battery (coin-type)

In a nitrogen glove box at a dew point temperature of -60 to -20°C, a polypropylene gasket was set in a CR2032-type battery case (SUS304/Al clad), and in the center thereof, the positive electrode (1-C1, 1-C2) obtained as described above that was punched out into a disk shape having a diameter of 15.958 mm was set with the positive electrode active material layer facing upward. On top thereof, glass-fiber filter paper (GA-100 manufactured by Advantech Co., Ltd.) punched out in a disk shape having a diameter of 16.156 mm was set, the non-aqueous electrolyte solution amount was set to 150 $\mu$L, and the weight of the non-aqueous electrolyte solution was calculated from the specific gravity of the non-aqueous electrolyte solution. The negative electrode (1-A1, 1-A2) obtained as described above that was punched out in a disk shape having a diameter of 16.156 mm was set with the negative electrode active material layer facing downward to form a laminated body consisting of the electrodes and a separator. After setting a spacer and spring, a battery cap was fitted and crimped with a crimping machine. The laminated body was kept at 25°C for 12 h to allow the non-aqueous electrolyte solution to fully permeate to obtain a coin-type non-aqueous secondary battery (hereinafter, also simply referred to as "coin battery"). A battery combining the electrodes 1-C1 and 1-A1 was Coin 1, and a battery combining the electrodes 1-C2 and 1-A2 was Coin 2. The design capacity of Coin 1 was 3.0 mAh, and the design capacity of Coin 2 was 6.0 mAh.

(2-4) Assembly of non-aqueous secondary battery (laminate-type)

In a dry room having a dew point temperature of -80°C to -20°C, the lead-attached positive electrode (1-C3) and the lead-attached negative electrode (1-A3) after cutting were stacked via a polyethylene microporous film separator (thickness of 20 $\mu$m) to form a laminated body. The laminated body was housed within an aluminum laminate sheet outer packaging. The outer packaging was then sealed, in a state where the non-aqueous electrolyte solution was contained with the outer packaging, to produce a laminate-type non-aqueous secondary battery having the appearance shown in FIG. 1 and the cross-sectional structure shown in FIG. 2. The laminated body was kept at 25°C for 48 h to allow the non-aqueous electrolyte solution to fully permeate to obtain a laminate sheet-type (pouch-type) non-aqueous secondary battery (hereinafter, also simply referred to as "laminate battery"). The areas of the electrodes, the number of layers, the area of the laminate sheet, and the amount of non-aqueous electrolyte solution were changed according to the design capacity of the battery. In a 30-mAh single-layer cell (hereinafter, referred to as Laminate 1) the positive electrode was a 30-mm square; the negative electrode was a 32-mm square; the laminate sheet was 55 mm × 70 mm; and the electrolyte solution was 0.522 g. In a 1 Ah wound cell (hereinafter, referred as to Laminate 2), the positive electrodes were 56 mm wide × 378 mm long and 56 mm wide × 304 mm long and the negative electrodes were 58 mm wide × 401 mm long and 58 mm wide × 342 mm long, alternately layered and wound with separators therebetween; the laminate sheet was 60 mm × 75 mm; and the electrolyte solution was 7.0 g. In a 5-Ah layered cell (hereinafter, referred to Laminate 3), six double-side-coated positive electrodes of 94 mm wide × 174 mm long each and seven double-side-coated negative electrodes of 100 mm wide × 180 mm long each were alternately layered with separators therebetween; the laminate sheet was 150 mm × 220 mm; and the electrolyte solution was 18.5 to 21.0 g. FIGS. 1 and 2 are overviews of the laminate battery, and Laminates 1 to 3 do not necessarily have the same appearance.

In a dry room having a dew point temperature of -80°C to -20°C, the lead-attached positive electrodes (1-C4) and the lead-attached negative electrodes (1-A4) were cut, and six of the positive electrodes and six of the negative electrodes were stacked via polyethylene microporous film separators (thickness of 12 μm) to form a laminated body. The laminated body was housed with an aluminum laminate sheet outer packaging. The outer packaging was then sealed, in a state where the non-aqueous electrolyte solution was contained in a predetermined amount within the outer packaging, to produce a laminate-type non-aqueous secondary battery having the appearance shown in FIG. 1 and the cross-sectional structure shown in FIG. 2. The laminated body was kept at 25°C for 12 h to allow the non-aqueous electrolyte solution to fully permeate to obtain a laminate sheet-type (pouch-type) non-aqueous secondary battery (hereinafter, referred to as Laminate A), wherein the amount of non-aqueous electrolyte solution was 0.22 g, 0.44 g, or 0.50 g. In addition, in a dry room having a dew point temperature of -80°C to -20°C, the lead-attached positive electrodes (1-C5) and the lead-attached negative electrodes (1-A5) were cut, and eight of the positive electrodes and eight of the negative electrodes were stacked via polyethylene microporous film separators (thickness of 12 μm) to form a laminated body. The laminated body was housed within an aluminum laminate sheet outer packaging. The outer packaging was then sealed, in a state where the non-aqueous electrolyte solution was contained in a predetermined amount within the outer packaging, to produce a laminate-type non-aqueous secondary battery having the appearance shown in FIG. 1 and the cross-sectional structure shown in FIG. 2. The laminated body was kept at 25°C for 12 h to allow the non-aqueous electrolyte solution to fully permeate to obtain a laminate-type non-aqueous secondary battery (hereinafter, referred to as Laminate B), wherein the amount of non-aqueous electrolyte solution was 0.84 g or 0.90 g.

(3) Evaluation of non-aqueous secondary battery

The coin batteries and laminate batteries obtained as described above were first subjected to an initial charge process and initial charge-discharge capacity measurement according to the procedure in (3-1) below. Each of the coin batteries and laminate batteries were then evaluated according to the procedure in (3-2). The coin batteries were charged and discharged using an ACD-M01A (trade name) charger/discharger manufactured by Aska Electronic Co., Ltd. and an IN804 (trade name) programmable thermostatic chamber manufactured by Yamato Scientific Co., Ltd. The laminate batteries were charged and discharged using a TOSCAT-300 (trade name) manufactured by Toyo System Co., Ltd. and an LU-123 (trade name) or BTS-408C (trade name) manufactured by ESPEC Corp.

In the first embodiment, 1 C means a current value at which a battery in a fully charged state discharging at a constant current is expected to be completely discharged in 1 h. When referring simply to a non-aqueous secondary battery, the term includes both the coin battery and the laminate battery.

(3-1a) Initial charge-discharge process of non-aqueous secondary battery (coin batteries and laminate batteries 1 to 3)

The ambient temperature of the produced non-aqueous secondary battery was set at 25°C. The coin batteries were charged at a constant current equivalent to 0.1 C, and the laminate batteries 1 to 3 were charged at a constant current equivalent to 0.025 C, until the battery voltage reached 3.5 V. Constant voltage charging was then continued for 2 h while attenuating the current and maintaining the battery voltage at 3.5 V, or until the charge capacity reached 90% of the design capacity. After charging, a rest period of 10 min was allowed for the coin batteries, and 20 min for the laminate batteries. Each battery was then discharged to 2.0 V at a constant current of 0.1 C.

(3-2a) Finishing charge-discharge process (coin batteries and laminate batteries 1 to 3)

After the process in (3-1a), the ambient temperature of the non-aqueous secondary battery was set at 25°C, and charging was carried out at a constant current of 0.2 C to 3.5 V. Constant voltage charging was then continued for 2 h while attenuating the current and maintaining the battery voltage at 3.5 V, or until the current value attenuated to 0.05 C. After charging, a rest period of 10 min was allowed for the coin batteries, and 20 min for laminate batteries 1 to 3. Discharging to 2.0 V was then carried out at a constant current of 0.2 C. The ratio of discharge capacity to charge capacity in this operation was calculated as the charge-discharge capacity efficiency (%). The irreversibility rate (%) of the charge-discharge capacity was also calculated by subtracting the charge-discharge capacity efficiency from 100.

(3-1b) Initial charge-discharge process of non-aqueous secondary battery (laminate batteries A and B)

The ambient temperature of the produced non-aqueous secondary battery was set at 25°C. The laminate batteries A and B were charged at a constant current equivalent to 0.025 C, until the battery voltage reached 3.6 V. Constant voltage charging was then continued until the current attenuated to 0.02 C, while maintaining the battery voltage at 3.6 V. After charging, a rest period of 20 min was allowed. Each battery was then discharged to 2.0 V at a constant current of 0.1 C.

(3-2b) Finishing charge-discharge process (laminate batteries A and B)

After the process in (3-1b), the ambient temperature of the non-aqueous secondary battery was set at 25°C, and charging was carried out at a constant current of 0.2 C to 3.6 V. Constant voltage charging was then continued for 2 h while attenuating the current and maintaining the battery voltage at 3.6 V, or until the current value attenuated to 0.05 C. After charging, a rest period of 20 min was allowed. Discharging to 2.0 V was then carried out at a constant current of 0.2 C. The ratio of discharge capacity to charge capacity in this operation was calculated as the charge-discharge capacity efficiency (%). The irreversibility rate (%) of the charge-discharge capacity was also calculated by subtracting the capacity efficiency from 100.

(3-3a) Charge-discharge cycle test of non-aqueous secondary battery (coin batteries and laminate batteries 1 to 3)

The ambient temperature of the produced non-aqueous secondary battery (coin batteries 1 and 2 and laminate batteries 1 to 3) was set at 50°C, and charging was carried out at a constant current equivalent to 1 C until the battery voltage reached 3.5 V. Constant voltage charging was continued until the current attenuated to 0.05 C, while maintaining the battery voltage at 3.5 V. After charging, a rest period of 10 min was allowed. Discharging was then carried out at a constant current of 1 C to 2.0 V. The above charge-discharge operation was repeated 50 times. The ratio of discharge capacity to charge capacity in each charge-discharge operation was calculated, the cycle average capacity efficiency was calculated by calculating the average of the 50 times, and the cycle average irreversibility rate (%) was calculated by subtracting the cycle average capacity efficiency from 100.

(3-3b) Charge-discharge cycle test of non-aqueous secondary battery (laminate batteries A and B)

The ambient temperature of the produced non-aqueous secondary battery (laminate batteries A and B) was set at 50°C, and charging was carried out at a constant current equivalent to 1 C until the battery voltage reached 3.6 V. Constant voltage charging was continued until the current attenuated to 0.05 C, while maintaining the battery voltage at 3.6 V. After charging, a rest period of 10 min was allowed. Discharging was then carried out at a constant current of 1 C to 2.0 V. The above charge-discharge operation was repeated 50 times. The ratio of discharge capacity to charge capacity in each charge-discharge operation was calculated, the cycle average capacity efficiency was calculated by calculating the average of the 50 times, and the cycle average irreversibility rate (%) was calculated by subtracting the cycle average capacity efficiency from 100.

(3-4) Output test of non-aqueous secondary battery (laminate battery A)

Among the produced laminate batteries A, the ambient temperature of those in which the electrolyte solution amount was 0.5 g were set to 25°C, and charging was carried out at a constant current equivalent to 0.3 C until the battery voltage reached 3.6 V. Constant voltage charging was continued until the current attenuated to 0.05 C, while maintaining the battery voltage at 3.6 V. After charging, a rest period of 10 min was allowed. Discharging was then carried out at a constant current of 0.3 C to 2.0 V. The same charge-discharge operation was carried out again with a discharge current of 2 C. The ratio of discharge capacity at 2 C discharge to discharge capacity at 0.3 C discharge was calculated, and the output performance (2 C capacity/0.3 C capacity) was calculated.

(3-5) Non-aqueous secondary battery

[Examples 1-1 to 1-42 and Comparative Examples 1-1 to 1-5]

Vinylene carbonate (VC), sulfate ions ($SO_4^{2-}$), and sulfite ions ($SO_3^{2-}$) in the amounts indicated in Table 1-3 or 1-4 were added to each non-aqueous electrolyte prepared as described in Table 1-1, a non-aqueous secondary battery was assembled as described above, an initial charge-discharge process and a finishing charge-discharge were carried out, and the charge-discharge efficiency of the finishing charge-discharge and the irreversibility rate of the charge-discharge capacity were calculated. The solution content ratio X (% by mass) is the ratio of the mass of the non-aqueous electrolyte solution to the mass of the negative electrode excluding the negative electrode current collector, and A (% by volume) is the content of acetonitrile relative to the non-aqueous solvent volume. The interpretation of each test result will be described.

[Table 1-3]

| | Electrolyte solution composition | | | | Battery specification | | | VC required amount | | Additive | | | Initial performance | | Cycle performance |
| | Electrolyte solution ID | Li salt molar concentration (M) | Electrolyte solution solvent (volume ratio) | A (% by volume) | Cell type | Mass (g) of negative electrode excluding negative electrode current collector | Solution content ratio X (% by mass) | Lower limit 1 7 × A/X | Lower limit 2 15 × A/X | VC (% by mass) | SO$_4$$^{2-}$ (ppm) | SO$_3$$^{2-}$ (ppm) | Initial capacity efficiency (%) | Initial irreversibility rate (%) | Average irreversibility rate (%) |
|---|---|---|---|---|---|---|---|---|---|---|---|---|---|---|---|
| Example 1-1 | 1-S1 | LiFSI 1M + LiPF$_6$ 0.3M | 35AcN/41EMC/20EC/4ES | 35 | Coin 1 | 0.011 | 1570 | 0.16 | 0.33 | 0.20 | 20 | 0 | 97.60 | 2.40 | 7.43 |
| Example 1-2 | 1-S1 | LiFSI 1M + LiPF$_6$ 0.3M | 35AcN/41EMC/20EC/4ES | 35 | Coin 1 | 0.011 | 1570 | 0.16 | 0.33 | 0.30 | 30 | 0 | 98.10 | 1.90 | 0.27 |
| Example 1-3 | 1-S1 | LiFSI 1M + LiPF$_6$ 0.3M | 35AcN/41EMC/20EC/4ES | 35 | Coin 1 | 0.011 | 1570 | 0.16 | 0.33 | 0.50 | 50 | 0 | 98.50 | 1.50 | 0.26 |
| Example 1-4 | 1-S1 | LiFSI 1M + LiPF$_6$ 0.3M | 35AcN/41EMC/20EC/4ES | 35 | Coin 1 | 0.011 | 1570 | 0.16 | 0.33 | 1.0 | 100 | 0 | 98.40 | 1.60 | 0.29 |
| Example 1-5 | 1-S1 | LiFSI 1M + LiPF$_6$ 0.3M | 35AcN/41EMC/20EC/4ES | 35 | Coin 1 | 0.011 | 1570 | 0.16 | 0.33 | 2.0 | 200 | 0 | 98.10 | 1.90 | - |
| Example 1-6 | 1-S1 | LiFSI 1M + LiPF$_6$ 0.3M | 35AcN/41EMC/20EC/4ES | 35 | Coin 1 | 0.011 | 1570 | 0.16 | 0.33 | 6.0 | 400 | 0 | 98.30 | 1.70 | - |
| Example 1-7 | 1-S1 | LiFSI 1M + LiPF$_6$ 0.3M | 35AcN/41EMC/20EC/4ES | 35 | Coin 2 | 0.023 | 760 | 0.32 | 0.69 | 0.34 | 40 | 0 | 98.80 | 1.20 | 23.33 |

(continued)

| | Electrolyte solution ID | Li salt molar concentration (M) | Electrolyte solution solvent (volume ratio) | A (% by volume) | Cell type | Mass (g) of negative electrode excluding negative electrode current collector | Solution content ratio X (% by mass) | VC required amount Lower limit 1 7 × A/X | VC required amount Lower limit 2 15 × A/X | VC (% by mass) | SO$_4{}^{2-}$ (ppm) | SO$_3{}^{2-}$ (ppm) | Initial capacity efficiency (%) | Initial irreversibility rate (%) | Average irreversibility rate (%) |
|---|---|---|---|---|---|---|---|---|---|---|---|---|---|---|---|
| Example 1-8 | 1-S1 | LiFSI 1M + LiPF$_6$ 0.3M | 35AcN/41EMC/20EC/4ES | 35 | Coin 2 | 0.023 | 760 | 0.32 | 0.69 | 0.60 | 60 | 0 | 98.70 | 1.30 | 0.23 |
| Example 1-9 | 1-S1 | LiFSI 1M + LiPF$_6$ 0.3M | 35AcN/41EMC/20EC/4ES | 35 | Coin 2 | 0.023 | 760 | 0.32 | 0.69 | 1.0 | 100 | 0 | 98.50 | 1.50 | - |
| Example 1-10 | 1-S1 | LiFSI 1M + LiPF$_6$ 0.3M | 35AcN/41EMC/20EC/4ES | 35 | Laminate 1 | 0.090 | 580 | 0.42 | 0.91 | 2.7 | 200 | 0 | 99.70 | 0.30 | - |
| Example 1-11 | 1-S1 | LiFSI 1M + LiPF$_6$ 0.3M | 35AcN/41EMC/20EC/4ES | 35 | Laminate 1 | 0.090 | 580 | 0.42 | 0.91 | 6.0 | 400 | 0 | 99.70 | 0.30 | - |
| Example 1-12 | 1-S1 | LiFSI 1M + LiPF$_6$ 0.3M | 35AcN/41EMC/20EC/4ES | 35 | Laminate 2 | 3.8 | 185 | 1.32 | 2.84 | 2.7 | 200 | 0 | 99.80 | 0.20 | 0.34 |
| Example 1-13 | 1-S1 | LiFSI 1M + LiPF$_6$ 0.3M | 35AcN/41EMC/20EC/4ES | 35 | Laminate 3 | 22 | 95 | 2.58 | 5.53 | 2.7 | 200 | 0 | 99.70 | 0.30 | 0.39 |
| Example 1-14 | 1-S1 | LiFSI 1M + LiPF$_6$ 0.3M | 35AcN/41EMC/20EC/4ES | 35 | Laminate 3 | 22 | 95 | 2.58 | 5.53 | 4.8 | 200 | 0 | 99.70 | 0.30 | 0.28 |

(continued)

| | Electrolyte solution composition | | | Battery specification | | | VC required amount | | Additive | | | Initial performance | | Cycle performance |
|---|---|---|---|---|---|---|---|---|---|---|---|---|---|---|
| Electrolyte solution ID | Li salt molar concentration (M) | Electrolyte solution solvent (volume ratio) | A (% by volume) | Cell type | Mass (g) of negative electrode excluding negative electrode current collector | Solution content ratio X (% by mass) | Lower limit 1 $7 \times A/X$ | Lower limit 2 $15 \times A/X$ | VC (% by mass) | $SO_4^{2-}$ (ppm) | $SO_3^{2-}$ (ppm) | Initial capacity efficiency (%) | Initial irreversibility rate (%) | Average irreversibility rate (%) |
| Example 1-15 | 1-S2 | LiFSI 1M + LiPF$_6$ 0.3M | 20AcN/56EMC/20EC/4ES | 20 | Coin 1 | 0.011 | 1610 | 0.09 | 0.19 | 0.20 | 20 | 0 | 99.00 | 1.00 | 0.32 |
| Example 1-16 | 1-S2 | LiFSI 1M + LiPF$_6$ 0.3M | 20AcN/56EMC/20EC/4ES | 20 | Coin 2 | 0.023 | 780 | 0.18 | 0.38 | 0.30 | 30 | 0 | 98.90 | 1.10 | 0.82 |
| Example 1-17 | 1-S3 | LiFSI 1M + LiPF$_6$ 0.3M | 5AcN/71EMC/20EC/4E-S | 5 | Coin 2 | 0.023 | 780 | 0.04 | 0.10 | 0.30 | 30 | 0 | 98.80 | 1.20 | - |
| Example 1-18 | 1-S4 | LiFSI 1M + LiPF$_6$ 0.3M | 47AcN/29.2EMC/20EC/3.8ES | 47 | Coin 2 | 0.023 | 730 | 0.45 | 0.97 | 2.7 | 100 | 0 | 98.40 | 1.60 | - |
| Example 1-19 | 1-S5 | LiFSI 1M + LiPF$_6$ 0.3M | 60AcN/16.2EMC/20EC/3.8ES | 60 | Coin 2 | 0.023 | 720 | 0.58 | 1.25 | 2.7 | 100 | 0 | 98.20 | 1.80 | - |
| Example 1-20 | 1-S1 | LiFSI 1M + LiPF$_6$ 0.3M | 35AcN/41EMC/20EC/4ES | 35 | Coin 2 | 0.023 | 760 | 0.32 | 0.69 | 0.50 | 10 | 70 | 98.50 | 1.50 | - |
| Example 1-21 | 1-S1 | LiFSI 1M + LiPF$_6$ 0.3M | 35AcN/41EMC/20EC/4ES | 35 | Coin 2 | 0.023 | 760 | 0.32 | 0.69 | 1.00 | 50 | 100 | 98.40 | 1.60 | - |

[Table 1-4]

|  | Electro-lyte solution ID | Electrolyte solution composition | | | Battery specification | | | VC required amount | | Additive | | | Initial performance | | Cycle perfor-mance |
|  |  | Li salt molar concentra-tion (M) | Electrolyte solution solvent (volume ratio) | A (% by volume) | Cell type | Mass (g) of negative elec-trode exclud-ing negative elec-trode current collector | Solu-tion content ratio X (% by mass) | Lower limit 1 $7 \times$ A/X | Lower limit 2 $15 \times$ A/X | VC (% by mas-s) | $SO_4^{2-}$ (pp-m) | $SO_3^{2-}$ (pp-m) | Initial capacity efficiency (%) | Initial irreversibil-ity rate (%) | Average irreversibil-ity rate (%) |
|---|---|---|---|---|---|---|---|---|---|---|---|---|---|---|---|
| Example 1-22 | 1-S10 | LiFSI 0.6M + LiPF$_6$ 0.7M | 17 AcN/59EMC/20E-C/4 ES | 17 | Lami-nate A | 0.51 | 86 | 1.38 | 2.97 | 2.90 | 0 | 0 | 98.63 | 1.37 | 0.37 |
| Example 1-23 | 1-S11 | LiFSI 1M + LiPF$_6$ 0.3M | 20AcN/57EMC/20E-C/3 ES | 20 | Lami-nate A | 0.51 | 98 | 1.43 | 3.06 | 2.00 | 0 | 0 | 98.15 | 1.85 | 1.00 |
| Example 1-24 | 1-S11 | LiFSI 1M + LiPF$_6$ 0.3M | 20AcN/57EMC/20E-C/3 ES | 20 | Lami-nate A | 0.51 | 86 | 1.63 | 3.49 | 3.20 | 0 | 0 | 98.64 | 1.36 | 0.38 |
| Example 1-25 | 1-S11 | LiFSI 1M + LiPF$_6$ 0.3M | 20AcN/57EMC/20E-C/3 ES | 20 | Lami-nate A | 0.51 | 98 | 1.43 | 3.06 | 9.00 | 0 | 0 | 98.65 | 1.35 | 0.21 |
| Example 1-26 | 1-S14 | LiFSI 1M + LiPF$_6$ 0.3M | 29AcN/47EMC/20E-C/4 ES | 29 | Lami-nate A | 0.51 | 98 | 2.07 | 4.44 | 3.00 | 0 | 0 | 98.62 | 1.38 | 0.55 |
| Example 1-27 | 1-S18 | LiFSI 1M + LiPF$_6$ 0.3M | 42Ac-N/34.2 EM-C/20EC/3.8ES | 42 | Laminate A | 0.51 | 98 | 3.00 | 6.43 | 7.00 | 0 | 0 | 98.72 | 1.28 | 0.23 |

| | Electro-lyte solution ID | Electrolyte solution composition | | | Battery specification | | | VC required amount | | Additive | | | Initial performance | | Cycle perfor-mance |
| | | Li salt molar concentra-tion (M) | Electrolyte solution solvent (volume ratio) | A (% by volume) | Cell type | Mass (g) of negative elec-trode exclud-ing negative elec-trode current collector | Solu-tion content ratio X (% by mass) | Lower limit 1 7 × A/X | Lower limit 2 15 × A/X | VC (% by mas-s) | SO$_4^{2-}$ (pp-m) | SO$_3^{2-}$ (pp-m) | Initial capacity efficiency (%) | Initial irreversibil-ity rate (%) | Average irreversibil-ity rate (%) |
|---|---|---|---|---|---|---|---|---|---|---|---|---|---|---|---|
| Example 1-28 | 1-S19 | LiFSI 1M + LiPF$_6$ 0.3M | 45AcN/35E MC/20EC | 45 | Laminate A | 0.51 | 86 | 3.66 | 7.85 | 5.00 | 0 | 0 | 98.47 | 1.53 | 5.27 |
| Example 1-29 | 1-S11 | LiFSI 1M + LiPF$_6$ 0.3M | 20AcN/57E MC/20E-C/3 ES | 20 | Lami-nate B | 1.37 | 61 | 2.30 | 4.92 | 7.00 | 0 | 0 | 98.69 | 1.3 | - |
| Example 1-30 | 1-S 12 | LiFSI 1M + LiPF$_6$ 0.3M | 20Ac-N/56.2 EM-C/20EC/ 3.8ES | 20 | Laminate B | 1.37 | 65 | 2.15 | 4.62 | 8.00 | 30 | 0 | 99 | 1.0 | - |
| Example 1-31 | 1-S 12 | LiFSI 1M + LiPF$_6$ 0.3M | 20Ac-N/56.2 EM-C/20EC/ 3.8ES | 20 | Laminate B | 1.37 | 61 | 2.30 | 4.92 | 8.00 | 30 | 0 | 98.64 | 1.4 | - |
| Example 1-32 | 1-S13 | LiFSI 0.6M + LiPF$_6$ 0.7M | 25AcN/51E MC/20E-C/4 ES | 25 | Lami-nate B | 1.37 | 65 | 2.69 | 5.77 | 4.00 | 0 | 0 | 98.56 | 1.44 | 9.94 |
| Example 1-33 | 1-S14 | LiFSI 1M + LiPF$_6$ 0.3M | 29AcN/47E MC/20E-C/4 ES | 29 | Lami-nate B | 1.37 | 65 | 3.12 | 6.69 | 5.10 | 0 | 0 | 98.75 | 1.25 | 0.23 |

| | Electro-lyte solution ID | Electrolyte solution composition | | | | Battery specification | | | VC required amount | | | Additive | | Initial performance | | Cycle perfor-mance |
|---|---|---|---|---|---|---|---|---|---|---|---|---|---|---|---|---|
| | | Li salt molar concentra-tion (M) | Electrolyte solution solvent (volume ratio) | A (% by volume) | Cell type | Mass (g) of negative elec-trode exclud-ing negative elec-trode current collector | Solu-tion content ratio X (% by mass) | Lower limit 1 $7 \times$ A/X | Lower limit 2 $15 \times$ A/X | VC (% by mas-s) | $SO_4^{2-}$ (pp-m) | $SO_3^{2-}$ (pp-m) | Initial capacity efficiency (%) | Initial irreversibil-ity rate (%) | Average irreversibil-ity rate (%) | |
| Example 1-34 | 1-S15 | LiFSI 1M + LiPF$_6$ 0.3M | 30AcN/50EMC/20EC | 30 | Lami-nate B | 1.37 | 65 | 3.23 | 6.92 | 5.90 | 0 | 0 | 98.72 | 1.28 | 0.24 |
| Example 1-35 | 1-S17 | LiFSI 1M + LiPF$_6$ 0.3M | 35Ac-N/41.2 EM-C/20EC/ 3.8ES | 35 | Laminate B | 1.37 | 65 | 3.77 | 8.08 | 7.00 | 0 | 0 | 98.91 | 1.09 | 0.22 |
| Example 1-36 | 1-S1 | LiFSI 1M + LiPF$_6$ 0.3M | 35AcN/41EMC/20E-C/4 ES | 35 | Lami-nate 2 | 3.8 | 185 | 1.32 | 2.84 | 6.0 | 400 | 0 | 99.90 | 0.10 | 0.19 |
| Example 1-37 | 1-S11 | LiFSI 1M + LiPF$_6$ 0.3M | 20AcN/57EMC/20E-C/3 ES | 20 | Lami-nate A | 0.51 | 98 | 1.43 | 3.06 | 3.20 | 0 | 0 | 98.63 | 1.37 | 0.17 |
| Example 1-38 | 1-S11 | LiFSI 1M + LiPF$_6$ 0.3M | 20AcN/57EMC/20E-C/3 ES | 20 | Lami-nate A | 0.51 | 98 | 1.43 | 3.06 | 7.00 | 0 | 0 | 98.86 | 1.14 | 0.17 |
| Example 1-39 | 1-S11 | LiFSI 1M + LiPF$_6$ 0.3M | 20AcN/57EMC/20E-C/3 ES | 20 | Lami-nate A | 0.51 | 86 | 1.63 | 3.49 | 7.00 | 0 | 0 | 98.70 | 1.30 | 0.16 |

EP 4 475 248 A1

49

(continued)

| Electrolyte solution ID | Electrolyte solution composition | | | Battery specification | | | | VC required amount | | VC (% by mass) | Additive | | Initial performance | | Cycle performance |
| | Li salt molar concentration (M) | Electrolyte solution solvent (volume ratio) | A (% by volume) | Cell type | Mass (g) of negative electrode excluding negative electrode current collector | Solution content ratio X (% by mass) | | Lower limit 1 7 × A/X | Lower limit 2 15 × A/X | | $SO_4^{2-}$ (ppm) | $SO_3^{2-}$ (ppm) | Initial capacity efficiency (%) | Initial irreversibility rate (%) | Average irreversibility rate (%) |
|---|---|---|---|---|---|---|---|---|---|---|---|---|---|---|---|
| Example 1-40 | 1-S17 | LiFSI 1M + LiPF$_6$ 0.3M | 35Ac-N/41.2 EMC/20EC/3.8ES | 35 | Laminate A | 0.51 | 86 | | 2.85 | 6.10 | 7.00 | 400 | 0 | 98.70 | 1.30 | 0.18 |
| Example 1-41 | 1-S11 | LiFSI 1M + LiPF$_6$ 0.3M | 20AcN/57EMC/20EC/3 ES | 20 | Laminate B | 1.37 | 65 | | 2.15 | 4.62 | 7.00 | 0 | 0 | 98.94 | 1.06 | 0.19 |
| Example 1-42 | 1-S14 | LiFSI 1M + LiPF$_6$ 0.3M | 29AcN/47EMC/20EC/4 ES | 29 | Laminate B | 1.37 | 65 | | 3.12 | 6.69 | 7.00 | 0 | 0 | 98.90 | 1.10 | 0.18 |
| Comparative Example 1-1 | 1-S1 | LiFSI 1M + LiPF$_6$ 0.3M | 35AcN/41EMC/20EC/4 ES | 35 | Coin 1 | 0.011 | 1570 | | 0.16 | 0.33 | 0.15 | 20 | 0 | 41.80 | 58.20 | unable to discharge |
| Comparative Example 1-2 | 1-S1 | LiFSI 1M + LiPF$_6$ 0.3M | 35AcN/41EMC/20EC/4 ES | 35 | Coin 2 | 0.023 | 760 | | 0.32 | 0.69 | 0.30 | 30 | 0 | 96.00 | 4.00 | 67.5 |
| Comparative Example 1-3 | 1-S2 | LiFSI 1M + LiPF$_6$ 0.3M | 20AcN/56EMC/20EC/4 ES | 20 | Coin 2 | 0.023 | 780 | | 0.18 | 0.38 | 0.10 | 10 | 0 | 63.60 | 36.40 | unable to discharge |

50

(continued)

| | Electro-lyte solution ID | Electrolyte solution composition | | | Battery specification | | | VC required amount | | Additive | | | Initial performance | | Cycle performance |
| | | Li salt molar concentration (M) | Electrolyte solution solvent (volume ratio) | A (% by volume) | Cell type | Mass (g) of negative electrode excluding negative electrode current collector | Solution content ratio X (% by mass) | Lower limit 1 7 × A/X | Lower limit 2 15 × A/X | VC (% by mass) | SO$_4^{2-}$ (ppm) | SO$_3^{2-}$ (ppm) | Initial capacity efficiency (%) | Initial irreversibility rate (%) | Average irreversibility rate (%) |
|---|---|---|---|---|---|---|---|---|---|---|---|---|---|---|---|
| Comparative Example 1-4 | 1-S1 | LiFSI 1M + LiPF$_6$ 0.3M | 35AcN/41EMC/20E-C/4 ES | 35 | Laminate 3 | 22 | 85 | 2.88 | 6.18 | 2.7 | 0 | 0 | 96.90 | 3.10 | 0.39 |
| Comparative Example 1-5 | 1-S1 | LiFSI 1M + LiPF$_6$ 0.3M | 35AcN/41EMC/20E-C/4 ES | 35 | Laminate 2 | 3.8 | 185 | 1.32 | 2.84 | 1.0 | 0 | 0 | unable to discharge | unable to discharge | unable to discharge |

EP 4 475 248 A1

51

The capacity efficiency in the above finishing charge-discharge preferably exceeds 97.5%, and the irreversible capacity rate preferably drops below 2.5%. In Examples 1-1 to 1-42, the irreversibility rate of capacity dropped below 2.5%, and the additives were observed to have a stabilizing effect on performance. In Comparative Examples 1-1 and 1-5, irreversible reactions were unavoidable during charging, and capacity efficiency was significantly low or the irreversible capacity exceeded 2.5%, causing significant charging failure and inability to discharge. It is understood from this that by adding vinylene carbonate and sulfate ions or sulfite ions to the non-aqueous electrolyte solution so that the amounts fall within the predetermined ranges, the battery tends to operate stably.

The cycle average irreversibility rate is preferably 0.19% or less, and more preferably 0.17% or less. In the batteries having X of 200% or less as in Examples 1-37 to 1-42, it was observed that within the predetermined ranges where the content of acetonitrile was 35% by volume or less and the addition amount of vinylene carbonate was $15 \times A/X$ or more, there was a tendency that the irreversibility rate dropped below 0.19%. In these batteries, the effect of negative electrode film formation was improved, and it is considered that the batteries operated stably for a long time even in high-temperature environment.

[Examples 1-43 to 54 and Reference Example 1-1]

Vinylene carbonate (VC) and sulfate ions ($SO_4^{2-}$) in the amounts indicated in Table 1-5 were added to each non-aqueous electrolyte solution prepared as described in Table 1-5, a non-aqueous secondary battery was assembled as described above, an initial charge-discharge process and a finishing charge-discharge were carried out, and an output test was carried out on the laminate battery A by the procedure described in (3-4) below. In addition, a cycle test was carried out by the procedure described separately in (3-3). The liquid content ratio X (% by mass) is the ratio of the mass of the non-aqueous electrolyte solution contained in the battery to the mass of the negative electrode excluding the negative electrode current collector. In the output test, the electrolyte solution amount was the same for each electrolyte solution, and X = 98. Further, A (% by volume) is the content of acetonitrile relative to the non-aqueous solvent volume. Hereinafter, the test results of the output test and the cycle test will be interpreted in combination.

[Table 1-5]

| | Electro-lyte solution ID | Electrolyte solution composition | | | Battery specification | | | VC required amount | | Additive | | | Initial performance | | Cycle perfor-mance | Reference perfor-mance |
|---|---|---|---|---|---|---|---|---|---|---|---|---|---|---|---|---|
| | | Li salt molar concentra-tion (M) | Electro-lyte solution solvent (volume ratio) | A (% by volume) | Cell type | Mass (g) of negative elec-trode exclud-ing negative elec-trode current collector | Solu-tion content ratio X (% by mass) | Low-er limit 1 $7 \times$ A/X | Low-er limit 2 $15 \times$ A/X | VC (% by mas-s) | S-$O_4^{2-}$ (pp-m) | S-$O_3^{2-}$ (pp-m) | Initial capacity efficien-cy (%) | Initial irreversibil-ity rate (%) | Average irreversibil-ity rate (%) | Rate perfor-mance 2C capaci-ty/0.3 C capacity |
| Example 1-43 | 1-S7 | LiFSI 1M + LiPF$_6$ 0.3M | 8Ac-N/68.2 EMC/20EC/3.8ES | 8 | Lami-nate A | 0.51 | 98 | 0.57 | 1.22 | 8.00 | 0 | 0 | 98.53 | 1.47 | 0.17 | 83.2 |
| Example 1-44 | 1-S8 | LiFSI 1M + LiPF$_6$ 0.3M | 16AcN/64 EMC/20EC | 16 | Lami-nate A | 0.51 | 98 | 1.14 | 2.45 | 5.90 | 0 | 0 | 98.60 | 1.40 | 0.18 | 84.0 |
| Example 1-45 | 1-S9 | LiFSI 1M + LiPF$_6$ 0.3M | 16Ac-N/61.9EM-C/19.4EC/2.7-ES | 16 | Lami-nate A | 0.51 | 98 | 1.14 | 2.45 | 5.90 | 120 | 0 | 98.66 | 1.34 | 0.16 | 84.0 |
| Example 1-46 | 1-S10 | LiFSI 0.6M + LiPF$_6$ 0.7M | 17 AcN/59 EMC/20EC/4ES | 17 | Lami-nate A | 0.51 | 98 | 1.21 | 2.60 | 2.90 | 0 | 0 | 98.63 | 1.37 | 0.18 | 85.4 |
| Example 1-47 | 1-S11 | LiFSI 1M + LiPF$_6$ 0.3M | 20AcN/57 EMC/20EC/3ES | 20 | Lami-nate A | 0.51 | 98 | 1.63 | 3.49 | 4.50 | 0 | 0 | 98.83 | 1.17 | 0.17 | 84.4 |

| | Electro-lyte solution ID | Electrolyte solution composition | | | Battery specification | | | VC required amount | | Additive | | | Initial performance | | Cycle perfor-mance | Reference perfor-mance |
|---|---|---|---|---|---|---|---|---|---|---|---|---|---|---|---|---|
| | | Li salt molar concentra-tion (M) | Electro-lyte solution solvent (volume ratio) | A (% by volume) | Cell type | Mass (g) of negative elec-trode exclud-ing negative elec-trode current collector | Solu-tion content ratio X (% by mass) | Low-er limit 1 $7 \times A/X$ | Low-er limit 2 $15 \times A/X$ | VC (% by mas-s) | S-$O_4^{2-}$ (pp-m) | S-$O_3^{2-}$ (pp-m) | Initial capacity efficien-cy (%) | Initial irreversibil-ity rate (%) | Average irreversibil-ity rate (%) | Rate perfor-mance 2C capaci-ty/0.3 C capacity |
| Example 1-48 | 1-S13 | LiFSI 0.6M + LiPF$_6$ 0.7M | 25AcN/51EMC/20EC/4ES | 25 | Lami-nate A | 0.51 | 98 | 1.79 | 3.83 | 4.00 | 0 | 0 | 98.67 | 1.33 | 0.18 | 85.1 |
| Example 1-49 | 1-S14 | LiFSI 1M + LiPF$_6$ 0.3M | 29AcN/47EMC/20EC/4ES | 29 | Lami-nate A | 0.51 | 98 | 2.07 | 4.44 | 5.10 | 0 | 0 | 98.70 | 1.30 | 0.17 | 85.2 |
| Example 1-50 | 1-S14 | LiFSI 1M + LiPF$_6$ 0.3M | 29AcN/47EMC/20EC/4ES | 29 | Lami-nate A | 0.51 | 98 | 2.36 | 5.06 | 5.10 | 0 | 0 | 98.68 | 1.32 | 0.18 | 85.0 |
| Example 1-51 | 1-S14 | LiFSI 1M + LiPF$_6$ 0.3M | 29AcN/47EMC/20EC/4ES | 29 | Lami-nate A | 0.51 | 98 | 2.36 | 5.06 | 7.00 | 0 | 0 | 98.48 | 1.52 | 0.17 | 85.2 |
| Example 1-52 | 1-S15 | LiFSI 1M + LiPF$_6$ 0.3M | 30AcN/50EMC/20EC | 30 | Lami-nate A | 0.51 | 98 | 2.14 | 4.59 | 7.00 | 0 | 0 | 98.70 | 1.30 | 0.19 | 85.2 |

| | Electro-lyte solution ID | Electrolyte solution composition | | | | Battery specification | | | VC required amount | | Additive | | | Initial performance | | Cycle perfor-mance | Reference perfor-mance |
|---|---|---|---|---|---|---|---|---|---|---|---|---|---|---|---|---|---|
| | | Li salt molar concentra-tion (M) | Electro-lyte solution solvent (volume ratio) | A (% by volume) | Cell type | Mass (g) of negative elec-trode exclud-ing negative elec-trode current collector | Solu-tion content ratio X (% by mass) | Low-er limit 1 $7 \times A/X$ | Low-er limit 2 $15 \times A/X$ | VC (% by mas-s) | S-$O_4{}^{2-}$ (pp-m) | S-$O_3{}^{2-}$ (pp-m) | Initial capacity efficien-cy (%) | Initial irreversibil-ity rate (%) | Average irreversibil-ity rate (%) | Rate perfor-mance 2C capaci-ty/0.3 C capacity |
| Example 1-53 | 1-S16 | LiFSI 1M + LiPF$_6$ 0.3M | 30Ac-N/48.1EM-C/19.2EC/2.7-ES | 30 | Lami-nate A | 0.51 | 98 | 2.14 | 4.59 | 7.00 | 0 | 0 | 98.60 | 1.40 | 0.17 | 85.3 |
| Example 1-54 | 1-S17 | LiFSI 1M + LiPF$_6$ 0.3M | 35Ac-N/41.2EMC/20 EC/3.8ES | 35 | Laminate A | 0.51 | 98 | 2.50 | 5.36 | 5.90 | 400 | 0 | 98.47 | 1.53 | 0.16 | 88.3 |
| Refer-ence Ex-ample 1-1 | 1-S20 | LiPF$_6$ 1.1M | 80EM-C/20 EC | 0 | Lami-nate A | 0.51 | 98 | 0 | 0 | 1.60 | 0 | 0 | 97.50 | 2.50 | 0.16 | 80.3 |

EP 4 475 248 A1

Examples 1-43 to 54 each comprise a predetermined amount of vinylene carbonate, and the capacity efficiency in the cycle test was 0.19% or less. It was more preferable that the capacity efficiency be 0.17% or less, and there was a tendency that a better capacity efficiency was shown in a battery comprising ethylene sulfite or sulfate ions. The ratio of 2C capacity/0.3 C capacity indicating output performance is preferably 83% or greater, and more preferably 84% or greater. The higher the acetonitrile, the higher the 2C capacity/0.3 C capacity tended to be, and cycle performance and output performance could both be achieved. Further, it was found that when an electrolyte solution comprising no acetonitrile was used as Reference Example 1-1, long-term stability of the capacity efficiency and output performance were not both achieved.

(4-1) Nickel-containing electrode and non-aqueous secondary battery production

A composite oxide of lithium, nickel, and cobalt ($LiNi_{0.8}Mn_{0.1}Co_{0.1}O_2$) as the positive electrode active material, carbon black powder as the conductive aid, and polyvinylidene fluoride (PVDF) as the binder were mixed at a mass ratio of 94:3:3 to obtain a positive electrode mixture. N-methyl-2-pyrrolidone as the solvent was added to the obtained positive electrode mixture and further mixed to prepare a positive electrode mixture-containing slurry. To one side of an aluminum foil having a thickness of 20 $\mu$m acting as the positive electrode current collector, the positive electrode mixture-containing slurry was applied while adjusting the basis weight to 8.4 mg/cm$^2$ or 16.6 mg/cm$^2$, and the solvent was removed by drying, followed by rolling with a roll press so that the density of the positive electrode active material layer was 2.91 g/cm$^3$, to obtain a positive electrode (1-C6 and 1-C7) consisting of a positive electrode active material layer and a positive electrode current collector. The basis weight of 1-C6 was 8.4 mg/cm$^2$, and the basis weight of 1-C7 was 16.6 mg/cm$^2$.

Following the production procedure for the coin battery described above, a battery (Coin 4) combining the positive electrode 1-C6 and the negative electrode 1-A1 and a battery (Coin 5) combining the positive electrode 1-C7 and the negative electrode 1-A2 were produced.

(4-2) Initial charge-discharge process of nickel-containing electrode non-aqueous secondary battery

The ambient temperature of the miniature non-aqueous secondary battery was set at 25°C. After charging at a constant current equivalent to 0.025 C until reaching 3.1 V, charging was carried out at a constant voltage of 3.1 V for 1.5 h. Following a rest period of 3 h, the battery was charged at a constant current equivalent to 0.05 C until reaching 4.2 V, and then charged at a constant voltage of 4.2 V for 1.5 h. Thereafter, the battery was discharged at a constant current equivalent to 0.15 C to 3.0 V.

(4-3) Finishing charge-discharge process

After the process in (4-1), the ambient temperature of the non-aqueous secondary battery was set at 25°C, and charging was carried out at a constant current of 0.2 C to 4.2 V. Constant voltage charging was then continued for 2 h while maintaining the voltage at 4.2 V, or until the current value attenuated to 0.05 C. After charging, a 10 min rest period was allowed. Discharging was then carried out at a constant current of 0.2 C to 3.0 V. The ratio of discharge capacity to charge capacity in this operation was calculated as the charge-discharge capacity efficiency (%). The irreversibility rate (%) of charge-discharge capacity was calculated by subtracting the charge-discharge efficiency from 100.

(4-4) Non-aqueous secondary battery

[Examples 1-55 to 57]

Vinylene carbonate and sulfate ions were added in the amounts indicated in Table 1-6 to each electrolyte solution prepared in Table 1-1, a non-aqueous secondary battery was assembled as described above, an initial charge-discharge process and a finishing charge-discharge were carried out, and the charge-discharge efficiency of the finishing charge-discharge and the irreversibility rate of the charge-discharge capacity were calculated. The liquid content ratio X (% by mass) is the ratio of the mass of the non-aqueous electrolyte solution to the mass of the negative electrode excluding the negative electrode current collector, and A (% by volume) is the content of acetonitrile relative to the non-aqueous solvent volume.

EP 4 475 248 A1

[Table 1-6]

| | Electrolyte solution composition | | | Battery specification | | | VC required amount | | Additive | | | Initial performance | |
|---|---|---|---|---|---|---|---|---|---|---|---|---|---|
| Electrolyte solution ID | Li salt molar concentration (M) | Electrolyte solution solvent (volume ratio) | A (% by volume) | Cell type | Mass (g) of negative electrode excluding negative electrode current collector | Solution content ratio X (% by mass) | Lower limit 1 $7 \times$ A/X | Lower limit 2 $15 \times$ A/X | VC (% by mass) | $SO_4^{2-}$ (ppm) | $SO_3^{2-}$ (ppm) | Initial capacity efficiency (%) | Initial irreversibility rate (%) |
| Example 1-55 | 1-S1 | LiFSI 1M + LiPF$_6$ 0.3M | 35AcN/41EMC/20EC/4ES | 35 | Coin 4 | 0.011 | 1570 | 0.16 | 0.33 | 2.0 | 200 | 0 | 97.30 | 2.70 |
| Example 1-56 | 1-S6 | LiFSI 1M + LiPF$_6$ 0.3M | 10AcN/66EMC/20EC/4ES | 10 | Coin 4 | 0.011 | 1580 | 0.04 | 0.09 | 2.0 | 200 | 0 | 98.35 | 1.65 |
| Example 1-57 | 1-S6 | LiFSI 1M + LiPF$_6$ 0.3M | 10AcN/66EMC/20EC/4ES | 10 | Coin 5 | 0.023 | 780 | 0.09 | 0.19 | 2.0 | 200 | 0 | 98.57 | 1.43 |

57

When nickel is contained in the positive electrode, the capacity efficiency is preferably 97.0% or greater, and more preferably 97.3% or greater. The irreversible capacity ratio of the capacity is preferably 3% or less, and more preferably 2.7% or less. In Examples 1-55 to 1-57, the irreversible capacity ratio was 2.7% or less, and stable operation of the batteries was confirmed.

<Examples and Comparative Examples according to second embodiment>

(Examples 2-1 to 2-3 and Comparative Examples 2-1 and 2-2)

Examples 2-1 to 2-3 and Comparative Examples 2-1 and 2-2 will be described below.

[Production of positive electrode]

LiFePO$_4$ as the positive electrode active material, acetylene black powder and carbon nanotubes as the conductive aid, and polyvinylidene fluoride (PVDF) as the binder were mixed at a mass ratio of 94:2:1:3 to obtain a positive electrode mixture. N-methyl-2-pyrrolidone as the solvent was added to the obtained positive electrode mixture and further mixed to prepare the positive electrode mixture-containing slurry. To one side of an aluminum foil having a thickness of 15 $\mu$m acting as the positive electrode current collector, the positive electrode mixture-containing slurry was applied while adjusting the basis weight to about 9.9 mg/cm$^2$. When applying the positive electrode mixture-containing slurry to the aluminum foil, an unapplied region was formed so that a portion of the aluminum foil was exposed, followed by rolling with a roll press so that the density of the positive electrode active material layer was 2.2 g/cm$^3$, to obtain a positive electrode consisting of a positive electrode active material layer and a positive electrode current collector.

The positive electrode was cut so that the area of the positive electrode mixture layer was 30 mm × 50 mm and included the exposed portion of the aluminum foil. An aluminum lead piece for extracting current was welded to the exposed portion of the aluminum foil, and vacuum-dried at 120°C for 12 h to obtain a lead-attached positive electrode.

[Production of negative electrode]

Graphite, which is a negative electrode active material; carboxymethyl cellulose, which is a binder; and latex of styrene-butadiene rubber, which is also a binder, were mixed at a mass ratio of 100:1:1:1.5 to obtain a negative electrode mixture. An appropriate amount of water was added to the obtained negative electrode mixture and then sufficiently mixed to prepare a negative electrode mixture-containing slurry. The slurry was applied to one side of a copper foil having a thickness of 10 $\mu$m at a certain thickness while adjusting the basis weight to 5.1 mg/cm$^2$. When applying the negative electrode mixture-containing slurry to the copper foil, an unapplied region was formed so that a portion of the copper foil was exposed, followed by rolling with a roll press so that the density of the negative electrode active material layer was 1.60 g/cm$^3$, to obtain a negative electrode consisting of a negative electrode active material layer and a negative electrode current collector.

The negative electrode was cut so that the area of the negative electrode mixture layer was 32 mm × 52 mm and included the exposed portion of the copper foil. A nickel lead body for extracting current was welded to the exposed portion of the copper foil, and vacuum-dried at 80°C for 12 h to obtain a lead-attached negative electrode.

[Battery production]

[Assembly of single-layer laminate battery]

A layered electrode structure was produced by stacking the lead-attached positive electrode and the lead-attached negative electrode via a polyethylene microporous film separator (thickness of 12 $\mu$m) so that the mixture-applied surfaces of the electrodes faced each other. The layered electrode structure was housed in an aluminum laminate sheet outer packaging of 90 mm × 80 mm and vacuum-dried at 80°C for 5 h to remove moisture. 0.4 g of each electrolyte solution indicated in Table 2-1 was injected into the outer packaging, and then the outer packaging was sealed, thereby producing a single-layer laminate-type (pouch-type) non-aqueous secondary battery (hereinafter, also simply referred to as "single-layer laminate battery" or "single-layer laminate").

The non-aqueous electrolyte solution was obtained by mixing each material in an argon glove box having a dew point temperature of -110°C to -70°C. In Table 2-1, the meaning of the abbreviation of each material of the non-aqueous electrolyte solution injected into the secondary battery before the initial charge is as follows.

LiFSI: lithium bis(fluorosulfonyl)imide
AcN: acetonitrile

EC: ethylene carbonate
VC: vinylene carbonate
ES: ethylene sulfite
EMC: ethyl methyl carbonate

[Table 2-1]

| Non-aqueous electrolyte solution compositional ratio (% by mass) | | | | | | | |
|---|---|---|---|---|---|---|---|
| Electrolyte solution | LiFSI | LiPF$_6$ | AcN | EC | VC | ES | EMC |
| 2-S1 | 16.2 | 3.8 | 20.9 | 21.9 | 2 | 4.5 | 31.4 |
| 2-S2 | 16.1 | 3.8 | 20.9 | 22 | 4.5 | 4.6 | 28.8 |
| 2-S3 | 14.5 | 3.5 | 12.1 | 20.5 | 3.9 | 4.2 | 41.3 |
| 2-S4 | 15.5 | 0 | 0 | 26.4 | 1.6 | 0 | 56.5 |
| 2-S5 | 16.2 | 3.8 | 20.8 | 22 | 0.7 | 4.6 | 31.9 |

[Evaluation of single-layer laminate battery]

The evaluation batteries obtained as described above were first subjected to an initial charge process according to the procedure in (1-1) below. Each battery was then evaluated according to the procedure in (1-2) below and the procedure for analyzing the negative electrode protective film components. Charging and discharging were carried out using an ACD-01 (trade name) charger-discharger manufactured by Aska Electronic Co., Ltd. and a PLM-63S (trade name) thermostatic chamber manufactured by Futaba Kagaku Co., Ltd.
In the second embodiment, 1 C means a current value at which a battery in a fully charged state discharging at a constant current is expected to be completely discharged in 1 h.

(1-1) Initial charge-discharge process of single-layer laminate battery

The ambient temperature of the battery was set at 25°C. The battery was charged at a constant current of 2.1 mA corresponding to 0.1 C until 3.6 V was reached, then charged at a constant voltage of 3.6 V until the charge capacity reached 1.8 mA, and thereafter discharged at a constant current of 2.1 mA corresponding to 0.1 C to 2 V.

(1-2) Room-temperature cycle of single-layer laminate battery

The battery subjected to the initial charge-discharge process in the method described in (1-1) above had the ambient temperature of the battery set at 25°C, was charged at a constant current of 23 mA corresponding to 1 C until 3.6 V was reached, then charged at a constant voltage of 3.6 V until the charging current attenuated to 0.05 C, and thereafter discharged at a constant current of 21 mA to 2 V. One cycle was defined as a step in which charging and discharging are each carried out once, and 100 cycles of charging and discharging were carried out. The rate of change in capacity when the increase in discharge capacity ended and a constant capacity was achieved was calculated based on the discharge capacity at the start of the test.

(Examples 2-4 and 2-5)

Example 2-4 and Example 2-5 will be described below.

[Production of positive electrode]

LiFePO$_4$ as the positive electrode active material, acetylene black powder as the conductive aid, and polyvinylidene fluoride (PVDF) as the binder were mixed at a mass ratio of 87:8:5 to obtain a positive electrode mixture. N-methyl-2-pyrrolidone as the solvent was added to the obtained positive electrode mixture and further mixed to prepare the positive electrode mixture-containing slurry. To one side of an aluminum foil having a thickness of 15 $\mu$m acting as the positive electrode current collector, the positive electrode mixture-containing slurry was applied while adjusting the basis weight to about 20.7 mg/cm$^2$. When applying the positive electrode mixture-containing slurry to the aluminum foil, an unapplied region was formed so that a portion of the aluminum foil was exposed, followed by rolling with a roll press so that the density of the positive electrode active material layer was 1.9 g/cm$^3$, to obtain a positive electrode consisting of a positive electrode active material layer and a positive electrode current collector.

The positive electrode was cut so that the area of the positive electrode mixture layer was 29 mm $\times$ 56 mm and included the exposed portion of the aluminum foil. An aluminum lead piece for extracting current was welded to the exposed portion of the aluminum foil, and vacuum-dried at 120°C for 12 h to obtain a lead-attached positive electrode.

[Production of negative electrode]

Graphite, which is a negative electrode active material; carboxymethyl cellulose, which is a binder; and latex of styrene-butadiene rubber, which is also a binder, were mixed at a mass ratio of 100:1:1.5 to obtain a negative electrode mixture. An appropriate amount of water was added to the obtained negative electrode mixture and then sufficiently mixed to prepare a negative electrode mixture-containing slurry. The slurry was applied to one side of a copper foil having a thickness of 10 $\mu$m at a certain thickness while adjusting the basis weight to 8.8 mg/m$^2$. When applying the negative electrode mixture-containing slurry to the copper foil, an unapplied region was formed so that a portion of the copper foil was exposed, followed by rolling with a roll press so that the density of the negative electrode active material layer was 1.60 g/cm$^3$, to obtain a negative electrode consisting of a negative electrode active material layer and a negative electrode current collector.

The negative electrode was cut so that the area of the negative electrode mixture layer was 31 mm $\times$ 58 mm and included the exposed portion of the copper foil. A nickel lead for extracting current was welded to the exposed portion of the copper foil, and vacuum-dried at 80°C for 12 h to obtain a lead-attached negative electrode.

[Assembly of layered laminate battery]

A layered electrode structure was produced by stacking the lead-attached positive electrode and the lead-attached negative electrode via a polyethylene microporous film separator (thickness of 20 $\mu$m) so that the mixture-applied surfaces of the electrodes faced each other. The layered electrode structure was housed in an aluminum laminate sheet outer packaging of 90 mm $\times$ 80 mm and vacuum-dried at 80°C for 5 h to remove moisture. 5.6 g of the electrolyte solution 2-S2 or 2-S3 indicated in Table 2-1 above was injected into each outer packaging, and then the outer packaging was sealed, thereby producing a layered laminate-type (pouch-type) non-aqueous secondary battery (hereinafter, also simply referred to as "layered laminate battery" or "layered laminate").

[Evaluation of layered laminate battery]

The evaluation batteries obtained as described above were first subjected to an initial charge process according to the procedure in (1-1) below. Each battery was then evaluated according to the procedure in (1-2) below and the procedure of analyzing the negative electrode protective film components. The charging and discharging were carried out using an ACD-01 (trade name) charger/discharger manufactured by Aska Electronic Co., Ltd. and a PLM-63S (trade name) thermostatic chamber manufactured by Futaba Kagaku Co., Ltd.

As indicated in [Evaluation of single-layer laminate battery], 1 C means a current value at which a battery in a fully charged state discharging at a constant current is expected to be completely discharged in 1 h.

(1-1) Initial charge-discharge process of layered laminate battery

The ambient temperature of the battery was set at 25°C. The battery was charged at a constant current of 23 mA corresponding to 0.025 C until 3.5 V was reached, then charged at a constant voltage of 3.5 V until the charge capacity reached 800 mAh, and thereafter discharged at a constant current of 91 mA corresponding to 0.1 C to 2 V.

(1-2) Room-temperature cycle of layered laminate battery

The ambient temperature of the battery was set at 25°C. The battery was charged at a constant current of 182 mA corresponding to 1 C until 3.5 V was reached, then charged at a constant voltage of 3.5 V until the current attenuated to 0.05 C, and thereafter discharged at a constant current of 182 mA corresponding to 1 C to 2 V. This operation was carried out 10 times, and the discharge capacity was found to have stabilized by that time. The rate of change in capacity when the increase in discharge capacity ended and a constant capacity was achieved was calculated based on the discharge capacity at the start of the test.

[Analysis of negative electrode protective film component]

The negative electrode protective film of the Examples, according to the second embodiment, is poorly soluble in non-aqueous electrolyte solutions, and thus has low solubility in organic solvents. Therefore, heavy water was used in the extraction of the negative electrode protective film. In addition, as a method of analyzing the components of the negative electrode protective film, IC measurement was used for the compound represented by the above general formula (a) and NMR measurement was used for the compounds represented by the above general formulas (b) to (d). The molar ratio of each compound to the total content of (a) to (d) was calculated assuming that the molar mass of each compound was 25.94 g/mol for (a), 161.95 g/mol for (b), 96.01 g/mol for (c), and 81.98 g/mol for (d).

(Extraction of negative electrode film component)

In an argon atmosphere, one negative electrode of the single-layer laminate battery or layered laminate battery after the test was removed, negative electrode pieces (including the current collector) in 3-mm squares were cut out and placed in glass screw tubes. Using a syringe, 1.5 mL of heavy water was injected into each tube, which was sealed with a lid. After leaving the electrode film to stand for 72 h for extraction, filtration through a cotton plug using Pasteur pipette filled with glass wool was carried out to obtain an extract liquid.

(IC measurement)

The extract liquid was diluted 1000-fold with distilled water, and 30 $\mu$L of the diluted liquid was injected into a column for IC measurement. The measurement apparatus was a Tosoh IC-2010, the column was a Tosoh TSK gel-Super IC-AZ, the column temperature was 40°C, and the flow rate was 0.8 mL/min.

(NMR measurement)

The obtained extract liquid was placed in an NMR tube having a diameter of 3 mm and sealed. Separately, tetrafluorobenzene (manufactured by Tokyo Chemical Industry Co., Ltd.) was dissolved as a reference substance in deuterated chloroform (manufactured by Sigma-Aldrich) comprising tetramethylsilane as a chemical shift reference, and placed in an NMR tube having a diameter of 5 mm. Into this NMR tube, the above NMR tube having a diameter of 3 mm was inserted, and $^1$H NMR measurement was carried out by a double tube method. A heavy water solution of dimethyl sulfoxide (concentration of 0.398 mg/mL) was prepared as a quantitative reference substance, and $^1$H NMR measurement was carried out in the same manner.

For the measurement apparatus, a JNM-ECS-400 FT NMR apparatus manufactured by JEOL Resonance Co., Ltd. was used. Deuterated chloroform was used as a lock solvent, the number of integrations was 256, and tetramethylsilane (0 ppm) was used as the chemical shift reference. For quantitative calculation, the integral value of the peaks assigned to the protons of tetrafluorobenzene were set to 2000, the integral value corresponding to one proton per unit concentration was determined from the integral value of the signal of dimethyl sulfoxide, which was used as the reference substance, and using this value, the calculation was carried out based on the integral value of each peak.

[Analysis of non-aqueous electrolyte solution components]

In an argon atmosphere, a cut was made in the laminate outer packaging of the single-layer laminate battery or layered laminate battery after the above test. The non-aqueous electrolyte solution was collected from inside with a syringe, placed in an NMR tube having a diameter of 3 mm, and diluted with dimethoxyethane. Separately, tetrafluorobenzene (manufactured by Tokyo Chemical Industry Co., Ltd.) was dissolved as a reference substance in deuterated chloroform (manufactured by Sigma-Aldrich) comprising tetramethylsilane as a chemical shift reference, and placed in an NMR tube having a diameter of 5 mm. Into this NMR tube, the above NMR tube having a diameter of 3 mm was inserted, and $^1$H NMR measurement was carried out by a double tube method. A heavy water solution of dimethyl sulfoxide (concentration of 0.398 mg/mL) was prepared as a quantitative reference substance, and $^1$H NMR measurement was carried out in the same manner. The weight ratio of each component was calculated from the integral value of the signal of each component normalized to the reference substance.

Hereinafter, the evaluation results for each Example according to the second embodiment will be examined. Table 2-2 lists the initial discharge capacity in the cycle test relative to the design capacity of each single-layer laminate. When calculating the design capacity, it was assumed that lithium iron phosphate, the positive electrode active material, could theoretically deliver a capacity of 170 mAh per g. The design capacity of the single-layer laminate battery was calculated as 23.7 mAh based on the ratio of active material (94%) and the coated area (15 cm$^2$) in the positive electrode. Further, the rate of change in capacity when the increase in discharge capacity ended and a constant capacity was achieved was calculated based on the discharge capacity at the start of the test.

[Table 2-2]

| | Electrolyte solution | Battery | Component (a) mol% | Component (b) mol% | Component (c) mol% | Component (d) mol% | Residual VC/EC molar ratio (mol%) | Discharge capacity relative to design capacity (%) | Maximum discharge capacity change rate (%) |
|---|---|---|---|---|---|---|---|---|---|
| Example 2-1 | 2-S1 | single-layer laminate | 29.4 | 40.6 | 15.9 | 14.1 | 6.5 | 77.9 | 1.9 |
| Example 2-2 | 2-S2 | single-layer laminate | 30.6 | 48.5 | 11.0 | 9.8 | 16.9 | 78.1 | 1.8 |
| Example 2-3 | 2-S3 | single-layer laminate | 31.7 | 46.8 | 11.4 | 10.1 | 14.2 | 78.1 | 2.1 |
| Comparative Example 2-1 | 2-S4 | single-layer laminate | 15.9 | 40.1 | 23.6 | 20.4 | 4.1 | 72.6 | 5.6 |
| Comparative Example 2-2 | 2-S5 | single-layer laminate | extraction stopped due to significant Li electrodeposition | | | | 0.0 | unable to discharge | unable to discharge |

EP 4 475 248 A1

In the secondary battery comprising acetonitrile in the non-aqueous electrolyte solution and comprising film components in a constant compositional ratio after the test, a capacity of 77% or greater of the design capacity was obtained in the initial discharge, and the rate of change in capacity until the discharge capacity was stabilized to a constant value remained low at 2.1% or less. However, in Comparative Example 2-1, which comprised no acetonitrile and had a film component ratio of (c) and (d) greater than 20 mol%, only a capacity of less than 73% of the design capacity was obtained, the rate of change in capacity until the discharge capacity was stabilized to a constant value was 5.6%, and the capacity was unstable. In Comparative Example 2-2, in which the remaining vinylene carbonate in the battery was expended when the SEI was formed, the initial charge and discharge could not be carried out. As such, by having a certain amount of vinylene carbonate remaining in the battery even after the film was formed, there was a tendency that the capacity of the battery quickly stabilized while forming a satisfactory film against the electrolyte solution comprising acetonitrile.

Hereinafter, the ratio of initial discharge capacity in the cycle test to the design capacity of each layered laminate in Table 2-3 will be described. When calculating the design capacity, it was assumed that lithium iron phosphate, the positive electrode active material, could theoretically deliver a capacity of 170 mAh per g. The design capacity of the layered laminate battery was calculated as 1193 mAh based on the ratio of active material (87%), the coated area (16.24 $cm^2$), and the number of layered electrodes (24 layers) in the positive electrode. Further, the rate of change in capacity when the increase in discharge capacity ended and a constant capacity was achieved was calculated based on the discharge capacity at the start of the test.

[Table 2-3]

| | Electrolyte solution | Battery | Component (a) mol% | Component (b) mol% | Component (c) mol% | Component (d) mol% | Residual VC/EC molar ratio (mol%) | Discharge capacity relative to design capacity (%) | Maximum discharge capacity change rate (%) |
|---|---|---|---|---|---|---|---|---|---|
| Example 2-4 | 2-S2 | layered laminate | 21.4 | 60.1 | 11.6 | 6.9 | 5.7 | 75.3 | 0.8 |
| Example 2-5 | 2-S3 | layered laminate | 30.5 | 48.8 | 11.0 | 9.7 | 1.9 | 75.3 | 1.1 |

In Examples 2-4 and 2-5, a predetermined film was formed, and a capacity of 75% or greater of the design capacity was obtained. The rate of change until capacity stabilized was 1.1% or less, which was sufficiently low, and relatively quick capacity stabilization was observed.

<Example III according to third embodiment and Comparative Example III>

(1) Preparation of non-aqueous electrolyte solution

Non-aqueous electrolyte solutions (3-S1) to (3-S14) were prepared by mixing various non-aqueous solvents and various additives in an inert atmosphere so that each thereof had a predetermined concentration and further adding various lithium salts so that each had a predetermined concentration. The abbreviations of non-aqueous solvents, lithium salts, and additives in Table 3-1 have the following meanings.

(Lithium salt)

LiFSI: lithium bis(fluorosulfonyl)imide
$LiPF_6$: lithium hexafluorophosphate

(Non-aqueous solvent or additive)

AcN: acetonitrile
EMC: ethyl methyl carbonate
EC: ethylene carbonate
ES: ethylene sulfite
VC: vinylene carbonate

[Table 3-1]

| Electrolyte solution number | Li salt | Electrolyte solution composition [vol%] | VC addition amount [% by mass] |
|---|---|---|---|
| 3-S1 | LiFSI 1M + $LiPF_6$ 0.3M | 67.5EMC/25EC/2.5VC/5ES | - |
| 3-S2 | | 10AcN/62.5EMC/25EC/2.5VC/5ES | - |
| 3-S3 | | 100AcN | - |
| 3-S4 | | 60AcN/EMC/20EC/4ES | - |
| 3-S5 | | 20AcN/40EMC/33.3EC/6.6ES | 0.5 |
| 3-S6 | | 60EMC/33.3EC/6.6ES | 0.5 |
| 3-S7 | | 20AcN/40EMC/33.3EC/6.6ES | 0.83 |
| 3-S8 | | 60EMC/33.3EC/6.6ES | 0.83 |
| 3-S9 | | 57.5AcN/42.5EMC | - |
| 3-S10 | | 87.5AcN/12.5EMC | - |
| 3-S11 | | 20AcN/54EMC/20EC/2VC/4ES | - |
| 3-S12 | | 35AcN/41EMC/20EC/4ES | 0.3 |
| 3-S13 | | 35AcN/41EMC/20EC/4ES | 0.5 |
| 3-S14 | | 35AcN/41EMC/20EC/4ES | 1 |

(2) Production of non-aqueous secondary battery

(2-1) Production of positive electrode

$LiNi_{0.5}Co_{0.2}Mn_{0.3}O_2$ (NCM523) or $LiFePO_4$ (LFP) as (A) a positive electrode active material, carbon black powder as (B) a conductive aid, and polyvinylidene fluoride (PVDF) as (C) a binder were mixed in the specific mass ratio shown in Table 3-2 to obtain a positive electrode mixture.

N-methyl-2-pyrrolidone as the solvent was added to the obtained positive electrode mixture and further mixed to prepare a positive electrode mixture-containing slurry. To one side or both sides of an aluminum foil having a thickness of 15 $\mu$m acting as the positive electrode current collector, the positive electrode mixture-containing slurry was applied while adjusting the basis weight thereof, and the solvent was removed by drying in a hot-air drying furnace, followed by rolling with a roll press so that the density of the positive electrode active material layer was 1.9 g/cm$^3$, to obtain a positive electrode (3-C1 and 3-C2) consisting of a positive electrode active material layer and a positive electrode current collector. Vacuum drying was then carried out at 80°C for 12 h or more to obtain a positive electrode. The basis weights excluding the positive electrode current collector are shown in Table 3-2.

(2-2) Production of negative electrode

Graphite as (a) a negative electrode active material, (b) a conductive aid (carbon black), and (c) a binder were mixed in the mass ratio shown in Table 2 to obtain a negative electrode mixture.

Water as the solvent was added to the obtained negative electrode mixture and further mixed to prepare a negative electrode mixture-containing slurry. The slurry was applied on one side or both sides of a copper foil having a thickness of 10 $\mu$m acting as a negative electrode current collector, and the solvent was removed by drying in a hot-air drying oven, followed by rolling with a roll press so that the density of the negative electrode active material layer was 1.4 g/cm$^3$, to obtain a negative electrode (3-A1) consisting of a negative electrode active material layer and a negative electrode current collector. Vacuum drying was then carried out at 80°C for 12 h or more to obtain a negative electrode. The basis weights of the negative electrode active material layer are shown in Table 3-2.

[Table 3-2]

| Electrode | Active material type | Active material (% by mass) | Carbon black (% by mass) | Binder type | Binder (% by mass) | Basis weight (mg/cm$^2$) |
|---|---|---|---|---|---|---|
| 3-C1 | NCM523 | 94 | 3 | PVDF | 3 | 11.4 |
| 3-C2 | LFP | 89 | 3 | PVDF | 8 | 11.0 |
| 3-A1 | graphite | 90 | 3 | PVDF | 7 | 5.4 |

(2-3) Production of separator

<Production of polypropylene resin composition>

Pellets of an ethylene/1-butene copolymer (C2/C4: density = 0.893 g/cm$^2$, melting point = 80°C, MFR = 6.7) were dry-blended with an ultra-high molecular weight polypropylene resin (PP, MFR = 0.25) at a mass ratio of PP : C2/C4 = 50:50 (% by mass), and then melt-kneaded using a ZSK-40 (manufactured by Coperion GmbH, LID = 46). To minimize decomposition and denaturation of the resin, the resin inlet hopper to the raw material tank was completely sealed, and nitrogen was continuously flowed from the bottom of the hopper to control the oxygen concentration near the raw material inlet to 50 ppm or less. In addition, all vents were completely sealed to eliminate air leakage into the cylinder. Because of this oxygen concentration reduction effect, decomposition and denaturation of the polymer, even under high-temperature conditions, were significantly suppressed, and the ethylene/1-butene copolymer could be finely dispersed. Afte melt kneading, strands were drawn from a die (8 holes). The melt-kneaded product was cooled in a water-cooled bath, and then cut using a pelletizer to obtain pellets.

<Production of microporous film (single-layer)>

The pellets were dry-blended with an ultra-high molecular weight polypropylene resin (PP, MFR = 0.25) at a mass ratio of PP : pellets = 90: 10 (% by mass), then melted in a 2.5-inch extruder, and fed to an annular die using a gear pump. As a result, the incorporation ratio of added resin was PP : C2/C4 = 95.5 (% by mass).

The temperature of the die was set at 230°C, and the molten polymer was cooled by blown air and then wound into a roll. The extruded precursor (original film) had a thickness of 15 $\mu$m, and the original film was annealed at 130°C for 15 min. The annealed film was then cold-stretched to 21% at room temperature, hot-stretched to 156% at 120°C, and relaxed to 126% at 125°C to form a separator (F1) having a structure comprising a single layer of microporous film. After stretching and perforation, physical properties of the microporous film were measured.

(2-4) Assembly of miniature non-aqueous secondary battery

The positive electrode (3C-1) obtained as described above that was punched into a disk shape having a diameter of 15.958 mm and the negative electrode (3-A1) obtained as described above that was punched into a disk shape having a diameter of 16.156 mm were laminated on both sides of the separator (F1) obtained as described above (pore size ratio of 8.1, film thickness of 25 $\mu$m, air permeability resistance of 217 sec/100 cm$^3$, and porosity of 55%) to obtain a laminated body. The laminated body was inserted into a disk-shaped SUS battery case. A predetermined amount of the non-aqueous electrolyte solution was then injected into the battery case, the laminated body was immersed in the non-aqueous electrolyte solution, the battery case was sealed, and the non-aqueous electrolyte solution was allowed to fully permeate the laminated body to obtain a miniature non-aqueous secondary battery (3-C1/F1/3-A1).

A miniature non-aqueous secondary battery (3-C2/F1/3-A1) using 3-C2 as the positive electrode, 3-A1 as the negative electrode, and a separator F1 (pore size ratio of 8.1, film thickness of 25 $\mu$m, air permeability resistance of 217 s/100 cm$^3$, and porosity of 55%) was obtained by the same procedure.

(3) Evaluation of miniature non-aqueous secondary battery

The miniature non-aqueous secondary batteries obtained as described above were first subjected to an initial charge process and an initial charge-discharge capacity measurement according to the procedure in (3-1) below. Each miniature non-aqueous secondary battery was then evaluated according to the procedure in (3-2). The charging and discharging were carried out using an ACD-M01A (trade name) charger-discharger manufactured by Aska Electronic Co., Ltd. and an IN804 (trade name) programmable thermostatic chamber manufactured by Yamato Scientific Co., Ltd.

In the third embodiment, 1 C means a current value at which a battery in a fully charged state discharging at a constant current is expected to be completely discharged in 1 h.

Specifically, for the miniature non-aqueous secondary battery (3-C1/F1/3-A1), 1 C means a current value at which discharging at a constant current from a fully charged state of 4.2 V to 2.5 V is expected to be completed in 1 h. For the miniature non-aqueous secondary battery (3-C2/F1/3-A1), 1 C means a current value at which discharging at a constant current from a fully charged state of 3.6 V to 2.0 V is expected to be completed in 1 h.

The miniature non-aqueous secondary batteries (3-C1/F1/3-A1 and 3-C2/F1/3-A1) assembled according to the procedure in (2-4) above are 3 mA class cells, having the battery voltages in a fully charged state set to 4.2 V and 3.6 V and the current value equivalent to 1 C set to 3 mA. Hereinafter, the descriptions of current value and voltage are omitted for convenience, unless specified otherwise.

(3-1) Initial charge-discharge process of miniature non-aqueous secondary battery

The ambient temperature of the miniature non-aqueous secondary battery (3-C1/F1/3-A1 or 3-C2/F1/3-A1) was set at 25°C. The battery was charged at a constant current equivalent to 0.1 C until a fully charged state was reached, and then charged at a constant voltage for 1.5 h. The initial efficiency was calculated by dividing the discharge capacity by the charge capacity, when charging and discharging at 0.1 C. For batteries having an initial efficiency of less than 80%, since the predetermined battery capacity was not satisfied and obtaining correct evaluation results was difficult, subsequent evaluation tests could not be carried out.

(3-2) Two-stage solution injection step for electrolyte solution of miniature non-aqueous secondary battery

For the cells subjected to the initial charge-discharge process by the method (3-1), the battery case was opened within an argon (Ar) box, the electrolyte solution was added using a pipette, and a step of charging at a constant current corresponding to 1 C to a fully charged state and then discharging at a constant current corresponding to 1 C was carried out twice. The compositions and volumes of the initial injection electrolyte solution and two-stage injection electrolyte solution of each cell are shown in Table 3-3.

[Table 3-3]

| Cell | Positive electrode | Initial injection electrolyte solution | Initial injection electrolyte solution volume [mL] | Two-stage injection electrolyte solution | Two-stage injection electrolyte solution volume [mL] | Electrolyte solution composition after two-stage solution injection |
|---|---|---|---|---|---|---|
| Example 3-1 | 3-C1 | 3-S1 | 160 | 3-S3 | 40 | 3-S11 |
| Example 3-2 | 3-C1 | 3-S2 | 160 | 3-S4 | 40 | 3-S11 |

(continued)

| Cell | Positive electrode | Initial injection electrolyte solution | Initial injection electrolyte solution volume [mL] | Two-stage injection electrolyte solution | Two-stage injection electrolyte solution volume [mL] | Electrolyte solution composition after two-stage solution injection |
|---|---|---|---|---|---|---|
| Example 3-3 | 3-C2 | 3-S5 | 120 | 3-S9 | 80 | 3-S12 |
| Example 3-4 | 3-C2 | 3-S6 | 120 | 3-S10 | 80 | 3-S12 |
| Example 3-5 | 3-C2 | 3-S7 | 120 | 3-S9 | 80 | 3-S13 |
| Example 3-6 | 3-C2 | 3-S8 | 120 | 3-S10 | 80 | 3-S13 |
| Comparative Example 3-1 | 3-C1 | 3-S11 | 200 | - | - | 3-S11 |
| Comparative Example 3-2 | 3-C2 | 3-S12 | 200 | - | - | 3-S12 |
| Comparative Example 3-3 | 3-C2 | 3-S13 | 200 | - | - | 3-S13 |
| Comparative Example 3-4 | 3-C2 | 3-S14 | 200 | - | - | 3-S14 |

(3-3) Output test of miniature non-aqueous secondary battery (3-C1/F1/3-A1)

The miniature non-aqueous secondary battery (3-C1/F1/3-A1) subjected to the initial charge-discharge process and two-stage solution injection in the methods described in (3-1) and (3-2) above had the ambient temperature thereof set at 25°C, charged at a constant current of 1 C until 4.2 V was reached, charged at a constant voltage of 4.2 V until the current value attenuated to 0.025 C, and then discharged at 0.1 C to 2.8 V.

The battery was subsequently charged at a constant current of 1 C until 4.2 V was reached, then charged at a constant voltage of 4.2 V until the current value attenuated to 0.025 C, and thereafter discharged at 0.5 C to 2.8 V.

The battery was subsequently charged at a constant current of 1 C until 4.2 V was reached, then charged at a constant voltage of 4.2 V until the current value attenuated to 0.025 C, and thereafter discharged at 1.0 C to 2.8 V.

The battery was subsequently charged at a constant current of 1 C until 4.2 V was reached, then charged at a constant voltage of 4.2 V until the current value attenuated to 0.025 C, and thereafter discharged at 5.0 C to 2.8 V.

The battery was subsequently charged at a constant current of 1 C until 4.2 V was reached, then charged at a constant voltage of 4.2 V until the current value attenuated to 0.025 C, and thereafter discharged at 10 C to 2.8 V.

The battery was subsequently charged at a constant current of 1 C until 3.5 V was reached, then charged at a constant voltage of 3.5 V until the current value attenuated to 0.025 C, and thereafter discharged at 20 C to 2.0 V.

The battery was subsequently charged at a constant current of 1 C until 4.2 V was reached, then charged at a constant voltage of 4.2 V until the current value attenuated to 0.025 C, and thereafter discharged at 0.1 C to 2.8 V.

The discharge capacity at each discharge rate at this time was recorded.

(3-4) Cycle test of miniature non-aqueous secondary battery (3-C2/F1/3-A1)

The miniature non-aqueous secondary battery (3-C2/F1/3-A1) subjected to the initial charge-discharge process and two-stage solution injection in the methods described in (3-1) and (3-2) above had the ambient temperature thereof set at 25°C, charged at a constant current of 1 C until 3.5 V was reached, charged at a constant voltage of 3.5 V until the current value attenuated to 0.025 C, and then discharged at 0.1 C to 2.7 V.

The miniature non-aqueous secondary battery (3-C2/F1/3-A1) subjected to the two-stage solution injection in the method described in (3-2) above had the ambient temperature thereof set at 25°C, first charged at a constant current of 3 mA corresponding to 1 C until 4.2 V was reached, charged at a constant voltage of 4.2 V until the current value attenuated to 0.025 C, and then discharged at a constant current of 3 mA to 2.7 V. One cycle was defined as a step in which charging and discharging are each carried out once, and 100 cycles of charging and discharging were carried out. The discharge capacity at the 100th cycle, when the discharge capacity of the 1st cycle was 100%, was defined as the capacity retention rate in the test cycle at 25°C. The capacity retention rate at the 50th cycle was obtained in the same manner.

(4) XPS analysis of negative electrode film

For the non-aqueous secondary batteries prepared and tested as described above, the negative electrode film of the miniature non-aqueous secondary batteries subjected to the two-stage solution injection and the two-cycle charge-discharge as described in (3-2) above was analyzed. The battery was disassembled in an atmospheric air-free environment, the negative electrode was removed, the electrolyte solution was removed by immersing in EMC for 5 min, and then vacuum drying was carried out at room temperature to obtain a sample. The obtained sample was kept in a sample holder in an inert atmosphere and subjected to XPS measurement. The relative elemental concentration ratio (Sred/Li) of the compound containing a sulfur atom having a valence of -2 or higher and 0 or lower, generated by the reduction of ES contained in the negative electrode film, to the Li compound was measured. XPS measurement was carried out using a Versa Probe II manufactured by ULVAC-PHI, Inc. and the measurement conditions are shown below.

[Measurement condition]

Excitation source: mono.AlKa, 20 kV × 5 mA, 100 W
Analysis size: 100 μmφ × 1.4 mm, 100 μmφ X-ray beam oscillated at a width of 1.4 mm
Photoelectron emission angle: 45°
Capture region:

Survey scan: 0 to 1,100 eV
Narrow scan: C 1s, O 1s, Li 1s, S 2p, F 1s, N 1s, Cu 2p3/2

Pass Energy:

Survey scan: 117.4 eV
Narrow scan: 46.95 eV

The method for deriving the relative elemental concentrations of sulfur atoms having a valence of -2 or higher and 0 or lower and Li compounds is shown below.

[Derivation of relative elemental concentration]

The value was determined using the following formula.

[Math 1]

$$C_j(\%) = 100 \times (I_j/RSF_j)/\Sigma(I_j/RSF_j)$$

Each parameter is as follows.

$C_j$: relative elemental concentration (atomic%)
j: C, O, Li, S, F, N, P, Cu, or Cl
$I_j$: Area intensity of Li 1s or S 2p spectrum
(unit is cps·eV)
$RSF_j$: corrected relative sensitivity factor of Li 1s or S 2p
(Li 1s: 1.284, S 2p: 37.634)

For the S concentration, the reduced sulfur component Sred was quantified by curve fitting of the S 2p spectrum.

• Sred: 162 to 164 eV

Since the above components were sufficiently discrete that the valleys between peaks could be observed, and the purpose of the curve fitting was to quantitively separate the above components, the curve fitting was carried out without setting any constraints between the components.

EP 4 475 248 A1

[Examples 3-1 and 3-2 and Comparative Example 3-1]

The composition and output test results of the negative electrode film of the miniature non-aqueous secondary battery (3-C1/F1/3-A1) will be interpreted. The miniature non-aqueous secondary battery (3-C1/F1/3-A1) was produced according to the method described in (2) above. The preparation of each miniature non-aqueous secondary battery (3-C1/F1/3-A1) and the negative electrode film and output performance thereof were evaluated according to the procedures described in (3) and (4) above. The test results are shown in Table 3-4.

[Table 3-4]

| | First electrolyte solution | Second electrolyte solution | Electrolyte solution composition after addition | Sred/Li of negative electrode film after initial charge (%) | Rate test: discharge capacity [mAh] | | | | | | |
|---|---|---|---|---|---|---|---|---|---|---|---|
| | | | | | 0.1 C | 0.5 C | 1C | 5 C | 10C | 20 C | 0.1 C |
| Example 3-1 | 3-S1 | 3-S3 | 3-S11 | 0.78 | 3.14 | 2.97 | 2.86 | 2.49 | 2.24 | 1.4 | 3.11 |
| Example 3-2 | 3-S2 | 3-S4 | | 2.86 | 3.11 | 2.94 | 2.84 | 2.5 | 2.24 | 1.25 | 3.11 |
| Comparative Example 3-1 | 3-S11 | - | | 3.83 | 3.07 | 2.88 | 2.76 | 2.4 | 2.08 | 0.88 | 3.07 |

As shown in Table 3-4, it was confirmed from Examples 3-1 and 3-2 that the ratio (Sred/Li) of the compound comprising a sulfur atom having a valence of -2 or higher and 0 or lower in the negative electrode film after two-stage solution injection was 0.1% or greater and 3.80% or less, and the smaller the Sred/Li value, the higher the discharge capacity at high rate. It was confirmed in the cell (Comparative Example 3-1) in which two-stage solution injection was not carried out that the Sred/Li value exceeded 3.80%, and the discharge capacity was low.

With the two-stage solution injection, charging and discharging was carried out with the initial injection electrolyte solution having a lower acetonitrile concentration than the composition of the electrolyte solution after the two-stage solution injection, followed by adding a higher concentration of acetonitrile, whereby excessive reductive decomposition of the electrolyte solution on the negative electrode surface can be suppressed while maintaining high ion-conducting properties. As a result, favorable output performance was considered obtained.

[Examples 3-3 to 6 and Comparative Examples 3-2 to 4]

The test results of miniature non-aqueous secondary battery (3-C2/F1/3-A1) will be interpreted. The miniature non-aqueous secondary battery (3-C2/F1/3-A1) was produced according to the method described in (2) above. The preparation of each miniature non-aqueous secondary battery (3-C2/F1/3-A1) and the negative electrode film and cycle performance thereof were evaluated according to the procedures described in (3) and (4) above. The test results are shown in Table 3-5.

[Table 3-5]

| | First electrolyte solution | Second electrolyte solution | Electrolyte solution composition after addition | Sred/Li of negative electrode film after initial charge (%) | Initial charge-discharge efficiency [%] | Cycle test | | |
|---|---|---|---|---|---|---|---|---|
| | | | | | | 1st-cycle discharge capacity [mAh] | 50-cycle capacity retention rate [%] | 100-cycle capacity retention rate [%] |
| Example 3-3 | 3-S5 | 3-S9 | 3-S12 | 2.82 | 83.7 | 2.15 | 33.5 | 8.8 |
| Example 3-4 | 3-S6 | 3-S10 | | 2.84 | 85.7 | 2.54 | 94.1 | 39.3 |
| Example 3-5 | 3-S7 | 3-S9 | 3-S13 | 1.00 | 86.2 | 2.56 | 85.3 | 77.5 |
| Example 3-6 | 3-S8 | 3-S10 | | 1.01 | 87.7 | 2.59 | 93.5 | 83.4 |

(continued)

| | First electrolyte solution | Second electrolyte solution | Electrolyte solution composition after addition | Sred/Li of negative electrode film after initial charge (%) | Initial charge-discharge efficiency [%] | Cycle test | | |
|---|---|---|---|---|---|---|---|---|
| | | | | | | 1st-cycle discharge capacity [mAh] | 50-cycle capacity retention rate [%] | 100-cycle capacity retention rate [%] |
| Comparative Example 3-2 | 3-S12 | - | 3-S12 | 4.92 | 36.6 | - | - | - |
| Comparative Example 3-3 | 3-S13 | - | 3-S13 | 4.33 | 37.9 | - | - | - |
| Comparative Example 3-4 | 3-S14 | - | 3-S14 | 6.07 | 82.1 | 2.23 | 78.1 | 3.2 |

As shown in Tables 3 to 5, in the cells to which two-stage solution injection was applied, the Sred/Li value was 3.80% or less, whereas in the cells which underwent only the initial solution injection (Comparative Examples 3-2 to 3-4), no tendency of the Sred/Li value decreasing was observed even when the VC amount was increased. In the cells to which two-stage solution injection was applied, a tendency of the Sred/Li value decreasing with an increase in VC was observed.

In the cells which underwent only the initial solution injection, a low initial charge-discharge efficiency of 40% or less and a decrease in capacity retention rate during the cycles were observed, whereas it was confirmed that a battery having high stability during charging and discharging was obtained by applying the two-stage solution injection, even when the final compositions of electrolyte solutions were the same.

It was confirmed that in the two-stage solution injection method, when the VC amounts were the same, there was a tendency that cycle performance improved as the acetonitrile concentration of the initial injection electrolyte solution was decreased.

It is considered that by limiting the acetonitrile concentration of the initial injection electrolyte solution, excessive reductive decomposition of the electrolyte solution on the negative electrode surface during the initial charge can be suppressed and this suppression leads to a more uniform negative electrode film, which in turn suppresses deterioration.

According to the non-aqueous lithium-ion secondary battery comprising acetonitrile, to which the two-stage solution injection according to the third embodiment of the present invention is applied, in addition to suppressing excessive reductive decomposition of the electrolyte solution on the negative electrode surface, the negative electrode SEI is strengthened with a small amount of negative electrode additive, thereby allowing favorable output performance and cycle performance to be obtained. Therefore, it can be assumed that a non-aqueous secondary battery using an acetonitrile electrolyte solution, if the negative electrode film has the composition as described above in the initially charged state, has undergone the manufacturing steps of the non-aqueous electrolyte solution of the third embodiment.

INDUSTRIAL APPLICABILITY

The non-aqueous electrolyte solution and the non-aqueous secondary cell according to the present invention, for example, can be applied to industrial power storage batteries of electric tools, drones, and electric motorcycles, in addition to automobile power storage batteries of hybrid automobiles, plug-in hybrid automobiles, and electric automobiles, and are further expected to be used in residential power storage systems.

REFERENCE SIGNS LIST

100    non-aqueous secondary battery
110    battery outer packaging
120    space in battery outer packaging
130    positive electrode lead body
140    negative electrode lead body
150    positive electrode
160    negative electrode
170    separator

**Claims**

1. A non-aqueous electrolyte solution for a non-aqueous lithium-ion secondary battery comprising a negative electrode comprising graphite and containing X% by mass of the non-aqueous electrolyte solution relative to a mass of the negative electrode excluding a negative electrode current collector, wherein

   X is 50 or greater and 2000 or less,
   the non-aqueous electrolyte solution comprises a lithium salt and a non-aqueous solvent,
   the non-aqueous solvent comprises A% by volume of acetonitrile relative to a volume of the non-aqueous solvent,
   A is 5 or greater and 70 or less, and
   the non-aqueous electrolyte solution comprises vinylene carbonate (VC) as an additive and has a VC content of ($7 \times A/X$)% by mass or greater and 10% by mass or less relative to the non-aqueous electrolyte solution.

2. The non-aqueous electrolyte solution according to claim 1, wherein the X is 200 or less.

3. The non-aqueous electrolyte solution according to claim 1 or 2, wherein the A is 16 or greater and 35 or less.

4. The non-aqueous electrolyte solution according to claim 1 or 2, wherein the VC content is ($15 \times A/X$)% by mass or greater and 9% by mass or less relative to the non-aqueous electrolyte solution.

5. The non-aqueous electrolyte solution according to claim 4, wherein the X is 98 or less.

6. The non-aqueous electrolyte solution according to claim 1 or 2, comprising ethylene sulfite.

7. The non-aqueous electrolyte solution according to claim 1 or 2, comprising at least one of sulfate ions and sulfite ions.

8. The non-aqueous electrolyte solution according to claim 1 or 2, wherein the VC content is 7% by mass or less relative to the non-aqueous electrolyte solution.

9. The non-aqueous electrolyte solution according to claim 1 or 2, wherein the X is 65 or greater.

10. A non-aqueous lithium-ion secondary battery comprising a positive electrode having a positive electrode active material layer on one side or both sides of a positive electrode current collector, the negative electrode having a negative electrode active material layer containing the graphite on one side or both sides of the negative electrode current collector, a separator, and the non-aqueous electrolyte solution according to claim 1.

11. A non-aqueous secondary battery comprising a negative electrode, a positive electrode, a separator, and a non-aqueous electrolyte solution, wherein

    the non-aqueous secondary battery has been charged one or more times,
    the negative electrode comprises one or more of each of an inorganic lithium compound and an organic lithium compound that are extractable by immersing the negative electrode in an extraction solvent, and
    the non-aqueous electrolyte solution comprises a lithium salt, acetonitrile as a non-aqueous solvent, and a cyclic carbonate.

12. The non-aqueous secondary battery according to claim 11, wherein

    the non-aqueous secondary battery comprises a component that is extractable from the negative electrode by using water as the extraction solvent and comprises each of at least the following inorganic lithium compound (a):

       (a) LiF;
       and at least the following organic lithium compounds (b) to (d):
       (b) $LiOCOOCH_2CH_2OCOOLi$;
       (c) $CH_3CH_2OCOOLi$; and
       (d) $CH_3OCOOLi$;

    and
    a molar ratio of each of the (a) to (d) relative to a total content of the (a) to (d) is 20 to 70 mol% for the (a), 20 to 70 mol% for the (b), 1 to 20 mol% for the (c), and 1 to 20 mol% for the (d).

13. The non-aqueous secondary battery according to claim 11 or 12, wherein
the cyclic carbonate comprises ethylene carbonate and vinylene carbonate, and a molar ratio of vinylene carbonate relative to ethylene carbonate is 0.01 to 30 mol%.

14. The non-aqueous secondary battery according to claim 11 or 12, comprising lithium iron phosphate in a positive electrode active material of the positive electrode.

15. The non-aqueous secondary battery according to claim 11, wherein the non-aqueous electrolyte solution according to claim 1 is used.

16. A secondary battery manufacturing process comprising an electrolyte solution injection step of injecting a non-aqueous electrolyte solution into a battery outer packaging at least twice, and comprising at least one charging step after an initial electrolyte solution injection step and before a final electrolyte solution injection step, where, in an electrolyte solution injection step after the initial electrolyte solution injection step, an electrolyte solution having a higher volume ratio of acetonitrile relative to an entirety of the electrolyte solution than an electrolyte solution used in the initial electrolyte solution injection step is injected into the battery outer packaging.

17. The secondary battery manufacturing process according to claim 16, wherein an electrolyte solution containing 20% by volume or greater and 100% by volume or less of acetonitrile is injected into the battery outer packaging in an electrolyte solution injection step after the initial electrolyte solution injection step.

18. A non-aqueous secondary battery comprising a non-aqueous electrolyte solution comprising 5% by volume or greater and 60% by volume or less of acetonitrile, and ethylene sulfite; a positive electrode having a positive electrode active material layer on one side or both sides of a positive electrode current collector; a negative electrode having a negative electrode active material layer on one side or both sides of a negative electrode current collector; and a separator,

wherein the non-aqueous secondary battery comprises a compound comprising a sulfur atom having a valence of -2 or higher and 0 or lower in a negative electrode film after an initial charge-discharge, and comprises at least one of sulfur and copper sulfate as the compound, and
wherein the non-aqueous secondary battery is obtainable by a method comprising at least one charging step after an initial electrolyte solution injection step and before a final electrolyte solution injection step, where, in an electrolyte solution injection step after the initial electrolyte solution injection step, an electrolyte solution having a higher volume ratio of acetonitrile relative to an entirety of the electrolyte solution than an electrolyte solution used in the initial electrolyte solution injection step is injected into a battery outer packaging.

19. The non-aqueous secondary battery according to claim 18, wherein ethylene sulfite concentration in the non-aqueous electrolyte solution is 0.01% by volume or greater and 4% by volume or less.

20. The non-aqueous secondary battery according to claim 18 or 19, wherein the non-aqueous electrolyte solution further comprises vinylene carbonate.

# Fig. 1

# Fig. 2

**INTERNATIONAL SEARCH REPORT**

| International application No. |
|---|
| **PCT/JP2023/038362** |

| A. | CLASSIFICATION OF SUBJECT MATTER |
|---|---|

*H01M 10/052*(2010.01)i; *H01M 4/131*(2010.01)i; *H01M 4/136*(2010.01)i; *H01M 4/505*(2010.01)i; *H01M 4/525*(2010.01)i; *H01M 4/58*(2010.01)i; *H01M 10/0525*(2010.01)i; *H01M 10/0567*(2010.01)i; *H01M 10/0568*(2010.01)i; *H01M 10/0569*(2010.01)i; *H01M 10/058*(2010.01)i

FI: H01M10/052; H01M4/131; H01M4/136; H01M4/505; H01M4/525; H01M4/58; H01M10/0525; H01M10/0567; H01M10/0568; H01M10/0569; H01M10/058

According to International Patent Classification (IPC) or to both national classification and IPC

| B. | FIELDS SEARCHED |
|---|---|

Minimum documentation searched (classification system followed by classification symbols)

H01M10/052; H01M4/131; H01M4/136; H01M4/505; H01M4/525; H01M4/58; H01M10/0525; H01M10/0567; H01M10/0568; H01M10/0569; H01M10/058

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 2022-008276 A (ASAHI KASEI KABUSHIKI KAISHA) 13 January 2022 (2022-01-13) examples 30-35 | 1-15 |
| Y | paragraph [0038] | 18-20 |
| A | | 16-17 |
| A | JP 2022-150959 A (ASAHI KASEI KABUSHIKI KAISHA) 07 October 2022 (2022-10-07) paragraph [0090] | 7 |
| X | CN 102255105 A (AMPEREX TECHNOLOGY LIMITED) 23 November 2011 (2011-11-23) example 1 | 16-17 |
| Y | example 1 | 18-20 |
| A | | 1-15 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **28 December 2023** | **16 January 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

**INTERNATIONAL SEARCH REPORT**
Information on patent family members

International application No.

**PCT/JP2023/038362**

| Patent document cited in search report | | | Publication date (day/month/year) | Patent family member(s) | Publication date (day/month/year) |
|---|---|---|---|---|---|
| JP | 2022-008276 | A | 13 January 2022 | US 2022/0271338 A1 examples 30-35, paragraph [0090] EP 3998657 A1 examples 30-35, paragraph [0038] KR 10-2022-0009486 A CN 114342147 A KR 10-2022-0150997 A CN 115939520 A | |
| JP | 2022-150959 | A | 07 October 2022 | (Family: none) | |
| CN | 102255105 | A | 23 November 2011 | (Family: none) | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005166553 A
- WO 2012057311 A
- JP 2006294282 A
- JP 2010129192 A